# EUROPEAN PATENT APPLICATION

(11) **EP 2 322 071 A1**
(43) Date of publication of application: **18.05.2011**
(21) Application number: 09804697.2
(22) Date of filing: 31.07.2009
(51) Int. Cl.: A47L 9/28, B25J 13/08

(54) **CONTROL DEVICE AND CONTROL METHOD FOR CLEANER, CLEANER, CONTROL PROGRAM FOR CLEANER, AND INTEGRATED ELECTRONIC CIRCUIT**

(30) Priority: 08.08.2008 JP 2008205584
(71) Applicant: Panasonic Corporation, Kadoma-shi Osaka 571-8501 (JP)
(72) Inventor: TSUSAKA, Yuko, Osaka-shi 540-6207 (JP); OKAZAKI, Yasunao, Osaka-shi 540-6207 (JP)
(74) Representative: Unland, Jochen Hermann
(86) International application number: PCT/JP2009/003645
(87) International publication number: WO 2010/016210

(57) **Abstract**

A control device for a cleaner that carries out a cleaning operation in home, is provided with a cleaning operation data base (17) on which information relating to cleaning operations of a robot arm is recorded, a correcting operation type determination unit (23) for determining a type of correction of the cleaning operation, a force detection unit (53) for detecting a force of the hand (16) of a person, and a cleaning operation correcting unit (20) that corrects the cleaning operation in accordance with the force of the human hand and the type of correction during the cleaning job of the robot arm.

## Description

### TECHNICAL FIELD

The present invention relates to a control device and a control method for a cleaner that generate cleaning operations of the cleaner used for carrying out a cleaning job in home and give corresponding instructions, and also concerns such a cleaner and control program for the cleaner as well as an integrated electronic circuit.

### BACKGROUND ART

In recent years, automatic cleaning robots for home-use or business-use for buildings or the like have been commercialized. A cleaning robot that carries out a cleaning job automatically while confirming a cleaning area by a signal from the sensor of the automatic cleaning robot has been disclosed as the home-use automatic cleaning robot (see Patent Document 1 and Patent Document 2). Moreover, as the business-use robot, those robots, which are used for cleaning buildings, and clean a room or floor surface to be cleaned all over, while identifying the position of its own by using an optical sensor or a vision camera, have been proposed (see Patent Document 3 and Patent Document 4).

Moreover, Patent Document 5 has disclosed a cleaning method in which a marker having a radio communication function is placed at a heavily soiled portion found by a person, and by searching for the cleaning robot marker, only the portion identified by the marker is quickly cleaned.

Furthermore, Patent Document 6 has disclosed a cleaner having superior operability in which the cleaner is remote-controlled by using a remote controller.

### PRIOR ART DOCUMENTS

### PATENT DOCUMENTS

Patent Document 1: JP-A No. 2003-323214
Patent Document 2: JP-A No. 2004-148090
Patent Document 3: JP-A No. 08-106323
Patent Document 4: JP-A No. 08-063229
Patent Document 5: JP-A No. 2007-82639
Patent Document 6: JP-A No. 4-295323

### SUMMARY OF INVENTION

### ISSUES TO BE SOLVED BY THE INVENTION

In Patent Document 1, Patent Document 2, Patent Document 3 and Patent Document 4, however, those robots are designed to carry out a cleaning operation on a floor surface all over simultaneously, and although they are advantageous in that the cleaning operation is available without the necessity of human hands, they fail to deal with such a circumstance in which a cleaning operation is suddenly required, for example, a state where the user spilled a food, and so on.

Moreover, in Patent Document 5, although the marker is used so as to deal with a sudden occurrence of a soiled portion, this method fails to provide a cleaning job with detailed functions, such as a cleaning function for gaps between pieces of furniture or gaps within a room, or a cleaning operation suitable for the material of the floor surface, or a cleaning operation that is carried out while heavily soiled portions or little soiled portions are being recognized.

Furthermore, in Patent Document 6, although the controlling operation for a traveling direction of the cleaner is available by the remote controlling operation, it is not possible to instinctively operate the control of a suction force, or the degree of an applied force at the time of a wiping job, or the like.

In view of these problems, the present invention has been devised, and its objective is to provide a control device and a control method for a cleaner, which can achieve controlling processes of a cleaner in which the operator is allowed to give instructions of cleaning operations with detailed functions to the cleaner simply in a short period of time, and also to provide such a cleaner, control program for the cleaner and an integrated electronic circuit.

### MEANS FOR SOLVING THE ISSUES

In order to achieve the above-mentioned object, the present invention has the following structures:

According to a first aspect of the present invention, there is provided a control device, which is used for a cleaner that is provided with a movable body, a robot arm with a base end thereof being coupled to the movable body, a cleaning unit that is attached to a hand at a tip of the robot arm to be made in contact with a cleaning surfaces and a driving device that drives the movable body, the robot arm, and the cleaning unit, and drives and controls the driving device so as to carry out a cleaning job in a home, comprising:
a force detection unit configured to detect a force of a person that is exerted on the robot arm;
an information acquiring unit that respectively acquires pieces of information relating to cleaning operations including a suction force of the cleaning unit and a cleaning position of the cleaning unit in the cleaning job, as well as to information relating to the force of the person that is detected by the force detection unit and exerted on the robot arm;
a correcting operation type determination unit configured to determine a type of a correcting operation for correcting the cleaning operation based upon the information relating to the cleaning operation and the information relating to the force of the person respectively acquired by the information acquiring unit; and
a cleaning operation correcting unit configured to drive-control the driving device to correct the cleaning operation in accordance with the force of the person that is detected by the force detection unit and acquired by the information acquiring unit and the type of the correcting operation determined by the correcting operation type determination unit, during the cleaning job of the robot arm.

According to a 16th aspect of the present invention, there is provided a control method, which is used for a cleaner that is provided with a movable body, a robot arm with a base end thereof being coupled to the movable body, a cleaning unit that is attached to a hand at a tip of the robot arm to be made in contact with a cleaning surface, and a driving device that drives the movable body, the robot arm, and the cleaning unit, and drives and controls the driving device so as to carry out a cleaning job in a home, comprising:
detecting a force of a person that is exerted on the robot arm by using a force detection unit;
by using pieces of information relating to cleaning operations including a suction force of the cleaning unit and a cleaning position of the cleaning unit in the cleaning job, as well as to information relating to the force of the person applied to the robot arm that is detected by the force detection unit and acquired by an information acquiring unit, allowing a correcting operation type determination unit to determine a type of a correcting operation for correcting the cleaning operation; and
during the cleaning job of the robot arm, in accordance with the force of the person applied to the robot arm that is detected by the force detection unit and acquired by the information acquiring unit and the type of the correcting operation determined by the correcting operation type determination unit, drive-controlling the driving device so as to correct the cleaning operation by using a cleaning operation correcting unit.

According to a 17th aspect of the present invention, there is provided a cleaner comprising: the robot arm; and
the control device for the cleaner according to any one of the first to 15th aspects that drive-controls the robot arm by using the driving device.

According to an 18th aspect of the present invention, there is provided a control program, which is used for a cleaner that is provided with a movable body, a robot arm with a base end thereof being coupled to the movable body, a cleaning unit that is attached to a hand at a tip of the robot arm to be made in contact with a cleaning surface, and a driving device that drives the movable body, the robot arm, and the cleaning unit, and drives and controls the driving device so as to carry out a cleaning job in a home, allowing a computer to carry out steps of:
by using pieces of information relating to cleaning operations including a suction force of the cleaning unit and a cleaning position of the cleaning unit in the cleaning job, as well as to information relating to the force of the person applied to the robot arm that is detected by a force detection unit and acquired by an information acquiring unit, allowing a correcting operation type determination unit to determine a type of a correcting operation for correcting the cleaning operation; and
during the cleaning job of the robot arm, in accordance with the force of the person applied to the robot arm that is detected by the force detection unit and acquired by the information acquiring unit and the type of the correcting operation determined by the correcting operation type determination unit, drive-controlling the driving device so as to correct the cleaning operation by using a cleaning operation correcting unit.

According to a 19th aspect of the present invention, there is provided a control integrated electronic circuit, which is used for a cleaner that is provided with a movable body, a robot arm with a base end thereof being coupled to the movable body, a cleaning unit that is attached to a hand at a tip of the robot arm to be and made in contact with a cleaning surface, and a driving device that drives the movable body, the robot arm, and the cleaning unit, and drives and controls the driving device so as to carry out a cleaning job in a home, comprising:
a correcting operation type determination unit configured to determine a type of a correcting operation for correcting a cleaning operation, by using pieces of information relating to cleaning operations including a suction force of the cleaning unit and a cleaning position of the cleaning unit in the cleaning job, as well as to information relating to the force of the person applied to the robot arm that is detected by a force detection unit and acquired by an information acquiring unit; and
a cleaning operation correcting unit configured to drive-control the driving device so as to correct the cleaning operation, during the cleansing job of the robot arm, in accordance with the force of the person applied to the robot arm that is detected by the force detection unit and acquired by the information acquiring unit and the type of the correcting operation determined by the correcting operation type determination unit.

### EFFECTS OF THE INVENTION

As described above, in accordance with the control device for a cleaner and the cleaner of the present invention, since the correcting operation type determination unit, the force detection unit, the cleaning operation correcting unit and the control unit are prepared, it becomes possible to provide controlling operations of the cleaner in which, by utilizing pieces of information relating to cleaning operations including the suction force of the cleaning unit and the cleaning position of the cleaning unit and information relating to the force of a person to be applied to the robot arm, the cleaning operation can be easily corrected in accordance with the force of the person.

Moreover, in accordance with the control method of the cleaner, the control programed the cleaner and the integrated electronic circuits of the present invention, since the correcting operation type determination unit, the cleaning operation correcting unit and the control unit are prepared, it becomes possible to provide controlling operations of the cleaner in which, by utilizing pieces of information relating to cleaning operations including the suction force of the cleaning unit and the cleaning position of the cleaning unit and information relating to the force of a person applied to the robot arm, the cleaning operation can be easily corrected in response to the force of the person detected by the force detection unit and acquired by the information acquiring unit.

Since the correcting operation type determination unit is prepared, it becomes possible to switch a plurality of cleaning operations automatically without the necessity of using a button or the like.

Moreover, since the correcting operation type determination unit is prepared, it also becomes possible to make a switch between a correcting process that carries out corrections of a plurality of kinds at one time and a correcting process that carries out a correction of one kind, in accordance of the skill or the like of an operator.

Furthermore, since a control parameter managing unit and the control unit are further prepared, by setting a mechanical impedance value of the robot arm, in response to the type of a correcting operation, it becomes possible to carry out a controlling operation with a mechanical impedance value being altered, in response to a corrected direction of the robot arm, and also to weaken or stop the suction force or the force to be applied to the cleaning face, during the correcting operation.

### BRIEF DESCRIPTION OF THE DRAWINGS

These and other aspects and features of the present invention will become clear from the following description taken in conjunction with the preferred embodiments thereof with reference to the accompanying drawings, in which:
Fig. 1 is a side view that shows the overview of the structure of a cleaner in accordance with an embodiment of the present invention;
Fig. 2A is a side view that shows an operational state of the cleaner in accordance with the embodiment of the present invention;
Fig. 2B is a side view that shows another operational state of the cleaner in accordance with the embodiment of the present invention;
Fig. 3 is a drawing that shows a detailed structure of the cleaner which has a control device of the cleaner and a robot arm to be controlled in accordance with the embodiment of the present invention;
Fig. 4 is a drawing that explains a list of operation information of a cleaning operation data base of the cleaner in accordance with the present invention;
Fig. 5 is a drawing that explains information relating to flags of the cleaning operation data base of the cleaner in accordance with the embodiment of the present invention;
Fig. 6 is a drawing that explains information relating to flags of correction parameters of the cleaner in accordance with the embodiment of the present invention;
Fig. 7 is a block diagram that shows the structure of the control unit of the control device of the cleaner in accordance with the embodiment of the present invention;
Fig. 8 is a drawing that shows a cleaning course of the control device of the cleaner in accordance with the embodiment of the present invention;
Fig. 9 is a side view that shows an operational state of the cleaner in accordance with the present invention;
Fig. 10 is a drawing that explains a list of cleaning unnecessary area data base information of the cleaner in accordance with the embodiment of the present invention;
Fig. 11 is a drawing relating to a cleaning course of the control device of the cleaner in accordance with the embodiment of the present invention;
Fig. 12A is a side view that shows an operational state of the cleaner in accordance with the embodiment of the present invention;
Fig. 12B is a plan view that shows the operational state of the cleaner in accordance with the embodiment of the present invention;
Fig. 12C is a plan view that shows the operational state of the cleaner in accordance with the embodiment of the present invention;
Fig. 12D is a plan view that shows the operational state of the cleaner in accordance with the embodiment of the present invention;
Fig. 13A is a drawing relating to the coordinate system of the cleaner in accordance with the embodiment of the present invention;
Fig. 13B is a drawing relating to the coordinate system of the cleaner in accordance with the embodiment of the present invention;
Fig. 13C is a drawing relating to the coordinate system of the cleaner in accordance with the embodiment of the present invention;
Fig. 14 is a flow chart that shows operation steps (correction type estimation processing) in the cleaning operation type determination unit of the cleaner in accordance with the embodiment of the present invention;
Fig. 15 is a drawing that shows a relationship between a force applied by a person to the cleaner and the time in accordance with the embodiment of the present invention;
Fig. 16A is a side view that shows an operational state of the control device of the cleaner in accordance with the embodiment of the present invention;
Fig. 16B is a plan view that shows the operational state of the control device of the cleaner in accordance with the embodiment of the present invention;
Fig. 16C is a plan view that shows the operational state of the control device of the cleaner in accordance with the embodiment of the present invention;
Fig. 17 is a flow chart that shows operation steps in the cleaning operation type determination unit of the control device of the cleaner in accordance with the embodiment of the present invention;
Fig. 18A is a side view that shows an operational state of the cleaner in accordance with the embodiment of the present invention;
Fig. 18B is a side view that shows an operational state of the cleaner in accordance with the embodiment of the present invention;
Fig. 19 is a drawing that shows the relational correspondence between the applied force by the person and the suction force in the control device of the cleaner in accordance with the embodiment of the present invention;
Fig. 20A is a drawing that shows an operational state of the cleaner in accordance with the embodiment of the present invention;
Fig. 20B is an expanded plan view of a suction nozzle used for explaining the operational state of the cleaner in accordance with the embodiment of the present invention;
Fig. 21 is a drawing that explains a screen in the display unit of the peripheral device of the cleaner in accordance with the embodiment of the present invention;
Fig. 22 is a side view that shows an operational state of the control device of the cleaner in accordance with the embodiment of the present invention;
Fig. 23 is a side view that shows an operational state of the control device of the cleaner in accordance with the embodiment of the present invention;
Fig. 24 is a flow chart that shows operation steps of the cleaning operation correction unit, the correcting operation type determination unit, the operation selection unit, the cleaning operation storage unit, the cleaning operation data base and the control parameter managing unit of the control device of the cleaner in accordance with the embodiment of the present invention;
Fig. 25 is a flow chart that shows operation steps of the control unit of the control device of the cleaner in accordance with the embodiment of the present invention;
Fig. 26 is a drawing that shows an operation panel of the cleaner in accordance with the embodiment of the present invention;
Fig. 27A is a side view that shows an operational state of the cleaner in accordance with the embodiment of the present invention;
Fig. 27B is a side view that shows an operational state of the cleaner in accordance with the embodiment of the present invention;
Fig. 27C is a side view that shows an operational state of the cleaner in accordance with the embodiment of the present invention;
Fig. 28A is a side view that shows an operational state of the cleaner in accordance with the embodiment of the present invention;
Fig. 28B is a side view that shows an operational state of the cleaner in accordance with the embodiment of the present invention;
Fig. 28C is a side view that shows an operational state of the cleaner in accordance with the embodiment of the present invention;
Fig. 29A is a side view that shows an operational state of the cleaner in accordance with the embodiment of the present invention;
Fig. 29B is a plan view that shows an operational state of the cleaner in accordance with the embodiment of the present invention;
Fig. 29C is a plan view that shows an operational state of the cleaner in accordance with the embodiment of the present invention;
Fig. 29D is a plan view that shows an operational state of the cleaner in accordance with the embodiment of the present invention;
Fig. 30A is a side view that shows an operational state of the cleaner in accordance with the embodiment of the present invention;
Fig. 30B is a plan view that shows an operational state of the cleaner in accordance with the embodiment of the present invention;
Fig. 30C is a plan view that shows an operational state of the cleaner in accordance with the embodiment of the present invention;
Fig. 30D is a plan view that shows an operational state of the cleaner in accordance with the embodiment of the present invention;
Fig. 31 is a plan view that shows an operational state of the cleaner in accordance with the embodiment of the present invention;
Fig. 32A is a side view that shows an operational state of the cleaner in accordance with the embodiment of the present invention;
Fig. 32B is a side view that shows an operational state of the cleaner in accordance with the embodiment of the present invention;
Fig. 32C is a side view that shows an operational state of the cleaner in accordance with the embodiment of the present invention; and
Fig. 33 is a drawing that shows a list relating to threshold values in the cleaning operation type determination unit of the control device of the cleaner in accordance with the embodiment of the present invention.

### BEST MODE FOR CARRYING OUT THE INVENTION

Referring to drawings, the following description will discuss embodiments of the present invention in detail.

Prior to detailed explanations of the embodiments of the present invention by reference to the drawings, the following description will discuss various modes of the present invention.

According to a first aspect of the present invention, there is provided a control device, which is used for a cleaner that is provided with a movable body, a robot arm with a base end thereof being coupled to the movable body, a cleaning unit that is attached to a hand at a tip of the robot arm to be made in contact with a cleaning surface, and a driving device that drives the movable body, the robot arm, and the cleaning unit, and drives and controls the driving device so as to carry out a cleaning job in a home, comprising:
a force detection unit configured to detect a force of a person that is exerted on the robot arm;
an information acquiring unit that respectively acquires pieces of information relating to cleaning operations including a suction force of the cleaning unit and a cleaning position of the cleaning unit in the cleaning job, as well as to information relating to the force of the person that is detected by the force detection unit and exerted on the robot arm;
a correcting operation type determination unit configured to determine a type of a correcting operation for correcting the cleaning operation based upon the information relating to the cleaning operation and the information relating to the force of the person respectively acquired by the information acquiring unit; and
a cleaning operation correcting unit configured to drive-control the driving device to correct the cleaning operation in accordance with the force of the person that is detected by the force detection unit and acquired by the information acquiring unit and the type of the correcting operation determined by the correcting operation type determination unit, during the cleaning job of the robot arm.

With this arrangement, in accordance with the information relating to the cleaning operation and the information relating to the force of the person, the cleaning operation of the robot arm can be corrected.

According to a second aspect of the present invention, there is provided the control device for a cleaner according to the first aspect, wherein the correcting operation type determination unit determines a plurality of types of correcting operations used for correcting the cleaning operation, and
the cleaning operation correcting unit drive-controls the driving device to correct the cleaning operation based upon the plurality of types of correcting operations, in accordance with the force of the person detected by the force detection unit and acquired by the information acquiring unit and the plurality of types of correcting operations determined by the correcting operation type determination unit, during the cleaning job of the robot arm.

With this arrangement, in accordance with the information relating to the cleaning operation, the information relating to the force of the person and the plurality of the types of the correcting operations, it is possible to carry out a plurality of types of corrections at one time on the cleaning operations of the robot arm.

According to a third aspect of the present invention, there is provided the control device for a cleaner according to the first aspect, wherein the information relating to cleaning operations comprises at least one piece of information among information of the cleaning position of the cleaning unit, information of a force to be applied to the cleaning surface from the cleaning unit, information relating to a direction of the cleaning operation of the cleaning unit, information relating to a strength of a suction force of the cleaning unit, speed information of the cleaning unit, and information relating to a cleaning unnecessary area that is information relating to an area where no cleaning is required, in accordance with the cleaning job carried out by the robot arm.

With this arrangement, in response to a cleaning process to be carried out by the robot arm of the cleaner, at respective points of time, it is possible to correct at least one of pieces of information including the positional information, the information of a force to be applied by the robot arm, the information relating to the cleaning direction, the information relating to the strength of suction force, the speed information and the information relating to the area in which no cleaning operation is required.

According to a fourth aspect of the present invention, there is provided the control device for a cleaner according to the first aspect, wherein the information relating to cleaning operations comprises at least one piece of information of a force to be applied to the cleaning surface from the cleaning unit and information relating to a strength of a suction force of the cleaning unit in accordance with the cleaning job carried out by the robot arm, and
based upon the information relating to cleaning operation, the cleaning operation correcting unit corrects a size or a direction of the force that has been set among the pieces of information relating to the cleaning operation prior to the correcting operation, in a middle of the cleaning operation by the robot arm, with a force control mode for carrying out the cleaning operation by applying a predetermined force to the cleaning surface from the robot arm being individually set to respective axes in x, y, and z-axis directions toward which the robot arm is allowed to move, in accordance with the force of the person detected by the force detection unit and acquired by the information acquiring unit, under position control in which a position of the robot arm is controlled in such a manner as to make a rigidity of the robot arm higher than a rigidity of the robot arm during the cleaning operation prior to the correcting operation.

With this arrangement, based upon the information relating to the cleaning operations, in the middle of the cleaning operation by the robot arm, with a force control mode in which a predetermined force is exerted on the cleaning surface from the robot arm to carry out the cleaning operation being set to each of the individual axes of the x, y and z-axis directions toward which the robot arm is allowed to shift, it is possible to correct the size or direction of the force set as described above among pieces of information relating to the cleaning operations prior to the correcting operation, in accordance with the force of the person detected by the force detection unit and acquired by the information acquiring unit, under position control in which the position of the robot arm is controlled in such a manner as to make the rigidity of the robot arm higher than the rigidity of the robot arm during the cleaning operation prior to the correcting operation.

According to a fifth aspect of the present invention, there is provided the control device for a cleaner according to the first aspect, wherein the information relating to cleaning operations comprises information relating to the cleaning position of the cleaning unit, information relating to the cleaning direction of the cleaning unit, speed information of the cleaning unit, and information relating to the cleaning unnecessary area that is information relating to an area where no cleaning is required, in accordance with the cleaning job carried out by the robot arm, and
based upon the information relating to cleaning operations, the cleaning operation correcting unit drive-controls the driving device so as to correct the cleaning operation of information relating to the cleaning operation under an impedance control, in a middle of the cleaning operation in a position control mode for controlling a position of the robot arm, with an impedance control mode for allowing the robot arm to act in accordance with a force to be applied to the robot arm from the person, while the robot arm is stopped from being driven, being individually set to respective axes in the x, y, and z-axis directions toward which the robot arm is allowed to move, in accordance with the force of the person detected by the force detection unit and acquired by the information acquiring unit.

With this arrangement, based upon the information relating to the cleaning operations, while the operation is carried out in the position control mode for controlling the positionof the robot arm, in the middle of the cleaning operation, with an impedance control mode in which the robot arm is activated in response to a force applied to the robot arm from the person, when the robot arm is stopped from being driven, being set to each of the individual axes of the x, y and z-axis directions toward which the robot arm is allowed to shift, it is possible to correct the cleaning operation of the information relating to the cleaning operation under the impedance control, in accordance with the force of the person detected by the force detection unit and acquired by the information acquiring unit.

According to a sixth aspect of the present invention, there is provided the control device for a cleaner according to any one of the first to fifth aspects, further comprising:
a control parameter managing unit configured to set a mechanical impedance set value of the robot arm based upon the type of a correcting operation determined by the correcting operation type determination unit; and
an impedance control unit configured to control a mechanical impedance value of the robot arm to be set to the mechanical impedance set value set by the control parameter managing unit.

With this arrangement, based upon the type of the correcting operation, the mechanical impedance value of the robot arm can be set and controlled.

According to a seventh aspect of the present invention, there is provided the control device for a cleaner according to the sixth aspect, wherein based upon the type of a correcting operation, the impedance control unit individually determines mechanical impedance set values in six axes direct ions including translation directions and rotation directions of the hand of the robot arm, and
upon correcting the cleaning direction of the cleaning unit at the hand as the type of a correcting operation determined by the correcting operation type determination unit, the control parameter managing unit sets the mechanical impedance set value in a manner so as to make a rigidity in the cleaning direction higher than a rigidity in a direction different from the cleaning direction.

With this arrangement, by allowing the cleaning unit in the cleaning direction of the hand to have high rigidity as the type of correction, the cleaning unit in the cleaning direction of the hand to be corrected can be easily detected and can be easily moved in the corresponding direction, and by allowing the cleaning unit in a direction other than the cleaning direction of the hand to have low rigidity, the cleaning unit is made to be hardly moved in the corresponding direction.

According to an eighth aspect of the present invention, there is provided the control device for a cleaner according to the first aspect, wherein the correcting operation type determination unit detects an amount of shift in a direction parallel to the cleaning surface of a position of the hand of the robot arm,
in a case when a force component in a direction perpendicular to the cleaning surface is equal to or less than a first threshold value, a force component in a direction parallel to the cleaning surface is set to be equal to or larger than a second threshold value, and the amount of shift in a direction parallel to the cleaning surface of the position of the hand of the robot arm detected by the correcting operation type determination unit is equal to or larger than a third threshold value, the correcting operation type determination unit determines that the type of a correcting operation corresponds to a shift of the position of the cleaning surface, and
in accordance with the force of the person detected by the force detection unit and acquired by the information acquiring unit and the type of a correcting operation determined by the correct ing operation type determination unit, the cleaning operation correcting unit drive-controls the driving device so as to correct the position of the hand of the robot arm in a direction parallel to the cleaning surface.

According to a ninth aspect of the present invention, there is provided the control device for a cleaner according to the first aspect, wherein the correcting operation type determination unit detects an amount of shift in a direction perpendicular to the cleaning surface of a position of the hand of the robot arm,
in a case when a force component in the direction perpendicular to the cleaning surface is equal to or larger than a first threshold value, and the amount of shift in the direction perpendicular to the cleaning surface of the position of the hand of the robot arm detected by the correcting operation type determination unit is larger than a fourth threshold value, the correcting operation type determination unit determines that the type of a correcting operation corresponds to a type of a shift of a position in a direction perpendicular to the cleaning surface, and
in accordance with the force of the person detected by the force detection unit and acquired by the information acquiring unit and the type of a correcting operation determined by the correcting operation type determination unit, the cleaning operation correcting unit drive-controls the driving device so as to correct the position of the hand of the robot arm in the direction perpendicular to the cleaning surface.

According to a 10th aspect of the present invention, there is provided the control device for a cleaner according to the first aspect, wherein the correcting operation type determination unit detects an amount of shift in a direction perpendicular to the cleaning surface of a position of the hand of the robot arm,
in a case when a force component in the direction perpendicular to the cleaning surface is equal to or larger than a first threshold value, the amount of shift in the direction perpendicular to the cleaning surface of the position of the hand of the robot arm detected by the correcting operation type determination unit is equal to or less than the fourth threshold value, and the cleaning job corresponds to a wiping job, the correcting operation type determination unit determines that the type of a correcting operation corresponds to a type of a correction of a degree of an applied force, and
in accordance with the force of the person detected by the force detection unit and acquired by the information acquiring unit and the type of a correcting operation determined by the correcting operation type determination uni t, the cleaning operation correcting unit drive-controls the driving device so as to correct the applied force to the robot arm to the direction perpendicular to the cleaning surface.

According to an 11th aspect of the present invention, there is provided the control device for a cleaner according to the first aspect, wherein the correcting operation type determination unit detects an amount of shift in a direction perpendicular to the cleaning surface of a position of the hand of the robot arm,
in a case when a force component in the direction perpendicular to the cleaning surface is equal to or larger than a first threshold value, the amount of shift in the direction perpendicular to the cleaning surface of the position of the hand of the robot arm detected by the correcting operation type determination unit is equal to or less than the fourth threshold value, and the cleaning job corresponds to a suction cleaning job, the correcting operation type determination unit determines that the type of a correcting operation corresponds to a type of a correction of a suction force, and
in accordance with the force of the person detected by the force detection unit and acquired by the information acquiring unit and the type of the correcting operation determined by the correcting operation type determination unit, the cleaning operation correcting unit drive-controls the driving device so as to correct the suction force applied in the direction perpendicular to the cleaning surface.

According to a 12th aspect of the present invention, there is provided the control device for a cleaner according to the first aspect, wherein the correcting operation type determination unit detects an amount of shift in a direction parallel to the cleaning surface of a position of the hand of the robot arm,
in a case when a force component in a direction perpendicular to the cleaning surface is less than a first threshold value, a force component in the direction parallel to the cleaning surface is equal to or larger than a second threshold value, and the amount of shift in the direction parallel to the cleaning surface of the position of the hand of the robot arm detected by the correcting operation type determination unit is less than a third threshold value, the correcting operation type determination unit determines that the type of a correcting operation corresponds to a type of a correction of a speed, and
in accordance with the force of the person detected by the force detection unit and acquired by the information acquiring unit and the type of a correcting operation determined by the correcting operation type determination unit, the cleaning operation correcting unit drive-controls the driving device so as to correct the speed of the position of the hand of the robot arm to the direction parallel to the cleaning surface.

According to a 13th aspect of the present invention, there is provided the control device for a cleaner according to the first aspect, wherein based upon the force of the person applied to the robot arm, detected by the force detection unit and acquired by the information acquiring unit, the correcting operation type determination unit measures an amount of change in the force applied to the robot arm, and based upon result of measurements, compares amounts of change in positional component and in orientation component with each other, and determines that the type of a correcting operation corresponds to a type of a correction of orientation, when the amount of change in the orientation component is greater than the amount of change in the positional component, and
in accordance with the force of the person detected by the force detection unit and acquired by the information acquiring unit and the type of a correcting operation determined by the correcting operation type determination unit, the cleaning operation correcting unit drive-controls the driving device so as to correct an orientation of the hand of the robot arm.

With this arrangement, in accordance with the force of the person detected by the force detection unit and acquired by the information acquiring unit and the type of a correcting operation determined by the correcting operation type determination unit, the driving device can be positively drive-controlled so as to correct the orientation of the hand of the robot arm.

According to a 14th aspect of the present invention, there is provided the control device for a cleaner according to the first aspect, wherein the correcting operation type determination unit detects an amount of shift in a direction parallel to the cleaning surface of a position of the hand of the robot arm,
in a case when the force applied to the robot arm by the human hand is parallel to the cleaning surface and an amount of shift in a direction parallel to the cleaning surface in a certain fixed period of time, detected by the correcting operation type determination unit, is equal to or larger than a threshold value, the correcting operation type determination unit determines that the type of a correcting operation corresponds to a type of a setting operation of a cleaning unnecessary area, and
in accordance with the force of the person detected by the force detection unit and acquired by the information acquiring unit and the type of a correcting operation determined by the correcting operation type determination unit, the cleaning operation correcting unit sets the cleaning unnecessary area by shifting the position of the hand of the robot arm.

With this arrangement, it becomes possible to easily set the cleaning unnecessary area, and consequently to avoid carrying out the cleaning operation by the cleaner on the area in which no cleaning is required.

According to a 15th aspect of the present invention, there is provided the control device for a cleaner according to any one of the first to 14th aspects, further comprising: a display unit configured to display information relating to the type of a correcting operation, based upon the type of the correcting operation determined by the correcting operation type determination unit.

With this arrangement, it becomes possible to display information relating to the type of a correcting operation.

According to a 16th aspect of the present invention, there is provided a control method, which is used for a cleaner that is provided with a movable body, a robot arm with a base end thereof being coupled to the movable body, a cleaning unit that is attached to a hand at a tip of the robot arm to be made in contact with a cleaning surface, and a driving device that drives the movable body, the robot arm, and the cleaning unit, and drives and controls the driving device so as to carry out a cleaning job in a home, comprising:
detecting a force of a person that is exerted on the robot arm by using a force detection unit;
by using pieces of information relating to cleaning operations including a suction force of the cleaning unit and a cleaning position of the cleaning unit in the cleaning job, as well as to information relating to the force of the person applied to the robot arm that is detected by the force detection unit and acquired by an information acquiring unit, allowing a correcting operation type determination unit to determine a type of a correcting operation for correcting the cleaning operation; and
during the cleaning job of the robot arm, in accordance with the force of the person applied to the robot arm that is detected by the force detection unit and acquired by the information acquiring unit and the type of the correcting operation determined by the correcting operation type determination unit, drive-controlling the driving device so as to correct the cleaning operation by using a cleaning operation correcting unit.

With this arrangement, based upon pieces of information relating to cleaning operations of the robot arm and the force of the person applied to the robot arm, the type of correction of the cleaning operation is determined, and during the job of the robot arm, the corresponding cleaning operation can be prepared in accordance with the force of the person and the type of correction.

According to a 17th aspect of the present invention, there is provided a cleaner comprising: the robot arm; and
the control device for the cleaner according to any one of the first to 15th aspects that drive-controls the robot arm by using the driving device.

According to an 18th aspect of the present invention, there is provided a control program, which is used for a cleaner that is provided with a movable body, a robot arm with a base end thereof being coupled to the movable body, a cleaning unit that is attached to a hand at a tip of the robot arm to be made in contact with a cleaning surface, and a driving device that drives the movable body, the robot arm, and the cleaning unit, and drives and controls the driving device so as to carry out a cleaning job in a home, allowing a computer to carry out steps of:
by using pieces of information relating to cleaning operations including a suction force of the cleaning unit and a cleaning position of the cleaning unit in the cleaning job, as well as to information relating to the force of the person applied to the robot arm that is detected by a force detection unit and acquired by an information acquiring unit, allowing a correcting operation type determination unit to determine a type of a correcting operation for correcting the cleaning operation; and
during the cleaning job of the robot arm, in accordance with the force of the person applied to the robot arm that is detected by the force detection unit and acquired by the information acquiring unit and the type of the correcting operation determined by the correcting operation type determination unit, drive-controlling the driving device so as to correct the cleaning operation by using a cleaning operation correcting unit.

With this arrangement, by using pieces of information relating to cleaning operations including the suction force of the cleaning unit and the cleaning positions of the cleaning unit in cleaning operations and information relating to the force of the person to be applied to the robot arm, it is possible to provide a program having the step of determining the type of correction of the cleaning operation, the step of detecting the force of the person, and the step of correcting the cleaning operation in accordance with the force of the person and the type of correction during the job of the robot arm.

According to a 19th aspect of the present invention, there is provided a control integrated electronic circuit, which is used for a cleaner that is provided with a movable body, a robot arm with a base end thereof being coupled to the movable body, a cleaning unit that is attached to a hand at a tip of the robot arm to be and made in contact with a cleaning surface, and a driving device that drives the movable body, the robot arm, and the cleaning unit, and drives and controls the driving device so as to carry out a cleaning job in a home, comprising:
a correcting operation type determination unit configured to determine a type of a correcting operation for correcting a cleaning operation, by using pieces of information relating to cleaning operations including a suction force of the cleaning unit and a cleaning position of the cleaning unit in the cleaning job, as well as to information relating to the force of the person applied to the robot arm that is detected by a force detection unit and acquired by an information acquiring unit; and
a cleaning operation correcting unit configured to drive-control the driving device so as to correct the cleaning operation, during the cleaning job of the robot arm, in accordance with the force of the person applied to the robot arm that is detected by the force detection unit and acquired by the information acquiring unit and the type of the correcting operation determined by the correcting operation type determination unit.

With this arrangement, an integrated electronic circuit can be provided which controls a cleaner including a robot arm that carries out a cleaning operation in home, and is characterized by including a correcting operation type determination unit that determines the type of a correcting operation for correcting the cleaning operation, by using pieces of information relating to cleaning operations including a suction force of the cleaning unit and a cleaning position of the cleaning unit in the cleaning job, as well as to the force of the person applied to the robot arm, and a cleaning operation correcting unit that corrects the cleaning operation, during the job of the robot arm, in accordance with the force of the person detected by the force detection unit and acquired by the information acquiring unit and the type of a correcting operation.

Referring to drawings, the following description will discuss the embodiment of the present invention in detail.

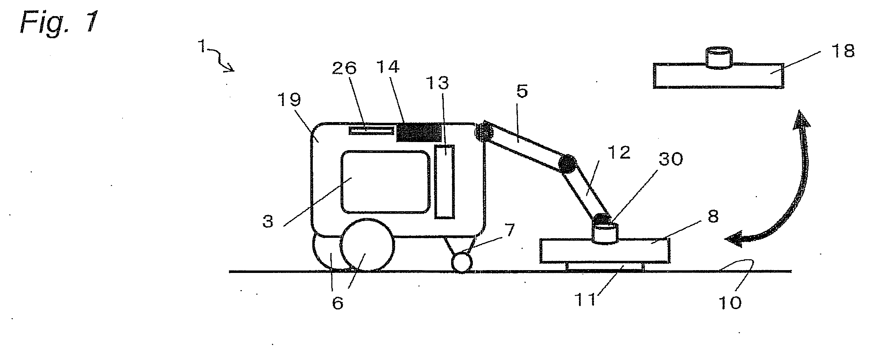

First, the structure of a cleaning robot 1 serving as one example of the cleaner in accordance with the embodiment of the present invention. Fig. 1 is a drawing that shows the schematic structure of the cleaning robot 1 in accordance with the embodiment of the present invention. In Fig. 1, the cleaning robot 1, which is placed on a floor 10, is provided with a main body 19 serving as one example of the moving body, a robot arm 5 with its base end connected to the main body 19, cleaning units 8 and 18 that are attached to a hand portion 30 at the tip of the robot arm 5, and made in contact with the cleaning surface, driving devices 65, 67, 43 and 69 that drive the main body 19, the robot arm 5 and the cleaning units 8 and 18, and a control device that is built in the main body 19 and drive-controls the robot arm 5; thus, the driving devices 65, 67, 43 and 69 are drive-controlled by the control device so that cleaning operations at home can be carried out.

The main body 19 is provided with a suction pump 13, a motor 67 used for the suction pump 13, serving as one example of a driving device for driving the cleaning unit 8 (for example, suction nozzle), a dust bag 3 for storing sucked dusts, a pair of wheels 6 used for moving the main body 19, a pair of motors 65 serving as one example of a driving device for wheels that rotation-drives the paired wheels 6 forwardly as well as reversely, motors 43 for respective joint portions serving as one example of robot-arm driving devices that drive the robot arm 5, an assistant wheel 7 that is freely rotatable, a data input IF 26 such as an operation panel 26A on which buttons and the like are arranged, and a display unit 14 serving as one example of the display unit. Reference numeral 8 represents a suction nozzle serving one example of the cleaning unit detachably attached to the tip of the robot arm 5, reference numeral 11 represents a rotary brush that is housed in the suction nozzle 8 so as to rotate therein, and driven to rotate by a motor 69 for the rotary brush inside the suction nozzle 8 so as to raise dusts on the floor surface 10, reference numeral 12 represents a suction hose that is installed inside the robot arm 5, and connects the suction nozzle 8, the suction pump 13 and the dust bag 3 to one another, reference numeral 18 represents amop serving as another example of the cleaning unit that can be detachably attached to the tip of the robot arm 5 in place of the suction nozzle 8, and is used for wiping stains on the floor surface 10. The motor 69 for the rotary brush inside the suction nozzle 8 functions as one example of the driving device used for driving the suction nozzle 8 serving as one example of the cleaning unit 8. Reference numeral 30 represents a hand placed at the tip of the robot arm 5, and serves as a mechanism for exchanging the suction nozzle 8 with a mop 18 serving as another member. The cleaning robot 1 carries out jobs including a cleaning job for sucking dusts or the like on the floor surface 10 through the suction nozzle 8, a wiping job for wiping stains on a floor surface, a wall, a desk or an outside face of a car by using the mop 18, and a polishing job for polishing a mirror, shoes or the like with some strength applied thereto by using the mop 18.

The following description schematically explains the sequence of operations of the cleaning robot 1.

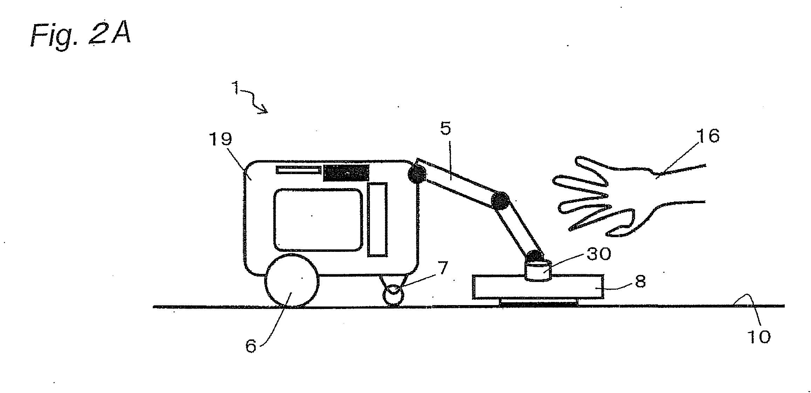

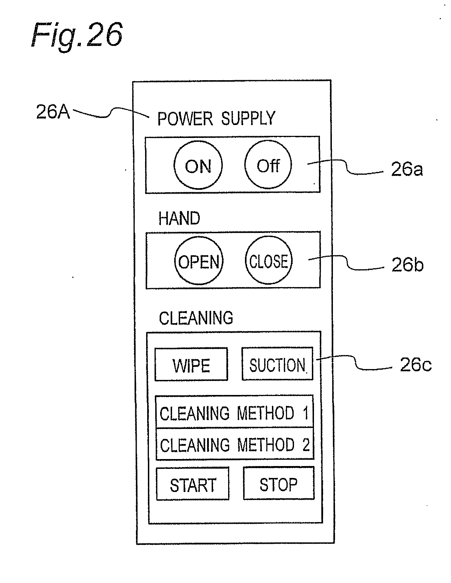

First, in Fig. 2A, the power supply is turned on by a human hand 16 through the data input IF 26 (for example, a power supply button 26a on the operation panel 26A in Fig. 26 is turned "ON") disposed on the upper portion of the cleaning robot 1.

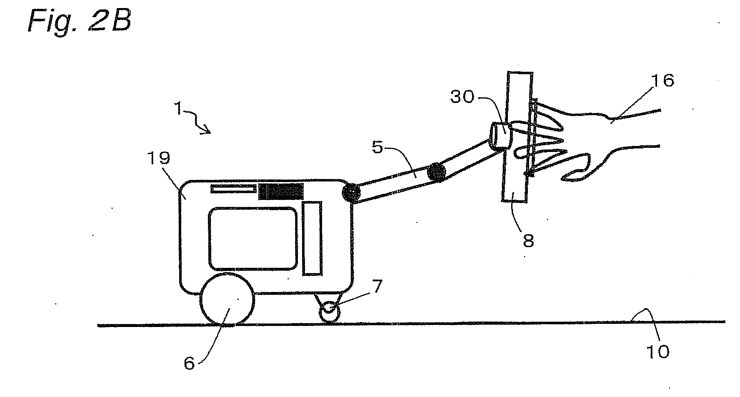

Next, in the case when dusts or the like are sucked, the suction nozzle 8 is attached to the hand 30 at the tip of the robot arm 5 of the cleaning robot 1 by the human hand 16, while in the case when a wiping job or a polishing job is carried out, the mop 18 is attached to the hand 30 at the tip of the robot arm 5 of the cleaning robot 1 by the human hand 16. Upon attaching the suction nozzle 8 or the mop 18 by the human hand 16, by inputting data from the data input IF 26 through a button or the like (for example, by pressing an "open" button of open/close buttons 26b for opening/closing the hand 30 on the operation panel 26A of Fig. 26), instructions for opening the hand 30 are given to a control unit 22 of the cleaning robot 1, which will be described later, so that the hand 30 is opened. Then, the suction nozzle 8 or the mop 18 is attached to the hand 30, and by inputting data from the data input IF 26 (for example, by pressing "close" button of the open/close button 26b for opening/closing the hand 30 on the operation panel 26A of Fig. 26), instructions for closing the hand 30 are given to the control unit 22 so as to close the hand 30; thus, the suction nozzle 8 or the mop 18 is attached to the hand 30. Additionally, upon attaching, by shifting the tip of the robot arm 5 (for example, by pressing the "open" button of the open/close buttons 26b, the hand 30 at the tip of the robot arm 5 is automatically raised to a position with its face up), the hand 30 may be operated so as to come close to the human hand 16 so as to be easily handled, as shown in Fig. 2B. In addition, by pressing the "close" button of the open/close buttons 26b, the hand 30 at the tip of the robot arm 5 may be automatically lowered to a cleaning position with its face down.

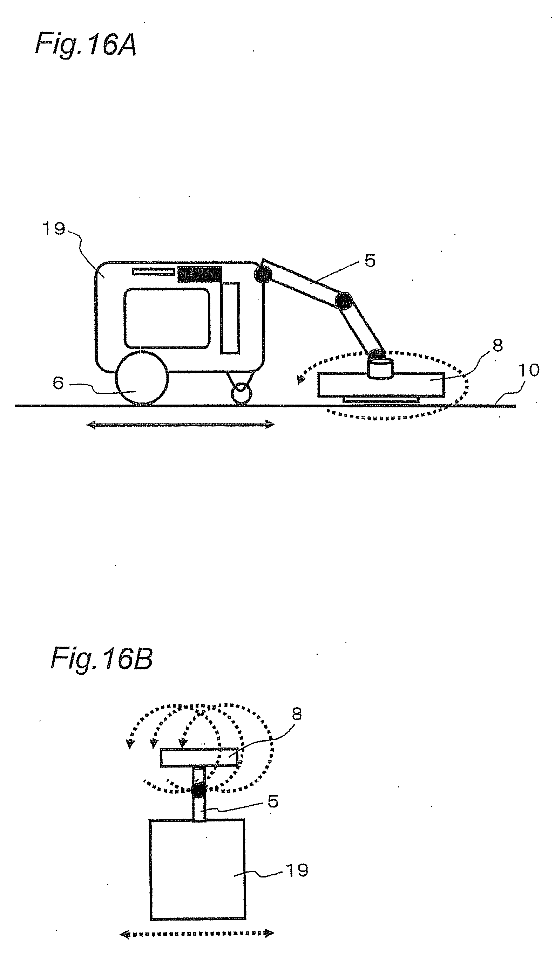

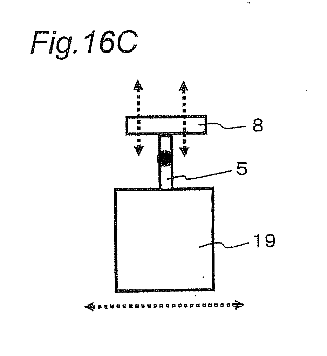

Next, by pressing the data input IF 26 disposed on the upper portion of the cleaning robot 1 (for example, pressing a start button of a cleaning switch 26c of the operation panel 26A of Fig. 26) with the human hand 16, the cleaning robot 1 is activated, and by selecting an optimal cleaning operation (for example, a suction or wiping operation) using an operation selection unit 29, which will be described later, the cleaning job (for example, the suction or wiping job) is started based upon the selected cleaning operation. Upon carrying out the cleaning operation, as shown in Fig. 16A and Fig. 16B (drawing obtained by viewing Fig. 16A from above), the main body 19 of the cleaning robot 1 automatically travels in lateral directions on a cleaning surface (xy plane) on the floor 10 by using the paired wheels 6 and the assistant wheel 7, and simultaneously as it automatically travels, the mop 18 at the tip of the robot arm 5 carries out a wiping operation along a track like, for example, a spiral line, with the main body 19 being slightly deviated laterally, centered on the position along the center axis in the forward/backward directions of the main body 19. Moreover, upon carrying out a suction cleaning operation, as shown in Fig. 16C, the main body 19 of the cleaning robot 1. automatically travels in lateral directions on a cleaning surface on the floor 10 by using the paired wheels 6 and the assistant wheel 7, and simultaneously as it automatically travels, the suction nozzle 8 at the tip of the robot arm 5 moves in directions perpendicular to the automatically traveling direction (that is, reciprocating movements forward/backward directions orthogonal to the lateral directions) by the driving operation of the robot arm 5 so that the suction cleaning operation is carried out.

Additionally, the data input IF 26 is secured to the top face of the cleaning robot 1; however, a remote controlling device capable of carrying out a remote controlling process may be used.

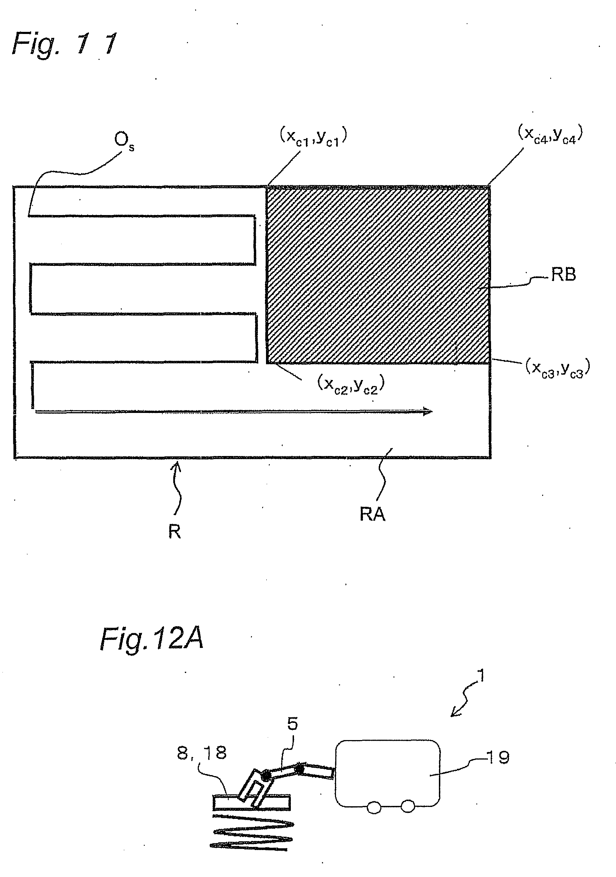

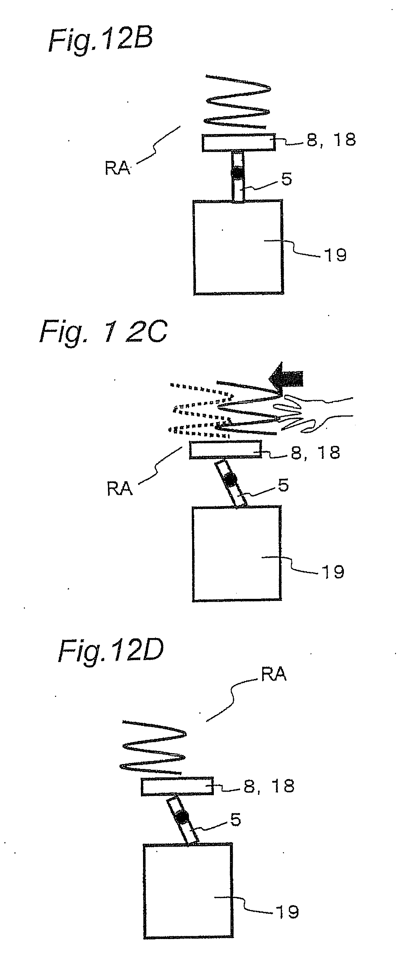

Next, the person confirms the degree of stains on the cleaning face, and directly grabs the robot arm 5 of the cleaning robot 1 with the human hand 16, and by applying a force in a direction to which the cleaning operation is to be corrected (for example, in a direction to which the moving direction is changed so as to move the suction nozzle 8 or the mop 18 at the tip of the robot arm 5 to an area in which the degree of stains is very high), for example, as shown in Fig. 12A, the operation of the robot arm 5 of the cleaning robot 1 or the cleaning robot 1 can be corrected. That is, as shown in Fig. 12A and Fig. 12B, when a cleaning operation is being carried out, with the suction nozzle 8 or the mop 18 being moved in forward and backward directions of the body unit 19 along a zigzag course as indicated by a solid line, for example, a force is applied as indicated by the arrow to the tip portion or the suction nozzle 8 or the mop 18 of the robot arm 5 with the human hand 16, as shown in Fig. 12C, so that the suction nozzle 8 or the mop 18 at the tip of the robot arm 5 is moved leftward, so as to be moved, for example, in a zigzag direction as indicated by a dotted line. With this arrangement, as shown in Fig. 12D, the suction nozzle 8 or the mop 18 is directed to an area on the left side relative to the position along the center axis in the forward/backward direction of the main body 19 so that the cleaning operation by the suction nozzle 8 or the mop 18 can be carried out, for example, along a zigzag course indicated by a solid line.

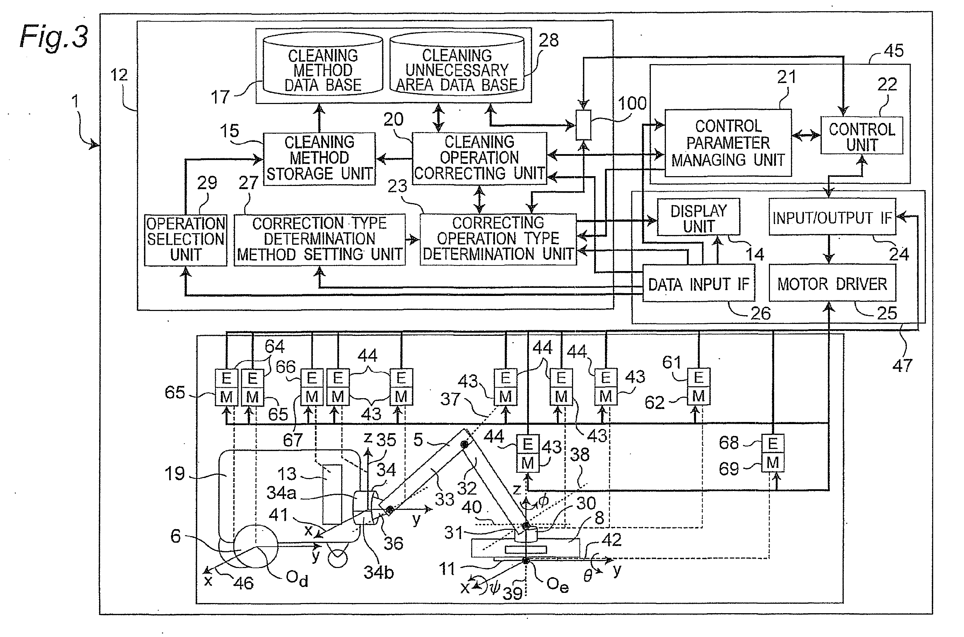

Fig. 3 is a drawing that shows components of a control device that constitutes the cleaning robot 1 in detail, and the components specifically include a control device main body 45, an operation generating device 12 for generating operations, the robot arm 5 to be controlled, the main body 19 to be controlled and a peripheral device 47. The control device of the cleaning robot 1 is mainly composed of the control device main body 45, the operation generating device 12 and the peripheral device 47.

The control device main body 45, the operation generating device 12 and the peripheral device 47 are composed respectively by general-use personal computers.

The control device main body 45 is provided with a cleaning operation correcting unit 20 serving as one example of a cleaning operation correcting unit of the operation generating device 12, a control parameter managing unit 21 serving as one example of a control parameter managing unit that is connected to a correcting operation type determination unit 23 serving as one example of a correcting operation type determination unit, and a data input IF 26 of the peripheral device 47, and a control unit (impedance control unit) 22 serving as one example of an impedance control unit connected to the control parameter managing unit 21 and an input/output IF 24 of the peripheral device 47.

The operation generating device 12 is provided with a cleaning operation data base 17, a cleaning unnecessary area data base 28, a correction type determination unit 27, a cleaning operation correcting unit 20, a correcting operation type determination unit 23, a cleaning operation storage unit 15, an operation selection unit 29 and an information acquiring unit 100. The cleaning operation storage unit 15 is connected to the cleaning operation data base 17, the cleaning unnecessary area data base 28 and the cleaning operation correcting unit 20. The cleaning operation data base 17 and the cleaning unnecessary area data base 28 are respectively connected to the cleaning operation storage unit 15, the cleaning operation correcting unit 20 and the operation selection unit 29. To the cleaning operation correcting unit 20 are connected the cleaning operation data base 17, the cleaning unnecessary area data base 28, the cleaning operation storage unit 15, the control parameter managing unit 21 of the control device main body 45, the correcting operation type determination unit 23 and the data input IF 26 of the peripheral device 47. The correcting operation type determination unit 23 is connected to the cleaning operation correcting unit 20, a correction type determining method setting unit 27, the data input IF 26 of the peripheral unit 47 and the control parameter managing unit 21 of the control device main body unit 45. The operation selection unit 29 is connected to the cleaning operation data base 17, the cleaning unnecessary area data base 28 and the data input IF 26. The correction type determining method setting unit 27 is connected to the data input IF 26 and the correcting operation type determination unit 23. The information acquiring unit 100 is connected to the correcting operation type determination unit 23, the cleaning operation data base 17, the cleaning unnecessary area data base 28 and the force detection unit 53 of the control unit 22. Therefore, the information acquiringunit 100 is capable of acquiringpieces of information relating to cleaning operations including the suction force of the cleaning units 8, 18 and the cleaning positions of the cleaning units 8, 18 in cleaning operations and information relating to the force of the person to be applied to the robot arm 5 detected by the force detection unit 53. The information acquired by the information acquiring unit 100 is inputted to the correcting operation type determination unit 23, and based upon the information relating to the cleaning operation and the information relating to the force of the person respectively acquired by the information acquiring unit 100, the type of the correcting operation used for correcting the cleaning operation is determined by the correcting operation type determination unit 23, as will be described later.

The peripheral device 47 is provided with the correcting operation type determination unit 23, the cleaning operation correcting unit 20, the data input IF 26 connected to the control parameter managing unit 21, the display unit 14 and the operation generating device 12 of the control device main body 45, the input/output IF 24 to which the respective pieces of angle information from encoders 64 of the respective motors 65 of the paired wheels 6, an encoder 66 of the suction pump 13, encoders 44 of the motors 43 of the respective joint portions, an encoder 61 of the hand driving motor 62 and encoder 68 of a motor 69 of the rotary brush 11 are inputted, and which is connected to the control unit 22, a motor driver 25 that is connected to motors 65 of the paired wheels 6, the motor 67 of the suctionpump 13, the motors 43 of the respective joint portions, the hand driving motor 62 and the motor 69 of the rotary brush 11, and the display unit 14 that is connected to the correcting operation type determination unit 23.

The input/output IF24 is provided with, for example, a D/A board, an A/D board, a counter board and the like, connected to an expansion slot, such as a PCI bus, of a personal computer.

The operation generating device 12 that controls operations of the robot arm 5 and the main body 19, the control device main body unit 45 and the peripheral device 47 execute the respective operations so that the respective pieces of joint angle information of the respective joint portions of the robot arm 5, which are outputted from an encoder 44, which will be described later, are received by the control device main body unit 45 through the input/output IF24, andbasedupon the acquired respective pieces of joint angle information, the control device main body unit 45 calculates controlling instruction values in rotation operations of the respective joint portions of the robot arm 5. Moreover, the positional information (rotation angle information) of each of the wheels 6 outputted from the encoder 64 of the motor 65 of each of the wheels 6 of the main body 19 is received by the control device main body unit 45 through the input/output IF 24, and based upon the respective pieces of angle information thus acquired, the control device main body unit 45 calculates a control instruction value of the motor 65 of each of the wheels 6 of the main body 19. Moreover, a suction force outputted by the encoder 66 of the motor 67 of the suction pump 13 is received by the control device main body 45 through the input/output IF 24, and based upon the suction force thus acquired, the control device main body unit 45 calculates a control instruction value of the motor 67 of the suction pump 13. Furthermore, a rotation force, outputted from the encoder 68 of the motor 69 of the rotary brush 11, is received by the control device main body unit 45 through the input/output IF 24, and based upon the rotation force thus acquired, the control device main body unit 45 calculates a control instruction value of the motor 69 of the rotary brush 11.

The control instruction value of the motor 43 of each of the joint portions of the robot arm 5 thus calculated is given to the motor driver 25 through the input/output IF 24 so that in accordance with the respective control instruction values sent from the motor driver 25, the motors 43 of the respective joint portions of the robot arm 5 are independently driven respectively.

Moreover, the respective control instruction values for the two wheels 6 thus calculated are given to the motor driver 25 through the input/output IF 24 so that in accordance with the respective control instruction values sent from the motor driver 25, the motors 65 of the respective wheels 6 are independently driven respectively.

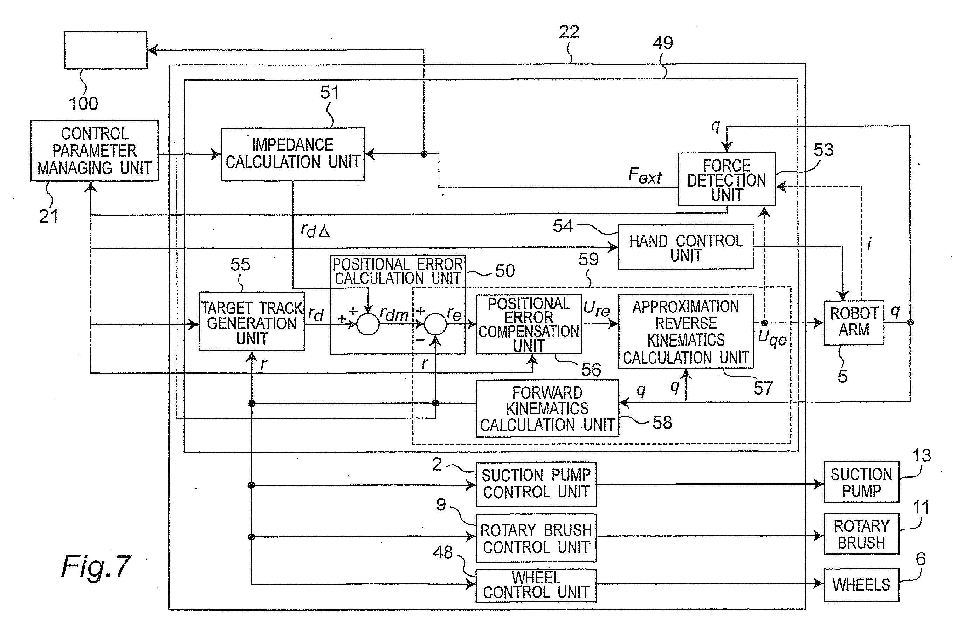

As one example of the hand driving device that is drive-controlled by the motor driver 25, a structure may be proposed in which a hand driving motor 62 and an encoder 61 for detecting the rotation phase angle of the rotation axis of the hand driving motor 62 are further installed in the hand 30 so that, for example, by rotating the rotation axis of the motor 62 in the forward direction, the hand 30 is opened so as to allow the suction nozzle 8 or the mop 18 to be attached by the human hand 16, while, by rotating the rotation axis of the motor 62 in the reverse direction, the hand 30 is closed so as to secure the suction nozzle 8 or the mop 18 attached to the hand 30. In this structure, based upon the rotation angle of the rotation axis of the motor 62 detected by the encoder 61, by using control signals (open/close instruction signals) from the hand control unit 54 (shown in Fig. 7) of the control unit 22 of the control device main body unit 45, the rotation of the hand driving motor 62 is drive-controlled through the motor driver 25 so that by forwardly/reversely rotating the rotation axis of the hand driving motor 62, the hand 30 is opened and closed.

Moreover, the control instruction value for the motor 67 of the suction pump 13 thus calculated is given to the motor driver 25 through the input/output IF 24 so that in accordance with the control instruction value sent from the motor driver 25, the motor 67 of the suction pump 13 is driven.

Furthermore, the control instruction value for the motor 69 of the rotary brush 11 thus calculated is given to the motor driver 25 through the input/output IF 24 so that in accordance with the control instruction value sent from the motor driver 25, the motor 69 of the rotary brush 11 is driven.

The robot arm 5 is a multi-link manipulator with six degrees of freedom, and is provided with the hand 30, a forearm link 32 having a wrist portion 31 at its tip to which the hand 30 is attached, an upper arm link 33 with its tip being rotatably coupled to the base end of the forearm link 32 and a base portion 34 to which the base end of the upper link 33 is rotatably coupled and supported. The base portion 34 is coupled to the front end face of the main body 19. The wrist portion 31 has three rotation axes, that is, a fourth joint portion 38, a fifth joint portion 39 and a sixth joint portion 40, so that the relative orientation of the hand 30 to the forearm link 32 can be changed. That is, in Fig. 3, the fourth joint portion 38 can change the relative orientation of the hand 30 around its lateral axis to the wrist portion 31. The sixth joint portion 40 can change the orientation of the hand 30 around the lateral axis that is respectively orthogonal to the lateral axis of the fourth joint portion 38 and the longitudinal axis of the fifth joint portion 39, relative to the wrist portion 31. The other end of the forearm link 32 is allowed to rotate around the third joint portion 37 relative to the tip of the upper arm link 33, that is, around the lateral axis in parallel with the lateral axis of the fourth joint portion 38. The other end of the upper arm link 33 is allowed to rotate around the second joint portion 36 relative to the base portion 34, that is, around the lateral axis in parallel with the lateral axis of the fourth joint portion 38. Moreover, an upper side movable portion 34a of the base portion 34 is allowed to rotate around the first joint portion 35 relative to a lower side fixed portion 34b of the base portion 34, that is, around the longitudinal axis in parallel with the longitudinal axis of the fifth joint portion 39. As a result, the robot arm 5 is allowed to rotate around the total six axes to form the multi-link manipulator with six degrees of freedom.

Each of the joint portions forming the rotation portions of the respective axes is provided with a motor 43 serving as one example of the rotation driving device, and an encoder 44 that detects a rotation phase angle (that is, a joint angle) of the rotation axis of the motor 43. The motor 43 is attached to one of a pair of members forming each joint portion (for example, a rotation-side member and a supporting-side member that supports the rotation-side member), and drive-controlled by a motor driver 25, which will be described later (actually, installed in one of the members of each joint portion of the robot arm 5). The encoder 44 is attached to one of the members so as to detect the rotation phase angle (that is, joint angle) of the rotation axis of the motor 43 (actually, installed in one of the members of each joint portion of the robot arm 5). The rotation axis of the motor 43 that is installed in one of the members is coupled to the other member so that by forwardly/reversely rotating the rotation axis, the other member is allowed to rotate around each axis relative to the one of the members.

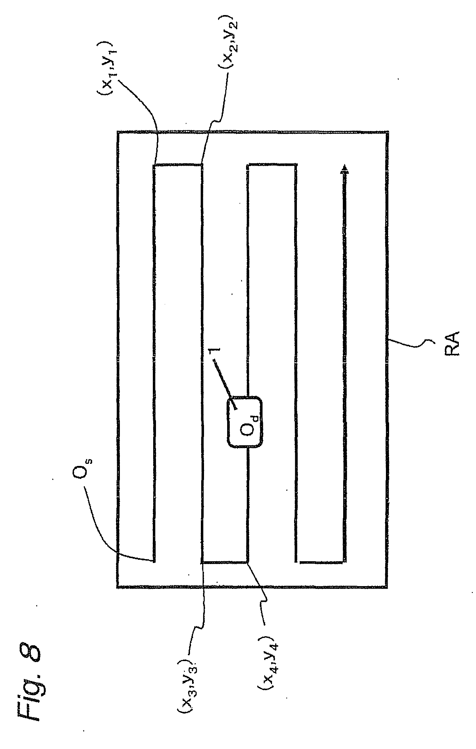

Reference numeral 46 represents a main body coordinate system, and indicates a relative positional relationship of the main body 19 from the start point Oₛ of an operation course preliminarily stored (operation course of the cleaning robot 1 within a cleaning area (cleaning surface), for example, shown in Fig. 8). Reference numeral 41 is a base portion coordinate system whose positional relationship is fixed relative to the fixed portion 34b of the base portion 34 that is fixed to the front end portion of the main body 19, and reference numeral 42 represents a hand coordinate system whose positional relationship is fixed relative to the hand 30.

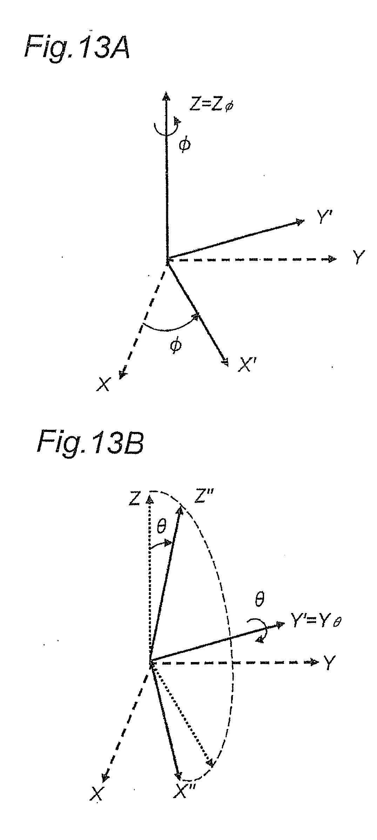

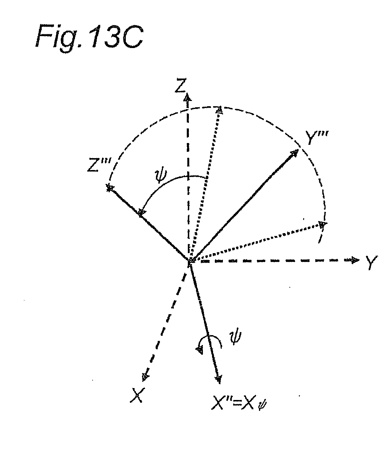

The origin position O_{d} (x, y) of the body coordinate system 46, viewed from the start point Oₛ of the operation course is defined as a body position. Moreover, the origin position Oₑ (x, y, z) of the hand coordinate system 42, viewed from the base portion coordinate system 41, is defined as a hand position (tip position of each of the cleaning units 8 and 18) of the robot arm 5, and the orientation of the hand coordinate system 42, viewed from the base portion coordinate system 41, is represented as (φ, θ, ψ) by using the roll angle, pitch angle and yaw angle, and this is defined as the hand orientation (orientation of each of the cleaning units 8 and 18) of the robot arm 5, and hand position and orientation vectors are defined as vectors r = [x, y, z, φ, θ, ψ]^{T}. Referring to Figs. 13A to 13C, the following description will discuss the roll angle, pitch angle and yaw angle. Suppose a coordinate system in which the coordinate system is rotated by an angle φ relative to the Z-axis of the absolute coordinate system 35 serving as a rotation axis (see Fig. 13A). The coordinate axes at this time are defined as [X', Y', Z]. Next, this coordinate system is rotated by an angle θ, with Y'-axis serving as the rotation axis (see Fig. 13B). The coordinate axes at this time are defined as [X", Y', Z"]. Lastly, this coordinate system is rotated by an angle ψ, around X" axis, with the X"-axis serving as the rotation axis (see Fig. 13C). The coordinate axes at this time are defined as [X", Y"', Z''']. The orientation of the coordinate system at this time is represented by roll angle φ, pitch angle θ and yaw angle ψ, and the orientation vectors at this time are defined as (φ, θ, ψ). When a coordinate system, formed by parallel-shifting the origin position of the coordinate system of the orientation (φ, θ, ψ) to the origin position Oₑ (x, y, z) of the hand coordinate system 42, is coincident with the hand coordinate system 42, the orientation vectors of the hand coordinate system 42 are defined as (ψ, θ, ψ).

In the case when the hand position and orientation of the robot arm 5 are respectively controlled, the hand position and orientation vectors r are made to follow the hand position and orientation target vectors r_{d}, generated in a target track generation unit 55, which will be described later.

Reference numeral 26 represents a data IF (interface), and serves as an interface through which a person (cleaning worker) inputs instructions such as start and end of a cleaning job by using an input device, such as a button, a keyboard, a mouse or a microphone.

The display unit 14 is, for example, a display device placed on the top face of the main body 19, and cleaning operations or types of parameters to be corrected, which will be described later, are displayed on the display unit 14.

The cleaning operation data base 17 stores pieces of information relating to operations at the time of cleaning, such as a position and orientation at a certain point of time (information relating to cleaning operations), of the main body 19 and the robot arm 5. In this case, pieces of information relating to cleaning operations include at least one piece of information among information relating to cleaning positions of the cleaning units 8, 18, information relating to a force to be applied to the cleaning surface, information relating to the directions of cleaning operations of the cleaning units 8, 18, information relating to strength of suction force by the cleaning units 8, 18, information relating to speed of the cleaning units 8, 18, and cleaning unnecessary area information that is information relating to a region RB requiring no cleaning operation, in accordance with each of the cleaning operations to be carried out by the robot arm 5.

The following description will discuss the cleaning operation data base 17 in detail.

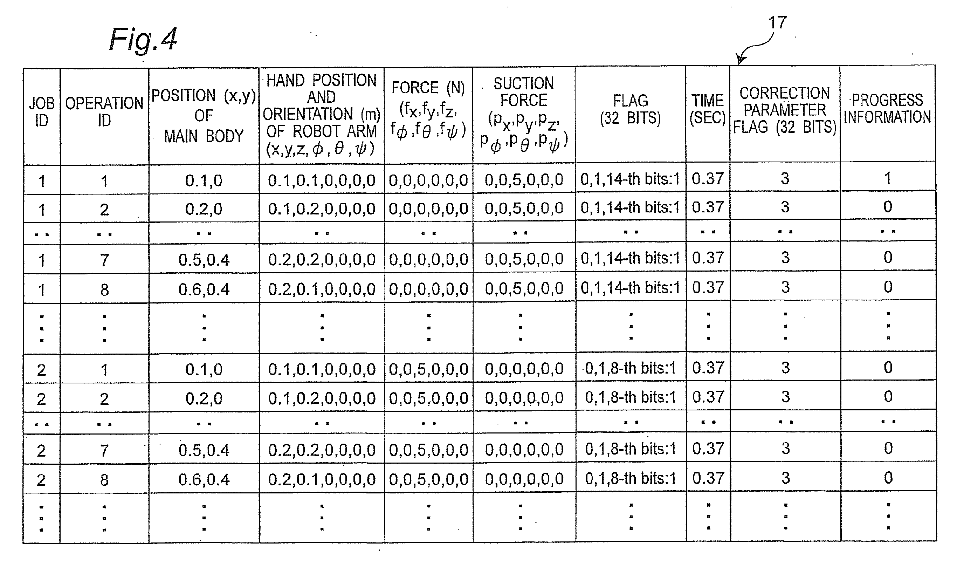

The cleaning operation data base 17 is designed to store pieces of information relating to operations of the main body 19 and the robot arm 5 as shown in Fig. 4, such as, job ID numbers used for identifying cleaning operations and operation ID numbers used for identifying the individual operations within the job, information relating to the position of the main body 19 in each operation, information relating to the hand position and the orientation of the robot arm 5, information relating to a force to be applied onto the cleaning surface by the robot arm 5, information relating to strength of suction force, information relating to a flag that indicates which pieces of information are effective among parameters of the position, orientation, force and suction force of the robot arm 5 (flag indicating effectiveness), information relating to periods of time during which the respective operations are carried out, information relating to types of parameters to be corrected upon correcting the operation information of the cleaning operation data base 17 in a cleaning operation correcting unit 20, which will be described later, and progress information indicating whether or not the cleaner is currently in operation.

The job ID number used for identifying the cleaning job in the cleaning operation data base 17 is information indicating job ID numbers assigned to the respective cleaning jobs so that, when a plurality of types of cleaning jobs are carried out, the respective cleaning jobs can be mutually identified.

Operation ID numbers used for identifying individual operations within a cleaning job in the cleaning operation data base 17 correspond to pieces of information representing operation ID numbers assigned to the respective cleaning operations so as to mutually identify individual cleaning operations within one cleaning job in the case when one cleaning operation is composed of a plurality of cleaning operations.

The information relating to the position of the main body 19 in the cleaning operation data base 17, which corresponds to information of the above-mentioned body position of the main body 19 when the floor face 10 is supposed to be an X-Y plane, makes it possible to indicate an operation course of the cleaning robot 1, for example, shown in Fig. 8, with the origin position O_{d} of the body coordinate system 46 viewed from the start point Oₛ of the operation course being set to (x, y). More specifically, as shown in Fig. 8, in the case of an operation course when the cleaning robot 1 is allowed to travel on a cleaning surface along a zigzag course, a first moving-direction alternation point (x₁, y₁), a Second moving-direction alternation point (x₂, y₂), a third moving-direction alternation point (x₃, y₃), a fourth moving-direction alternation point (x₄, y₄) and the like of the main body 19 are stored therein.

With respect to the information relating to the position of the main body 19 in the cleaning operation data base 17, it may be preliminarily set in the cleaning operation data base 17, or in the case when a camera, serving as one example of an image recognition device, is installed in the cleaning robot 1, an image picked up by the camera is subjected to an image recognizing process in an image recognition processing unit so that an obstacle is detected by the image recognition, or in the case when an obstacle detecting sensor, such as an ultrasonic sensor, is installed in the cleaning robot 1, an obstacle is detected by the obstacle detecting sensor so that a course of the traveling direction of the cleaning robot 1 (for example, a course shown in Fig. 8) is generated so as to avoid the detected obstacle by a cleaning method storage unit 27, and stored in the cleaning method storage unit 27 in association with time.

The information relating to the hand position and orientation of the robot arm 5 in the cleaning operation data base 17 represents the aforementioned hand position and orientation of the robot arm 5, and is indicated as (x, y, z, φ, θ, ψ) based upon the origin position Oₑ and the orientation.

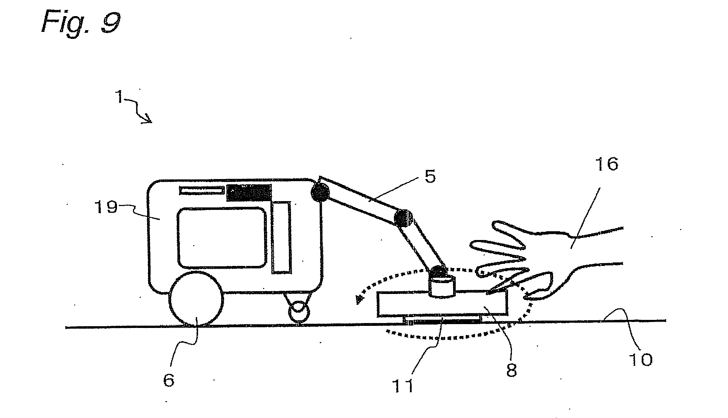

Pieces of information relating to the position and orientation/time of the robot arm 5 in the cleaning operation data base 17 are obtained by the control unit 22 as pieces of information of the hand position and orientation (a course indicated by a dotted line in Fig. 9) of the robot arm 5 for every predetermined time (for example, every 0.2 msec.) (more specifically, as described in the explanation of the control unit 22, by converting joint angles measured by the encoders 44 of the respective joint portions through a forward kinematics calculation unit 58 to the hand position and orientation, pieces of information of the hand position and the orientation of the robot arm 5 are acquired) obtained by moving the robot arm 5 in an impedance control mode, which will be described later, with the robot arm 5 or the suction nozzle 8 or the mop 18 being directly grabbed by the human hand 16, for example, as shown in Fig. 9, and these pieces of information are stored in the cleaning operation data base 17 by the cleaning operation storage unit 15 in association with time information. Additionally, the pieces of information of the position and orientation/time may be preliminarily generated by using the same method by the maker, and stored in the cleaning operation data base 17 before the product shipment.

The information relating to the force applied by the robot arm 5, stored in the cleaning operation data base 17, represents information relating to a force to be applied to an obj ect that is subjected to the job by the robot arm 5, and forces to be applied in x, y, and z directions of the robot arm 5 are defined as fₓ, f_{y}, and f_{z}, while forces to be applied in φ, θ, and ψ directions are defined as f_{φ}, f_{θ}, and f_{ψ}. In the cleaning operation data base 17, these are represented by (fₓ, f_{y}, f_{z}, f_{φ}, f_{θ}, f_{ψ}). For example, in the case when f_{z} = 5[N], this represents that a job is carried out by applying a force of 5N in the z-axis direction, and corresponds to a parameter to be used, for example, in the case when, upon carrying out a wiping operation on the floor surface 10, a rubbing force in a direction perpendicular to the floor surface 10 is applied.

The information relating to the suction force in the cleaning operation data base 17 corresponds to a force exerted when the robot arm 5 carries out a suction operation. The suction forces of the robot arm 5 in the x, y and z directions are respectively defined as pₓ, p_{y} and p_{z}, while the suction forces thereof in the φ, θ, ψ directions are respectively defined as p_{φ}, p_{θ} and p_{ψ}. In the cleaning operation data base 17, these are represented by (pₓ, p_{y}, p_{z}, p_{φ}, p_{θ}, p_{ψ}). For example, as the value of p becomes greater, the suction force becomes greater, and in the case when, for example, a carpet or the like is to be cleaned, the suction force is set to a great value (for example, set to value "5") , while in the case when, for example, a tatami mat, a floor or the like is cleaned, the suction force is set to a small value (for example, set to value "2").

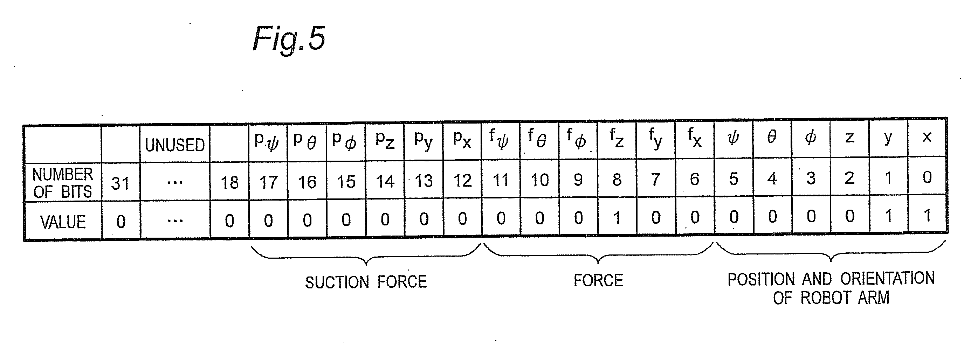

The information relating to the flag (flag indicating validity) that indicates which pieces of information among parameters of the position, orientation, force and suction force of the robot arm 5 are valid or invalid in the cleaning operation data base 17, that is, the flag information in the cleaning operation data base 17 of Fig. 4 corresponds to a value that indicates which pieces of information among the position, orientation, force and suction force of the robot arm 5 indicated by the respective operation IDs are valid, and more specifically, represented by a numeric value of 32 bits shown in Fig. 5. In Fig. 5, in the case when the respective values of the position, orientation, force, suction force at the respective bits are valid, this case is indicated by "1", and in the case when they are invalid, this case is indicated by "0". For example, at 0 bit, when the value in the x-coordinate of the position is valid, this state is represented by "1", when it is invalid, this state is represented by "0". At the first bit, when the value in the y-coordinate of the position is valid, this state is represented by "1", when it is invalid, this state is represented by "0". At the second bit, when the value in the z-coordinate of the position is valid, this state is represented by "1", when it is invalid, this state is represented by "0", and successively, the bits from the third, fourth and fifth bits indicate whether the respective components φ, θ, ψ of the orientation are valid or invalid. The bits from the 6-th bit to the 11-th bit indicate whether the respective components fₓ, f_{y}, f_{z}, f_{φ}, f_{θ}, f_{ψ} of the force are valid or invalid. The bits from the 12-thbit to the 17-thbit indicate whether the respective components pₓ, p_{y}, p_{z}, p_{φ}, p_{θ}, p_{ψ} of the suction force are valid or invalid. Moreover, since more bits (32 bits) are prepared for the flags for the future expansion, the bits from 8-th bit to 31-st bit are not used in this example so that "0" is put in each of them; however, only the 18-th bit may be used as a variable capable of storage. In Fig. 5, since the bits from 0 bit to 1-st bit are "1", and since the 8-th bit is "1", it is indicated that among pieces of operation information, only the x, y information of the position and the f_{z} information of the force are valid, and that, among pieces of operation information, even if any value is stored in each of the values except for z, φ, θ, ψ, and f_{z} of force and values of suction force, the corresponding value is defined as invalid.

Pieces of information relating to periods of time during which the respective operations in the cleaning operation data base 17 are executed, that is, the periods of time of the cleaning operation data base 17 of Fig. 4 correspond to periods of time required for executing the respective operations by the cleaning robot 1, and the operations stored in the operation IDs are carried out by the cleaning robot 1 for the periods of time stored therein. These periods of time are not the absolute time, but relative time from the previous operation. That is, the period of time represents each period of time during which, to the position of the main body 19 and the position and orientation of the robot arm 5, indicated by the operation ID, the main body 19 and the robot arm 5 are respectively moved.

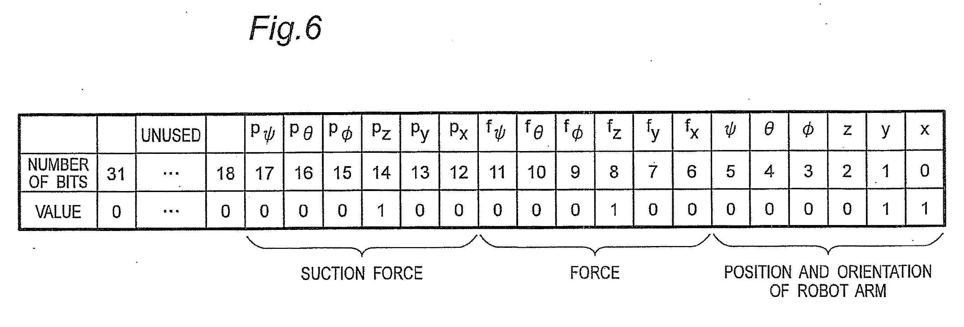

Pieces of information relating to the types of parameters to be corrected upon correcting the operation information of the cleaning operation data base 17 by the cleaning operation correcting unit 20 in the cleaning operation data base 17, that is, correcting parameter flags in Fig. 4, are information that represents which parameter should be corrected in response to the type determined by the correcting operation type determination unit 23, which will be described later. More specifically, these are indicated by numeric values of 32 bits shown in Fig. 6. In Fig. 6, in the case when the respective values of the position, orientation, force, and suction force at the respective bits can be corrected, this case is indicated by "1", and in the case when they cannot be corrected, this case is indicated by "0". For example, at 0 bit, when the value in the x-coordinate of the position can be corrected, this state is represented by "1", when it cannot be corrected, this state is represented by "0". At the 1-st bit, when the value in the y-coordinate of the position can be corrected, this state is represented by "1", when it cannot be corrected, this state is represented by "0". At the 2-nd bit, when the value in the z-coordinate of the position can be corrected, this state is represented by "1", when it cannot be corrected, this state is represented by "0". Successively, the 3-rd, 4-th and 5-th bits represent the possibility of correction of φ, θ, ψ in orientation. In the same manner, 6-th to 11-th bits represent the possibility of correction of force, and 12-th to 17-th bits represent the possibility of correction of each of components of suction force. Moreover, since more bits (32 bits) are prepared for the flags for the future expansion, the bits from 18-th bit to 31-st bit are not used in this example so that "0" is put in each of them; however, only the 18-th bit may be used as a variable capable of storage.

The progress information indicating whether or not the cleaner is currently in operation in the cleaning operation data base 17 is information that indicates whether or not the cleaning robot 1 is currently in operation, and in the case when it is currently in operation, this case is indicated by "1", and in the case when it is not in operation, this case is indicated by "0". More specifically, the person selects a cleaning job to be carried out through the data input IF 26, and the selected information is inputted to the operation selection unit 29 from the data input IF 26. When the first cleaning operation of the selected job is started by the cleaning robot 1, the operation selection unit 29 allows the cleaning operation data base 17 to store "1" for the operation that is being currently carried out among a plurality of operations forming the job, while it allows the cleaning operation data base 17 to store "0" for each of the operations that is not being currently carried out. Additionally, with respect to the information as to whether or not the cleaner is in operation, a notice indicating the completion of an operation instructed by the control unit 22 is inputted to the cleaning operation storage unit 15 through the cleaning operation correcting unit 20, and stored in the cleaning operation data base 17 by the cleaning operation storage unit 15.

When the person selects the best-suited cleaning job from a job list of the cleaning operation data base 17 (for example, among displayed jobs in the center of a cleaning switch 26c of Fig. 26, such as "cleaning method 1" and "cleaning method 2") through the data input IF 26, the operation selection unit 29 sets "1" in the progress information of the operation ID currently being carried out of the selected job, and this is stored in the cleaning operation data base 17, and also sets "0" therein of the other operations, and this is stored in the cleaning operation data base 17.

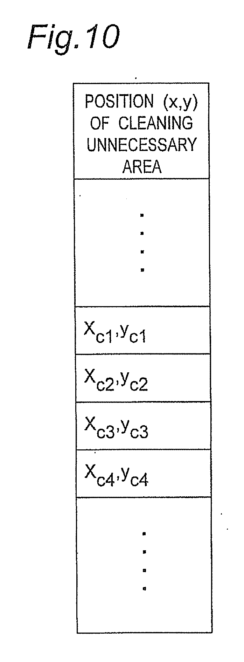

The cleaning unnecessary area data base 28 stores information relating to areas for which no cleaning operation by the cleaning robot 1 is required, and Fig. 10 shows specific pieces of information. In Fig. 10, the position (x, y) of the cleaning unnecessary area represents an area for which no cleaning operation by the cleaning robot 1 is required by the person. For example, of a cleaning possible surface R of Fig. 11, supposing that an area indicated by slanting lines is the cleaning unnecessary area RB, coordinates required for indicating the area RB (in this case, coordinates (x_{c1}, y_{c1}), (x_{c2}, y_{c2}), (x_{c3}, y_{c3}), (x_{c4}, y_{c4}) of four corners of a rectangular area) are stored. Additionally, the respective coordinates are indicated by relative coordinates from coordinates Oₛ from which the cleaning is started of an operation course in the cleaning area RA to be cleaned. The coordinates representing the cleaning unnecessary area RB are generated by the cleaning operation correcting unit 20, and stored in the cleaning unnecessary area data base 28.

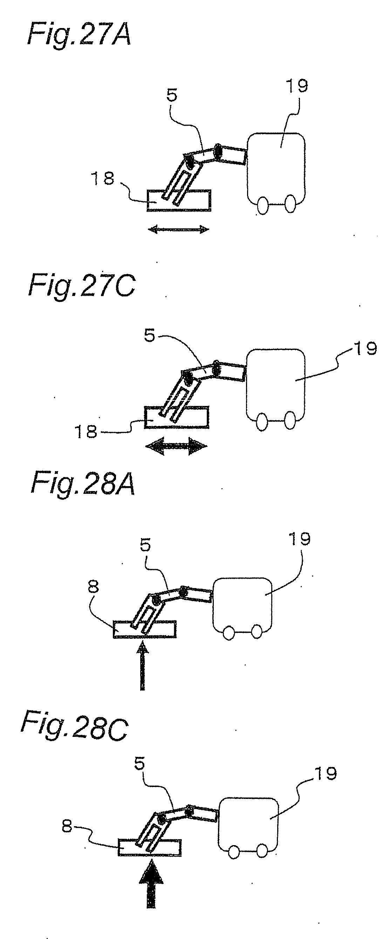

The correcting operation type determination unit 23 determines the type of correction, that is, the type of correction of the cleaning operation, that can be carried out by applying a force to the robot arm 5 with the human hand 16 in the cleaning operation correcting unit 20, which will be described later. For example, as shown in Fig. 12C, when the person applies a force to the robot arm 5 laterally by the hand 16, the position in a direction parallel to the cleaning surface of the robot arm 5 is moved (for example, horizontal direction in the case of the cleaning surface that is in parallel with the horizontal direction. For convenience of explanation, this direction is referred to simply as "horizontal direction" in the following description) so that the cleaning area RA can be parallel-shifted. In this case, the type of the correcting operation corresponds to "shift of the position on the cleaning surface". During a wiping operation on the floor surface 10 by the robot arm 5 as shown in Fig. 27A, when the person applies a downward force to the robot arm 5 from above the robot arm 5 with the hand 16, the degree of a force to be applied during the cleaning operation can be set to a stronger level as shown in Fig. 27C, by the cleaning operation correcting unit 20, which will be described later. In this case, the type of the correcting operation corresponds to "degree of applied force". In this manner, the correcting operation type determination unit 23 makes it possible to determine the type of correction of the cleaning operation based upon the degree of the applied force to the robot arm 5 by the human hand, the hand position of the robot arm 5 and the like. The detailed description thereof will be given later.

The cleaning operation correcting unit 20 has such a function that, based upon pieces of information relating to the position, orientation and time of the cleaning operation data base 17, the applied force to the robot arm 5 with the human hand 16 makes it possible to correct the cleaning operation information in the cleaning operation data base 17, during the cleaning operation of the cleaning robot 1. The detailed description thereof will be given later.

The cleaning operation storage unit 15 stores the operation information corrected by the cleaning operation correcting unit 20 in the cleaning operation data base 17 or the cleaning unnecessary area data base 28.

The following description will discuss the control parameter managing unit 21 in detail.

Based upon operation correcting instructions of the cleaning operation correcting unit 20, the control parameter managing unit 21 carries out settings for switching control modes among an impedance control mode of the robot arm 5, a hybrid impedance control mode, a force control mode, a force hybrid impedance control mode and a position control mode with high rigidity, settings of a mechanical impedance setting value at each of the respective control modes, settings of the hand position and orientation target correcting output r_{dΔ} outputted by the impedance calculation unit 51 of the control unit 22 in each of the control modes, and settings of operation information to be given to the target track setting unit 55 of the control unit 22.

Moreover, the control parameter managing unit 21 generates a cleaning course in the cleaning area RA from which the cleaning unnecessary area RB in the cleaning unnecessary area data base 28 is excluded based upon the position of the main body 19 stored in the cleaning information data base 17 (the origin position O_{d} (x, y) of the body coordinate system 46 viewed from the start point Oₛ in the operation course). Furthermore, upon receipt of pieces of information such as hand position information or force information of the robot arm 5 from the control unit 22, the control parameter managing unit 21 gives notices of such pieces of information to the cleaning operation correcting unit 20. Upon input of an open/close instruction of the hand 30 by the data input IF 26, the control parameter managing unit 21 transmits the input information from the data input IF 26 to the hand control unit 54 of the control unit 22 so that the open/close instruction of the hand 30 is given from the control parameter managing unit 21 to the hand control unit 54.

The position control mode is a mode in which, based upon the hand position and orientation target vector instructions of the target track generation unit 55, which will be described later, the robot arm 5 is actuated.

The impedance control mode is a mode in which, in response to a force to be applied to the robot arm 5 from a person or the like, the robot arm 5 is actuated.

The hybrid impedance control mode is a mode in which, during the robot arm 5 is operated in the position control mode, the robot arm 5 is actuated in response to a force applied to the robot arm 5 from a person or the like (impedance control mode), and corresponds to a mode in which the position control mode and the impedance control mode are simultaneously carried out. For example, during a cleaning job for sucking dusts and the like from the cleaning surface, the robot arm 5 is directly held by the human hand 16, as shown in Fig. 12B, so as to execute a correction such as a parallel shift of the cleaning area RA.

The force control mode is a control mode in which the robot arm 5 carries out a cleaning operation, with the suction nozzle 8 or the mop 18 being pushed against the cleaning surface based upon a force preliminarily given to the control unit 22, and this control mode is used for a cleaning face component of the robot arm 5, upon carrying out a wiping and cleaning operation of stains, with a certain force being applied to the cleaning surface by the robot arm 5.

The force hybrid impedance control mode is a control mode which makes a switch between the hybrid impedance control mode and the impedance control mode in each of the directions of the six axes, and further carries out an operation in the force control mode with a specified force being exerted thereon. Additionally, the impedance control mode is not set in the direction in which the force control mode has been set (the force control mode and the impedance control mode have mutually exclusive relationship).

Among these control modes, a suitable control mode is set and actuated respectively depending on the direction and the orientation of the robot arm 5 upon carrying out a cleaning operation, in the following manner.

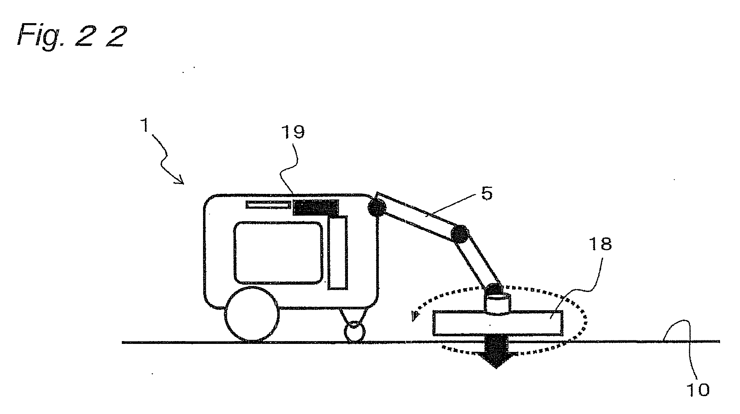

For example, in the case when the cleaning robot 1 carries out a wiping job while moving circularly in parallel with the cleaning surface of the floor surface 10 as shown in Fig. 22, with a specified force being applied downward perpendicularly to the cleaning surface, the force hybrid impedance control mode is set. More specifically, the following control modes are respectively set to the six axes of (x, y, z, φ, θ, ψ). That is, the force hybrid impedance control mode is set so that the (x, y) components are operated in the hybrid impedance control mode, the (φ, θ, ψ) components are operated in the impedance control mode and the z-axis component is operated in the force control mode. In this manner, in the direction in parallel with the floor surface 10, the hybrid impedance control mode is executedso that, even in the middle of an operation in the position control mode, the robot arm 5 can be moved in response to a force applied to the robot arm 5 by the person or the like. Moreover, with respect to the components (φ, θ, ψ), the impedance control mode is executed so that in response to a force applied to the robot arm 5 from the person or the like in a stopped state, the orientation of the robot arm 5 can be altered. Furthermore, by setting the force control mode with respect to the z-axis component, it is possible to carry out the operation in a pushed state by a specified force.

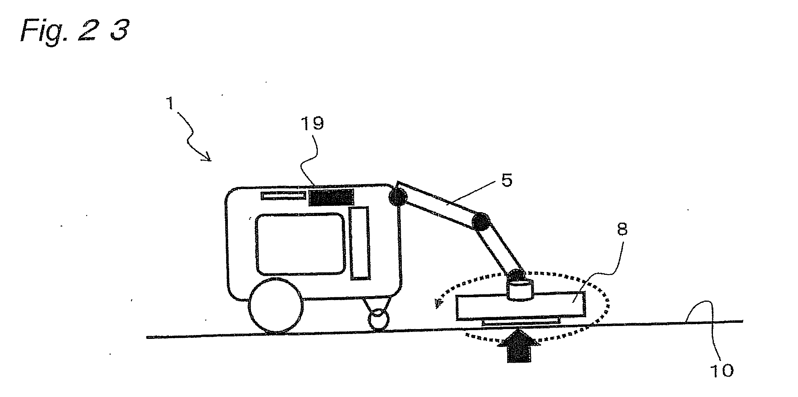

In the same manner, in the case when the cleaning robot 1 carries out a dust-suction cleaning process on the cleaning surface while moving circularly in parallel with the cleaning surface of the floor surface 10 as shown in Fig. 23, the force hybrid impedance control mode is also set. More specifically, the (x, y) components are operated in the hybrid impedance control mode, the (φ, θ, ψ) components are operated in the impedance control mode and the z-axis component is operated in the force control mode.

The high rigidity position control mode is a mode in which the position control mode during a cleaning operation is further allowed to have high rigidity, and this mode is achieved by increasing the gain in a positional error compensation unit 56, which will be described later, and the robot arm 5 is made not to be easily moved even upon application of a force onto the robot arm 5 by the human hand 16, so that by the amount of change in the hand position of the robot arm 5, the force applied by the human hand 16 can be detected by the force detection unit 53.

With respect to setting parameters for the mechanical impedance set values, inertia M, viscosity D and rigidity K are used. The settings of the respective parameters of the mechanical impedance set values are carried out by using correcting values, based upon the following evaluation expressions. $\begin{matrix}\left[Formula 1\right] \\ M = KM \times \left(correction value\right)\end{matrix}$ $\begin{matrix}\left[Formula 2\right] \\ D = KD \times \left(correction value\right)\end{matrix}$ $\begin{matrix}\left[Formula 3\right] \\ K = KK \times \left(correction value\right)\end{matrix}$

In the above-mentioned formulas (1) to (3), KM, KD and KK represent gains, and respectively correspond to certain constant values.

The control parameter managing unit 21 respectively outputs inertia M, viscosity D and rigidity K corresponding to the mechanical impedance parameters, calculated based upon the above-mentioned formulas (1) to (3), to the control unit 22.

In accordance with the above-mentioned formulas (1) to (3) , for example, when, in an attempt by the person to correct to move the area of the cleaning surface, as shown in Fig. 12C, the positional components and orientation components other than those of the x-axis and y-axis are easily moved, it becomes difficult to carry out the correcting operation. Therefore, with respect to only the positional components and orientation components other than those of the x-axis and y-axis, the control parameter managing unit 21 sets the aforementioned correction values to a higher level (more specifically, about 10 times higher than those set values) so that the viscosity D and rigidity K are set to be greater; thus, the resistant feeling or hardness is caused in the movements of the robot arm 5, with the result that the positional components and orientation components other than those of the x-axis and y-axis are made to hardly move.

Alternatively, another method is proposed in which, among the respective components of the hand position and orientation target correcting output r_{dΔ} outputted from the impedance calculation unit 51, which will be described later, all the values other than those of the x-axis and y-axis are set to be zero by the control parameter managing unit 21. With this arrangement, since parameters other than those of the x-axis and y-axis cannot bemovedby the human hand 16, it becomes possible to prevent an erroneous operation.

Moreover, the cleaning operation correcting unit 20 needs to be informed of the hand position and orientation of the robot arm 5 and information relating to the force applied thereto by the person (information relating to the human force exerted on the robot arm 5) by the control parameter managing unit 21. For this reason, when the control parameter managing unit 21 has received pieces of information relating to the hand position and force of the robot arm 5 from the control unit 22, the control parameter managing unit 21 gives the corresponding notices to the operation selection unit 29, the cleaning operation storage unit 15 and the cleaning operation correcting unit 20. Moreover, the control parameter managing unit 21 gives notices relating to pieces of operation information about the position, orientation, time and the like inputted from the cleaning operation correcting unit 20 to the control unit 22.

Fig. 7 shows a block diagram of the control unit 22. The control unit 22 carries out the operation in the control mode set by the control parameter managing unit 21, and in accordance with the control mode, also controls the mechanical impedance values of the robot arm 5 to mechanical impedance set values of the robot arm 5 that have been set based upon the set values of the inertia M, viscosity D and rigidity K. Moreover, in the case of a suction cleaning operation, the control unit 22 controls the rotary brush 11 to rotate, while carrying out the suction process by using a specified suction force. In the case of a wiping operation, the control unit 22 carries out a controlling process so as to push the cleaning surface by using a specified force. Moreover, the control unit 22 controls the paired wheels 6 disposed on the bottom of the main body 19 so as to move the main body 19 to a specified position.

Referring to Fig. 7, the following description will discuss the control unit 22 in detail.

The control unit 22 is designed to include a robot arm control unit 49 that respectively controls driving operations of motors 43 of the respective joint portions of the robot arm 5, a suction pump control unit 2 that controls the driving operation of the motor 67 of the suction pump 13, a rotary brush control unit 9 that controls the driving operation of the motor 69 of the rotary brush 11 and a wheel control unit 48 that controls the driving operations of the motor 65 of the wheels 6 of the main body 19. The robot arm control unit 49 is provided with the positional error calculation unit 50, the impedance calculation unit 51, the force detection unit 53 serving as one example of the force detection unit, the hand control unit 53, the target track generation unit 55, the positional error compensating unit 56, an approximation reverse kinematics calculation unit 57 and the forward kinematics calculation unit 58. The positional error compensating unit 56, the approximation reverse kinematics calculation unit 57 and the forward kinematics calculation unit 58 are allowed to form a position control system 59.

The following description will discuss the robot arm control unit 49 in detail.

From the robot arm 5, current value (joint angle vectors) vectors q = [q₁, q₂, q₃, q₄, q₅, q₆]^{T}, measured by the encoder 44 of the joint axis of each of the joint portions, are outputted, and received by the control unit 22 through the input/output IF 24. In this case, q₁, q₂, q₃, q₄, q₅ and q₆ respectively correspond to the joint angles of the first joint portion 35, the second joint portion 36, the third joint portion 37, the fourth joint portion 38, the fifth joint portion 39 and the sixth joint portion 40.

The target track generation unit 55 receives the input of a cleaning operation from the control parameter managing unit 21, and outputs hand position and orientation target vector r_{d}, force vector f_{d} of the hand and a flag (flag indicating validity) that shows which parameter is valid in each of the directions, in order to achieve the target operation of the robot arm 5. Depending on necessary cleaning jobs, the target operation of the robot arm 5 is given to the target track generation unit 55 from the cleaning operation correcting unit 20 through the control parameter managing unit 21 as pieces of information including the position and orientation information (r_{d0}, r_{d1}, r_{d2}, .... ), force information (f_{d0}. f_{d1}, f_{d2}, ....) and suction force information (p_{d0}, p_{d1}, p_{d2}, ....) at each point of time (t = 0, t = t₁, t t₂, ....).

By using the polynomial interpolation, the target track generation unit 55 interpolates the tracks between the respective points, the force and the suction force so that the hand position and orientation target vector r_{d}, the force vector f_{d} and the suction force p_{d} are generated.

Based upon the hand open/close instruction inputted from the control parameter managing unit 21, the hand control unit 54 gives instructions to the hand driving motor 62 of the robot arm 5 so as to drive the hand driving motor 62 to open/close the hand 30.

The force detection unit 53, which functions as one example of the force detection unit, detects an external force to be applied to the robot arm 5 by the contact between the person or the like and the robot arm 5. The force detection unit 53 receives a current value i = [i₁, i₂, i₃, i₄, i₅, i₆]^{T} that is measured by the current sensor of a motor driver 47, and flows through the motor 43 driving each of the joint portions of the robot arm 5, through the input/output IF 24, and also receives the current value q of each of the joint angles of the respective joint portions through the input/output IF 24, as well as receiving a joint angle error compensating output u_{qe} from the approximation reverse kinematics calculation unit 57, which will be described later. The force detection unit 53, which functions as an observer, calculates a torque τₑₓₜ that is generated in each of the joint portions by an external force applied to the robot arm 5, based upon the above-mentioned current value i, the present value q of each joint angle and the joint angle error compensating output u_{qe}. Moreover, it further converts the torque to an equivalent hand external force Fₑₓₜ in the hand of the robot arm 5 based upon a formula, Fₑₓₜ = Jᵥ(q)^{-T}τₑₓₜ - [0, 0, mg]^{T}, and outputs the resulting value. In this case, Jᵥ (q) is a Jacob matrix that satisfies the following formula: $v = Jv \left(q\right) ⁢ \dot{q}$ where v = [vₓ, v_{y}, v_{z}, ωₓ, ω_{y}, ω_{z}]^{T}, and (vₓ, v_{y}, v_{z}) represents a translational velocity of the hand of the robot arm 5 in the hand coordinate system 42, while (ωₓ, ω_{y}, ω_{z}) represents an angular velocity of the hand of the robot arm 5 in the hand coordinate system 42. Moreover, m represents a weight of a cleaning unit 8, 18 attached to the hand 30 of the robot arm 5, and g represents the gravitational acceleration. The value of the weight m of the cleaning unit 8, 18 may be inputted to the force detection unit 53 by the person from the data input IF 26 prior to attaching the cleaning unit 8, 18, or normally, may be set to predetermined value because the weight m of the cleaning unit 8, 18 is not a value that is often altered.

The impedance calculation unit 51 is a unit that has a function for achieving controls of the mechanical impedance values of the robot arm 5 to the mechanical impedance set values.

When the impedance control mode is specified, the impedance calculation unit 51 outputs a hand position and orientation target correcting output r_{dΔ}. In the case when, upon switching to the force hybrid impedance control mode, there is a force component that is specified as valid by the flag (flag indicating the validity), based upon the inertia M, viscosity D and rigidity K that are impedance parameters set by the control parameter managing unit 21, the present value q of the joint angle, the external force Fₑₓₜ detected by the force detection unit 53 and f_{d} outputted from the target track generation unit 55, the impedance calculation unit 51 calculates the hand position and orientation target correcting output r_{dΔ} used for achieving controls of the robot arm 5 so as to allow the mechanical impedance value of the robot arm 5 to approach the mechanical impedance set value, based upon the following formula (4), and the resulting value is outputted from the impedance calculation unit 51.

The hand position and orientation target correcting output r_{dΔ} is added to the hand position and orientation target correcting vector r_{d} outputted from the target track generation unit 55, in the positional error calculation unit 50, so that a hand position and orientation correction target vector r_{dm} is generated by the positional error calculation unit 50. For example, in order to carry out a cleaning process with a pressure being applied only in the z-axis direction, while the components other than the z-component are allowed to move in the position control mode, the positional error calculation unit 50 sets components other than the z-component of the hand position and orientation target correcting output r_{dΔ} to 0. $\begin{matrix}\left[Formula 5\right] \\ {r}_{d ⁢ Δ} = {\left({s}^{2}⁢\hat{M}+s⁢\hat{D}+\hat{K}\right)}^{- 1} ⁢ \left({F}_{ext}-{f}_{d}\right)\end{matrix}$

In this formula, the following formulas (5), (6) and (7) are satisfied. $\begin{matrix}\left[\begin{matrix}Formula 6\end{matrix}\right] \\ \hat{\begin{matrix}M\end{matrix}} = \left[\begin{matrix}M & 0 & 0 & 0 & 0 & 0 \\ 0 & M & 0 & 0 & 0 & 0 \\ 0 & 0 & M & 0 & 0 & 0 \\ 0 & 0 & 0 & M & 0 & 0 \\ 0 & 0 & 0 & 0 & M & 0 \\ 0 & 0 & 0 & 0 & 0 & M\end{matrix}\right]\end{matrix}$ $\begin{matrix}\hat{D} = \left[\begin{matrix}D & 0 & 0 & 0 & 0 & 0 \\ 0 & D & 0 & 0 & 0 & 0 \\ 0 & 0 & D & 0 & 0 & 0 \\ 0 & 0 & 0 & D & 0 & 0 \\ 0 & 0 & 0 & 0 & D & 0 \\ 0 & 0 & 0 & 0 & 0 & D\end{matrix}\right]\end{matrix}$ $\begin{matrix}\left[\begin{matrix}Formula 8\end{matrix}\right] \\ \hat{K} = \left[\begin{matrix}K & 0 & 0 & 0 & 0 & 0 \\ 0 & K & 0 & 0 & 0 & 0 \\ 0 & 0 & K & 0 & 0 & 0 \\ 0 & 0 & 0 & K & 0 & 0 \\ 0 & 0 & 0 & 0 & K & 0 \\ 0 & 0 & 0 & 0 & 0 & K\end{matrix}\right]\end{matrix}$ Moreover, in this formula, s represents a Laplace operator.

To the forward kinematics calculation unit 58 is inputted the joint angle vector q corresponding to the current value q of the joint angle measured by the encoder 44 of a joint axis of each of the joint portions and sent from the robot arm 5 through the input/output IF 24 so that the forward kinematics calculation unit 58 carries out geometrical calculations so as to convert the joint angle vector q of the robot arm 5 to the hand position and orientation vector r.

The hand position and orientation target correcting output r_{dΔ} is added to the hand position and orientation target correcting vector r_{d} outputted from the target track generation unit 55, in the positional error calculation unit 50, so that a hand position and orientation correction target vector r_{dm} is generated by the positional error calculation unit 50. Moreover, an error rₑ between the hand position and orientation vector r, calculated by the forward kinematics calculation unit 58 from the joint angle vector q measured in the robot arm 5, and the hand position and orientation correcting target vector r_{dm} is outputted from the positional error calculation unit 50.

The error rₑ is inputted to the positional error compensation unit 56 from the positional error calculation unit 50 so that the positional error compensation unit 56 finds a positional error compensation output uᵣₑ from the error rₑ, and the positional error compensation output uᵣₑ is outputted toward the approximation reverse kinematics calculation unit 57 from the positional error compensation unit 56.

In the approximation reverse kinematics calculation unit 57, based upon an approximation uₒᵤₜ = Jᵣ (q)⁻¹uᵢₙ, approximation calculations of reverse kinematics are carried out. In this case, Jᵣ(q) is a Jacob matrix that satisfies the following formula: ${r}^{.} = {J}_{r} \left(q\right) ⁢ {q}^{.}$ where uᵢₙ is an input to the approximation reverse kinematics calculation unit 57, and uₒᵤₜ is an output from the approximation reverse kinematics calculation unit 57, and supposing that the input uᵢₙ corresponds to the joint angle error qₑ, a conversion formula, qₑ = Jᵣ(q))⁻¹re, from the hand position and orientation error rₑ to the joint angle error qₑ, is obtained. Therefore, when the positional error compensation output uᵣₑ is inputted to the approximation reverse kinematics calculation unit 57, the joint angle error compensation output u_{qe} used for compensating for the joint angle error qₑ is outputted from the approximation reverse kinematics calculation unit 57.

The joint angle error compensation output u_{qe} that has been outputted from the approximation reverse kinematics calculation unit 57 is given to the motor driver 25 as a voltage instruction value through the input/output IF 24, and each of the joint axes is forwardly/reversely driven by the motor 43 so that the robot arm 5 is operated.

In the case when the high rigidity position control mode is set, by preliminarily setting three gains of proportional, differential and integral gains that are diagonal matrixes of a constant to greater values (more specifically, set to values about two times larger than those in the normal position control mode), it is possible to achieve a position controlling operation with high rigidity. Additionally, by altering the gain value for each of the components, for example, it is possible to allow only the z-axis direction to be controlled with high rigidity, with the other directions being subjected to normal position controls.

Upon carrying out a suction cleaning operation, the suction pump control unit 2 drive-controls the motor 67 of the suction pump 13 in accordance with a suction force inputted from the target track generation unit 55. Upon carrying out a cleaning operation with wiping jobs, the motor 67 of the suction pump 13 is not driven. When the motor 67 of the suction pump 13 is driven, dusts on the cleaning surface are sucked through the suction hose 12, and stored in a dust bag 3.

In response to the suction force inputted from the target track generation unit 55, the rotary brush control unit 9 drive-controls the rotary brush 11 so that the rotary brush 11 is rotated.

Based upon the positional information of the main body 19 inputted from the target track generation unit 55, the wheel control unit 48 drive-controls the motors 65 of the paired wheels 6 so that the paired wheels are controlled to rotate so as to move the main body 19. More specifically, the driving operations of the respective motors 65 of the paired wheels 6 are forwardly/reversely rotation-controlled independently by the wheel control unit 48 so that the main body 19 is allowed to move forward and backward as well as in lateral directions. Additionally, in Fig. 1 and the like, only a pair of wheels 6 are illustrated in a simplified manner; however, by not only fixing the rotation axes of the paired wheels 6 laterally in a direction orthogonal to the forward/backwardmoving direction, as shown in Fig. 1, but also rotating the rotation axes of the paired wheels 6 along the forward/backward moving direction and then forwardly/reversely rotating the rotation axes so as to move the main body 19 in lateral directions; thus, these moving operations can be obtained. Moreover, by preliminarily preparing another pair of wheels used for driving in lateral directions, the driving operation may be switched between those and the paired wheels 6 used for driving forward and backward. Known mechanisms may be adopted on demand with respect to these driving mechanisms.

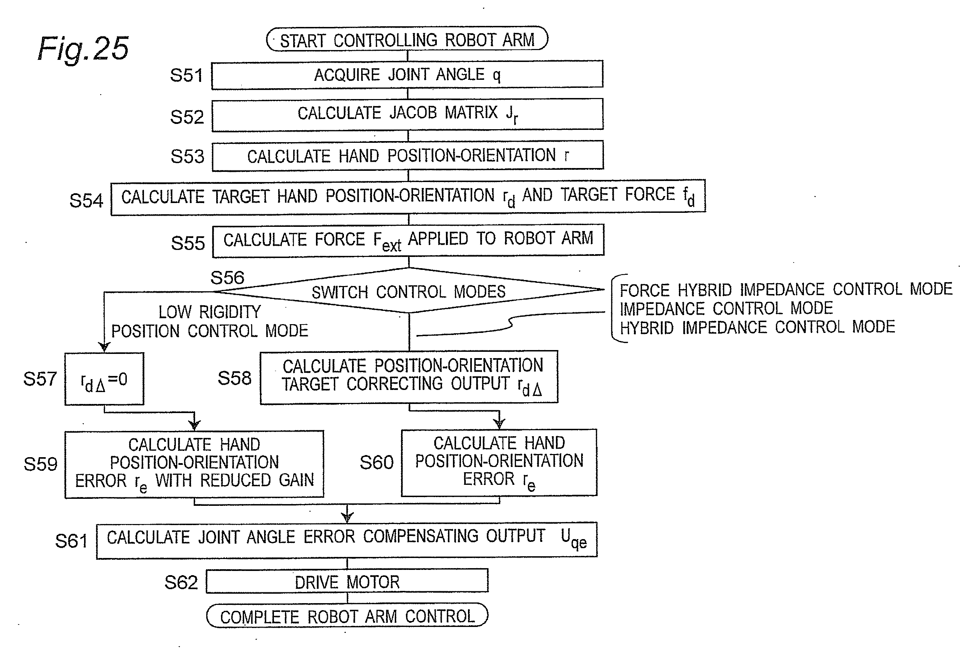

Referring to a flow chart of Fig. 25, the following description will discuss actual operation steps in a robot arm control program of the robot arm 5.

Joint angle data (joint variable vector or joint angle vector q), measured by the encoder 44 of each of the joint portions of the robot arm 5 are received by the control device main body 45 (step S51).

Next, the reverse kinematics calculation unit 57 calculates the Jacob matrix Jᵣ and the like required for kinematics calculations of the robot arm 5 (step S52).

Next, the forward kinematics calculation unit 58 calculates the current hand position and orientation vector r of the robot arm 5 from the joint angle data (joint angle vector q) from the robot arm 5 (step S53).

Based upon operation information transmitted from the cleaning operation correcting unit 20, the target track calculation unit 55 calculates the hand position and orientation target vector r_{d} and the force target vector f_{d} of the robot arm 5 (step S54).

Next, the force detection unit 53 calculates the equivalent hand external force Fₑₓₜ in the hand of the robot arm 5 from the driving current value i of the motor 43, the joint angle data (joint angle vector q) and the joint angle error compensation output u_{qe} (step S55).

Next, in step S56, the control mode that has been determined by the control parameter managing unit 21 is set. In the case when only the high rigidity position control mode exists, the sequence proceeds to step S57. In contrast, in the case when the force hybrid impedance control mode, or the impedance control mode, or the hybrid impedance control mode exists, the sequence proceeds to step S58.

In step S57 (processes in the impedance calculation unit 51), in the case when the high rigidity position control mode is set by the control parameter managing unit 21, the impedance calculation unit 51 sets the hand position and orientation target correcting output r_{dΔ} to 0 vector. Then, the sequence proceeds to step S59.

In the case when, in the control parameter managing unit 21, the force hybrid impedance control mode, or the impedance control mode, or the hybrid impedance control mode is set, based upon the inertia M, viscosity D and rigidity K that are mechanical impedance parameters set in the control parameter managing unit 21, thejointangledata (jointanglevectorq), and the equivalent hand external force Fₑₓₜ to be applied to the robot arm 5 calculated by the force detection unit 53, the hand position and orientation target correcting output r_{dA} is calculated by the impedance calculation unit 51 (step S58).

Next, the positional error calculation unit 50 calculates the hand position and orientation correction target vector r_{dm} that is a sum of the hand position and orientation target vector r_{d} and the hand position and orientation target correcting output r_{dA} as well as the hand position and orientation error rₑ that is a difference between the current hand position and the orientation vector r (step S59, step S60). In step S60, a PID compensator is proposed as a specific example of the positional error compensation unit 56. By appropriately adjusting the three gains of proportional, differential and integral gains that are diagonal matrixes of a constant, the positional error is controlled to be converged to 0. In step S59, by increasing the gain to a certain value, it is possible to achieve a position controlling operation with high rigidity.

In succession to step S59 or step S60, in step S61, the approximation reverse kinematics calculation unit 57 multiplies the positional error compensation output uᵣₑ by the reverse matrix of the Jacob matrix Jᵣ calculated in step S52 so that the positional error compensation output uᵣₑ is converted from the value relating to the error of the hand position and orientation to a joint angle error compensation output u_{qe} that is the value relating to the error of joint angle in the approximation reverse kinematics calculation unit 57.

Next to step S61, the joint angle error compensation output uᵣₑ is given from the approximation reverse kinematics calculation unit 57 to the motor driver 25 through the input/output IF 24 so that by changing the amount of an electric current flowing through each of the motors 43, the rotation movement of each of the joint axes of the robot arm 5 is generated (step S62).

By repeatedly executing the above-mentioned steps S51 to S62 as a calculation loop of the control, the controlling operations of the robot arm 5, that is, the controlling operations for setting the mechanical impedance values of the robot arm 5 to the appropriately set values, can be achieved.

The following description will discuss the correcting operation type determination unit 23 and the cleaning operation correcting unit 20 in detail.

The correcting operation type determination unit 23 determines a type of a correction that can be carried out in the cleaning operation by applying a force to the robot arm 5 by the human hand 16 in the cleaning operation correcting unit 20. The following seven types of corrections are available.

The first type of correction is "a positional shift on the cleaning surface". More specifically, as shown in Fig. 12A or Fig. 12B (drawing obtained by viewing Fig . 12A from above), during a cleaning operation on the floor surface 10 in the position control mode by the robot arm 5, when a force is applied to the robot arm 5 laterally by the human hand 16 as shown in Fig. 12C, the position of the robot arm 5 in the horizontal direction relative to the cleaning surface is shifted by the cleaning operation correcting unit 20 as shown in Fig. 12D so that the cleaning area RA can be parallel-shifted.

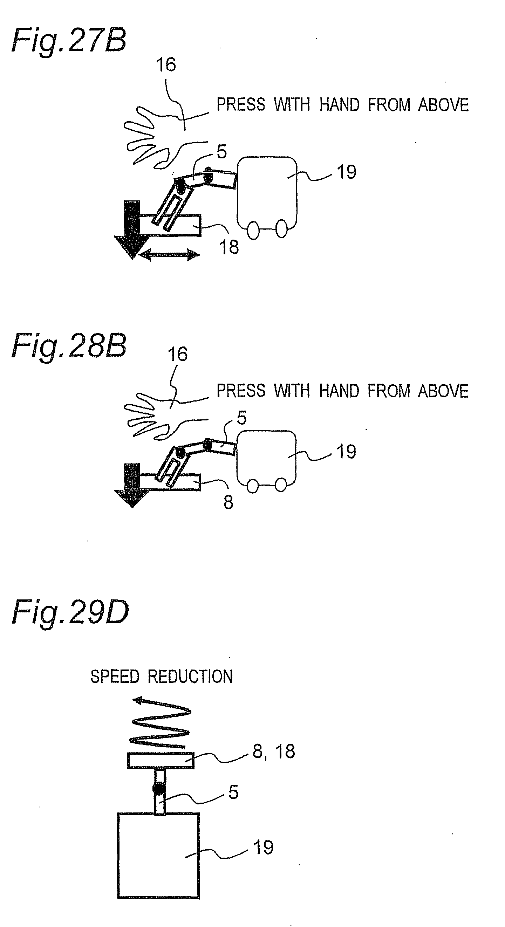

The second type of correction is "a degree of force to be applied" to the floor surface 10 upon carrying out a wiping operation thereon. This correction is valid, in the case when the force bit is "1", with an operation flag (flag indicating validity) of "1" that indicates being currently in operation (progress information in the cleaning operation data base 17 is "1"). As shown in Fig. 27A, during a wiping operation on the floor surface 10 by the robot arm 5, when a force is applied to the robot arm 5 downward from above by the human hand 16 as shown in Fig. 27B, the degree of the applied force upon wiping is increased as shown in Fig. 27C by the cleaning operation correcting unit 20; in contrast, when a force is applied to the robot arm 5 upward from below, the degree of the applied force upon wiping can be corrected to a weaker level.

The third type of correction is "a suction force" of a suction cleaning operation on the floor surface 10. This correction is valid, in the case when the suction force bit is "1", with an operation flag (flag indicating validity) that indicates being currently in operation (progress information in the cleaning operation data base 17 is "1"). As shown in Fig. 28A, during a suction cleaning operation on the floor surface 10 by the robot arm 5, when a force is applied to the robot arm 5 downward from above by the human hand 16 as shown in Fig. 28B, the degree of the suction force upon suction-cleaning operation is set to a higher level as shown in Fig. 28C by the cleaning operation correcting unit 20 ; in contrast, when a force is applied to the robot arm 5 upward from below, the degree of the suction force upon suction-cleaning operation canbe corrected to a lower level.

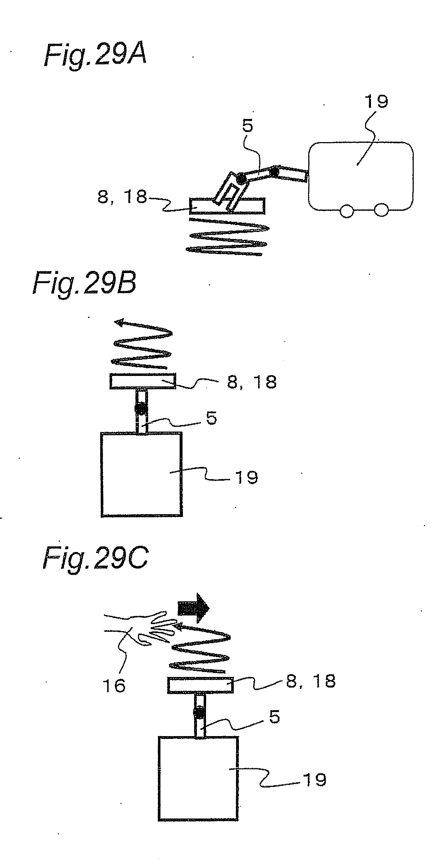

The fourth type of correction relates to a shifting "speed" of the hand (cleaning unit 8, 18) of the robot arm 5. As shown in Fig. 29A or Fig. 29B (drawing obtained by viewing Fig. 29A from above), during a cleaning operation on the floor surface 10 by the robot arm 5, when a force is applied to the robot arm 5 in a direction reversed to the proceeding direction of the robot arm 5 by the human hand 16 as shown in Fig. 29C, the speed upon cleaning can be reduced by the cleaning operation correcting unit 20 as shown in Fig. 29D. In contrast, during a cleaning operation on the floor surface 10 by the robot arm 5, when a force is applied to the robot arm 5 by the human hand 16 in accordance with the proceeding direction of the robot arm 5, the speed upon cleaning can be increased by the cleaning operation correcting unit 20.

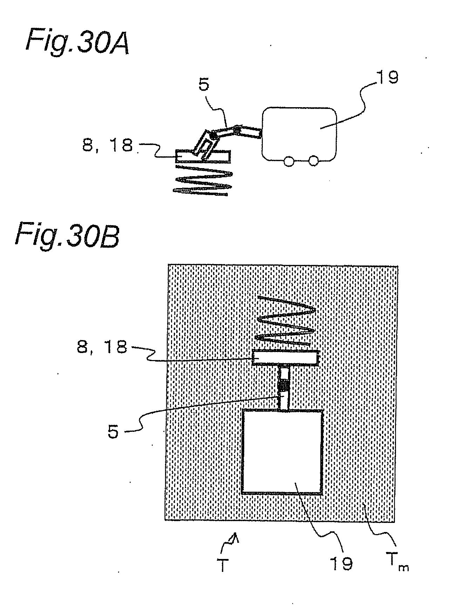

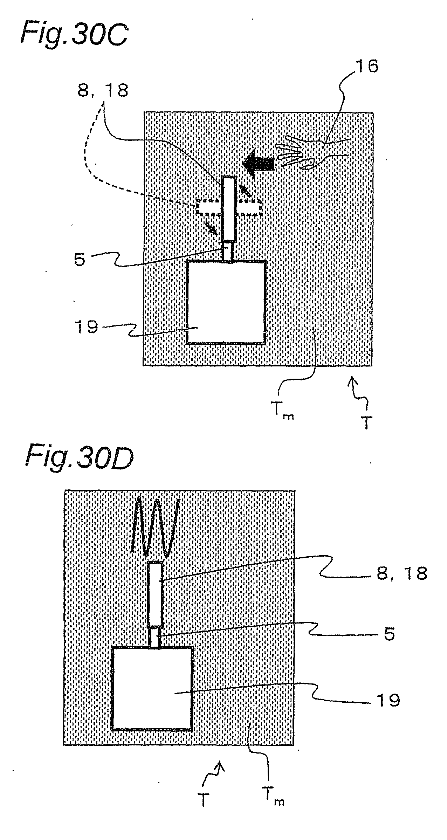

The fifth type of correction relates to "alternation of the direction (orientation)". As shown in Fig. 30A or Fig. 30B (drawing obtained by viewing Fig. 30A from above), during a cleaning operation on the floor surface 10 by the robot arm 5, when a force is applied to the robot arm 5 by the human hand 16 in an attempt to change the proceeding direction to a zigzag direction, as shown in Fig. 30C, with the position being altered so as to make the longitudinal direction of the cleaning unit 8, 18 coincident with lines Tm of a tatami mat, the proceeding direction of the robot arm 5 upon cleaning can be altered by the cleaning operation correction unit 20, as shown in Fig. 30D. This can be achieved by altering the orientation (φ, θ, ψ) of the hand (cleaning unit 8, 18) of the robot arm 5.

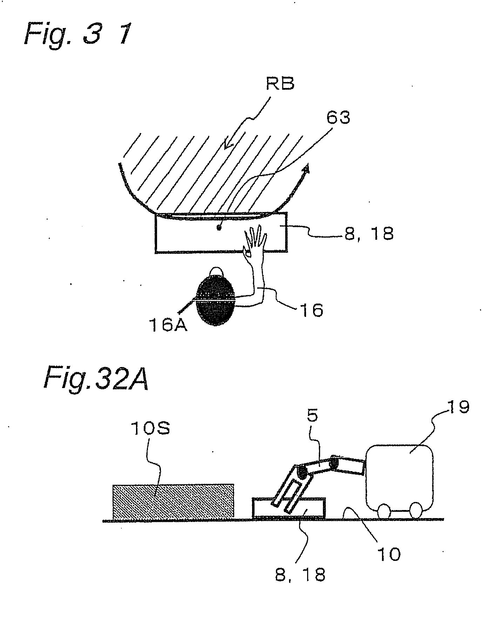

The sixth type of correction relates to "an area in which cleaning is unnecessary". As shown in Fig. 31, the robot arm 5 is grabbed by the hand 16 of the person 16A, and when a force is applied to the robot arm 5 (cleaning unit 8, 18) so that the robot arm 5 is moved along an outline of an area RB in which cleaning is unnecessary; thus, the area RB in which cleaning is unnecessary can be set by the cleaning operation correcting unit 20, as shown in Fig. 31.

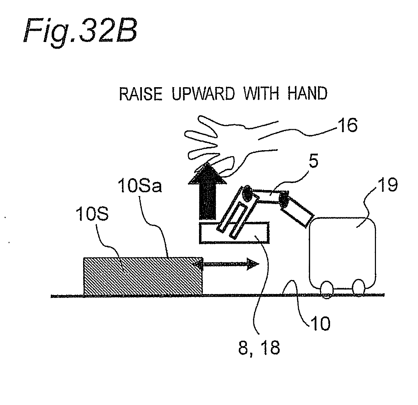

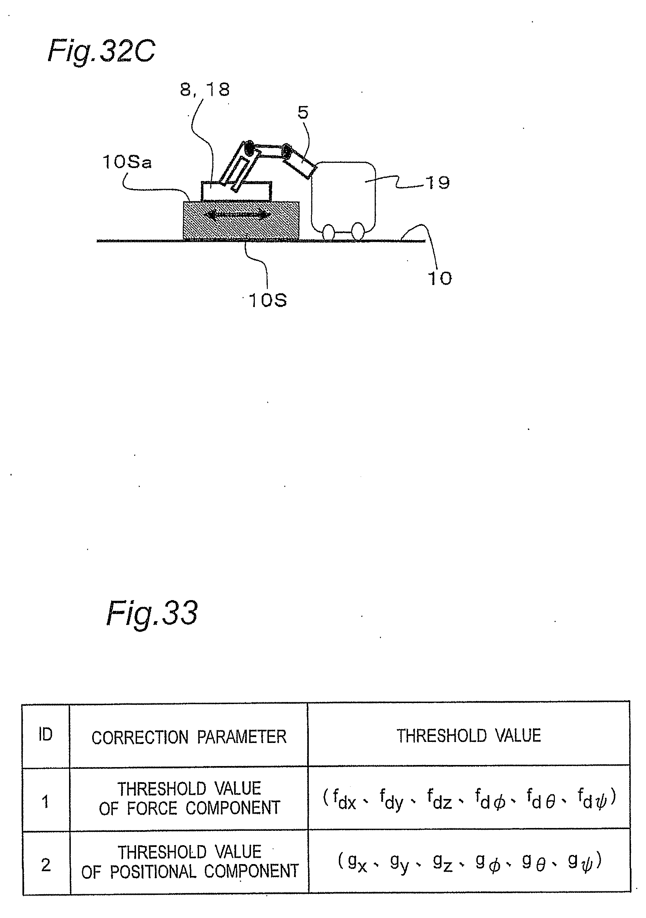

The seventh type of correction relates to "a shift of the cleaning surface in the vertical direction". As shown in Fig. 32A, during a cleaning operation on the floor surface 10 by the robot arm 5, when a force is applied to the robot arm 5 upward by the human hand 16 as shown in Fig. 32B to move the robot arm 5 upward, the cleaning operation correcting unit 20 allows the cleaning unit 8, 18 to clean a top face 10Sa of a stool, a sofa 10S or the like placed on the floor surface 10, for example, as shown in Fig. 32C.

The correcting operation type determination unit 23 determines one kind of correction type among the above-mentioned seven kinds of correction types. More specifically, one kind of correction type is selected among the seven kinds of correction types by using a data input IF 26 such as a button, or based upon the force applied by the human hand 16 to the robot arm 5, detected by the force detection unit 53 and acquired by an information acquiring unit 100, the force applied to the robot arm 5, stored in the cleaning operation data base 17 and acquired by the information acquiring unit 100 and information related to the types of correction (for example, information related to the direction and the size of the applied force and the types of correction), the correcting operation type determination unit 23 estimates the type of correction.

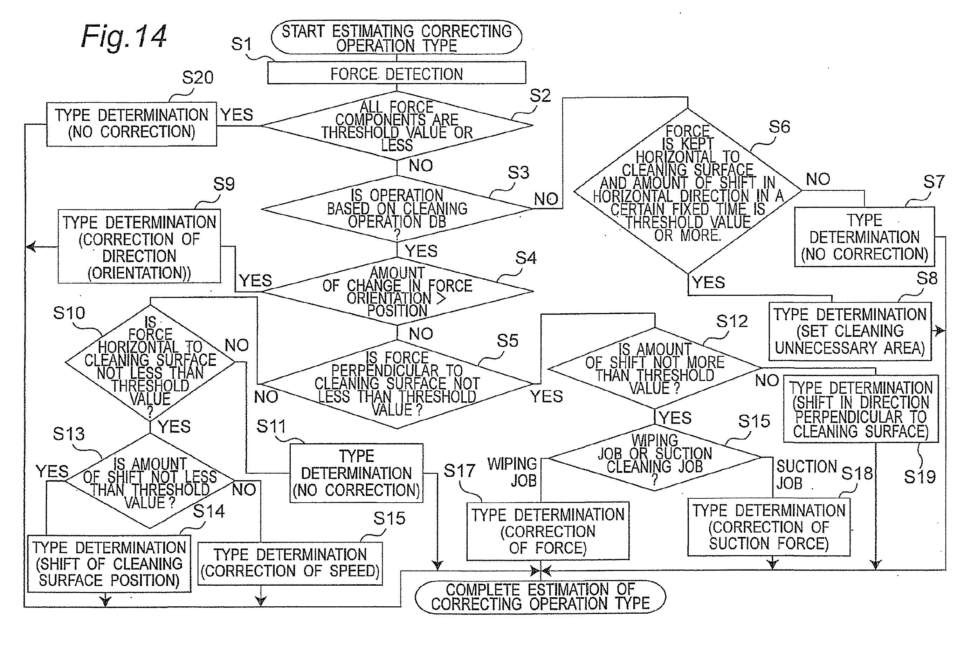

Referring to a flow chart of Fig. 14, the following description will discuss a specific correction type estimating process of the estimation method for the type of correction in detail.

In the case when, with the power supply button 26a of the cleaning robot 1 turned "ON", the robot arm 5 is grabbed by the human hand 16 with no force being applied to the robot arm 5, the robot arm 5 is not moved. In the case when a force is applied to the robot arm 5 by the human hand 16, in the impedance control mode (mode in which it is moved in a direction in which the force of the human hand 16 is detected by the impedance control) the robot arm 5 can be moved in a desired direction. In this case, the force exerted on the robot arm 5 is detected by the force detection unit 53 of the control unit 22, and the information of the force detected by the force detection unit 53 is inputted to the correcting operation type determination unit 23 through the information acquiring unit 100 (step S1).

Next, in step S2, the correcting operation type determination unit 23 determines whether or not all the components of the force (six components including fₓ, f_{y}, f_{z}, f_{φ}, f_{θ} and f_{ψ}) detected by the force detection unit 53 and acquired by the information acquiring unit 100 are equal to or less than a certain threshold value (more specifically, (f_{dx}, f_{dy}, f_{dz}, f_{dφ}, f_{dθ}, f_{dψ}) of ID "1" of Fig. 33.). In the case when the correcting operation type determination unit 23 has determined that all the components of the force (six components including fₓ, f_{y}, f_{z}, f_{φ}, f_{θ} and f_{ψ}) detected by the force detection unit 53 and acquired by the information acquiring unit 100 are equal to or less than the certain threshold value, the robot arm 5 is not allowed to move, with no correction being made (steep S20), thereby completing the correction type estimating process of the type estimating method for the correcting operation. The control mode in this case is the impedance control mode.

In step S2, in the case when the correcting operation type determination unit 23 has determined that any of the components (any of the six components including fₓ, f_{y}, f_{z}, f_{φ}, f_{θ} and f_{ψ}) of the force detected by the force detection unit 53 and acquired by the information acquiring unit 100 exceed the certain threshold value (more specifically, (f_{dx}, f_{dy}, f_{dz}, f_{dφ}, f_{dθ}, f_{dψ}) of ID "1" of Fig. 33.), the sequence proceeds to step S3.

In step S3, the correcting operation type determination unit 23 further determines whether or not the current cleaning robot 1 is being operated in the cleaning operation data base 17, based upon information acquired through the information acquiring unit 100. More specifically, in the case when the correcting operation type determination unit 23 has determined that the cleaning operation is not selected in the operation selection unit 29, and with respect to all the job IDs of the cleaning operation data base 17, the progress information is set to "0", (state in which no cleaning operation is started), the correcting operation type determination unit 23 has determined that no operation is carried out in the cleaning operation data base 17 so that the sequence proceeds to step S6. In the case when the correcting operation type determination unit 23 has determined that the cleaning operation is selected in the operation selection unit 29 and the cleaning operation is being carried out, with the progress information being set to "1", the correcting operation type determination unit 23 determines that the cleaning operation data base 17 is currently in operation so that the sequence proceeds to step S4.

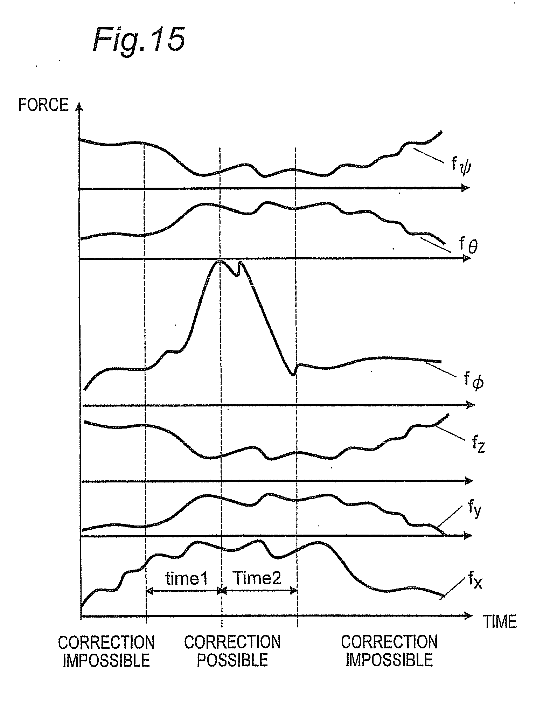

In step S4, when a force is applied to the robot arm 5 in a direction toward which the cleaning operation of the robot art 5 is corrected, with the robot arm 5 being grabbed by the human hand 16, the force detection unit 53 detects the force applied to the robot arm 5, and the correcting operation type determination unit 23 measures an amount of change in a certain fixed period of time of each of the components (fₓ, f_{y}, f_{z}, f_{φ}, f_{θ}, f_{ψ}) of the force detected by the force detection unit 53 and acquired by the information acquiring unit 100, and the correcting operation type determination unit 23 further measures which amount of change is larger, the positional components (fₓ, f_{y}, f_{z}) or the orientation components (f_{φ}, f_{θ}, f_{ψ}). More specifically, as shown in Fig. 15, the correcting operation type determination unit 23 measures a force in time series of each of the components (fₓ, f_{y}, f_{z}, f_{φ}, f_{θ}, f_{ψ}) and the correcting operation type determination unit 23 further measures how much change is made for a certain fixed period of time (for example, time 1) by each of the components of the force so that the correcting operation type determination unit 23 finds the component having the largest change. In this example, since the change in f_{φ} is largest, the correcting operation type determination unit 23 has determined that the orientation components exert a force larger than that of the positional component so that the sequence proceeds to step S9.

In the case when, in step S4, the correcting operation type determination unit 23 has determined that the amount of change in the orientation is larger than the amount of change in the position, the correcting operation type determination unit 23 determines that the type of correction corresponds to "alternation in direction (orientation)", thereby completing the correction type estimating process (step S9) . The control mode in this case is the same control mode (force hybrid impedance control mode) as that before the determination of the type of correction.

On the other hand, in the case when, in step S4, the correcting operation type determination unit 23 has determined that the amount of change in the position is equal to or larger than the amount of change in the orientation, the correcting operation type determination unit 23 further determines whether or not the force component in a direction perpendicular to the cleaning surface (for example, f_{z} in the case of cleaning the floor surface 10 placed horizontally along the ground) is equal to or larger than a certain threshold value (more specifically, f_{dz} of ID "1" of Fig. 33) (step S5).

In the case when, in step S5, the correcting operation type determination unit 23 has determined that the force component in a direction perpendicular to the cleaning surface is less than the certain threshold value, the correcting operation type determination unit 23 further determines whether or not the force component in a direction horizontal to the cleaning surface (for example, either fₓ or f_{y}, or both of them in the case of cleaning the floor surface 10 placed horizontally along the ground) is equal to or larger than a certain threshold value (more specifically, f_{dx} or f_{dy} of ID "1" of Fig. 33) (step S10).

In the case when, in step S10, the correcting operation type determination unit 23 has determined that the force component in a direction horizontal to the cleaning surface is less than a certain threshold value (more specifically, fₓ or f_{y} of ID "1" of Fig. 33), it is determined that no correction is made (no type is selected), thereby completing the correction type estimating process (step S11). When no correction is made, the correcting operation is suspended, and the cleaning operation is carried out.

In the case when, in step S10, the correcting operation type determination unit 23 has determined that the force component in a direction horizontal to the cleaning surface is equal to or larger than the threshold value, the sequence proceeds to step S12.

In step S12, in the case when the correcting operation type determination unit 23 has further determined that the amount of shift in the horizontal direction on the cleaning surface calculated by the correcting operation type determination unit 23 is equal to or larger than a certain threshold value (more specifically, gₓ or gyof ID "2" of Fig. 33), the type of correction is determined as "shift of the position on the cleaning surface" by the correcting operation type determination unit 23, thereby completing the correction type estimating process (step S14).

Additionally, in the case when the correcting operation type determination unit 23 calculates the amount of shift in the horizontal direction on the cleaning surface, more specifically, the hand position of the robot arm 5 prior to the operation by the person and the hand position thereof during the operation are inputted to the correcting operation type determination unit 23 from the control unit 22 through the control parameter managing unit 21 or the information acquiring unit 100, and the correcting operation type determination unit 23 carries out calculations such that the value obtained by subtracting the hand position prior to the operation from the hand position during the operation is given as the amount of shift. Moreover, in the case when the correcting operation type determination unit 23 calculates the amount of shift in the vertical direction on the cleaning surface, more specifically, the z-component of the hand position of the robot arm 5 prior to the operation by the person and the z-component of the hand position thereof during the operation are inputted to the correcting operation type determination unit 23 from the control unit 22 through the control parameter managing unit 21 or the information acquiring unit 100, and the correcting operation type determination unit 23 carries out calculations such that the value obtained by subtracting the z-component of the hand position prior to the operation from the z-component of the hand position during the operation is given as the amount of shift.

In the case when, in step S13, the correcting operation type determination unit 23 has determined that the amount of shift in the horizontal direction on the cleaning surface is less than the certain threshold value, the type of correction is determined as "speed" in the horizontal direction along the cleaning surface, thereby completing the correction type estimating process (step S15).

Moreover, in the case when, in step S5, the correcting operation type determination unit 23 has determined that the force component in a direction perpendicular to the cleaning surface is equal to or larger than the certain threshold value, the correcting operation type determination unit 23 further determines whether or not the amount of shift in the perpendicular direction to the cleaning surface calculated by the correcting operation type determination unit 23 is larger than a certain threshold value (step S12).

In the case when, in step S12, the correcting operation type determination unit 23 has determined that the amount of shift in the direction perpendicular to the cleaning surface is greater than the certain threshold value, the type of correction is determined as "shift in the direction perpendicular to the cleaning surface" by the correcting operation type determination unit 23, thereby completing the correction type estimating process (step S196).

In the case when, in step S12, the correcting operation type determination unit 23 has determined that the amount of shift in the direction perpendicular to the cleaning surface is not more than the certain threshold value, the sequence proceeds to step S16, and in step S16, the correcting operation type determination unit 23 determines whether or not the flag (flag indicating validity) indicating that the operation is currently executed (the progress information is "1" in the cleaning operation data base 17) has a force bit "1" or a suction bit "1".

In the case when, in step S16, the correcting operation type determination unit 23 has determined that the flag (flag indicating validity) indicating that the operation is currently executed (the progress information is "1" in the cleaning operation data base 17) has a force bit "1", since the operation corresponds to the wiping operation, the type of correction is determined as "correction of force" (step 17), thereby completing the correction type estimating process. On the other hand, in the case when the correcting operation type determination unit 23 has determined that the flag (flag indicating validity) indicating that the operation is currently executed (the progress information is "1" in the cleaning operation data base 17) has a suction force bit "1", since the operation corresponds to the suction cleaning operation, the type of correction is determined as "correction of suction force" (step 18), thereby completing the correction type estimating process.

Moreover, in the case when, instep S3, the correcting operation type determination unit 23 has determined that the cleaning operation data base 17 is currently not in operation, the sequence proceeds to step S6, and in step 56, the correcting operation type determination unit 23 further determines whether or not the force applied to the robot arm 5 by the human hand 16 is horizontal to the cleaning surface, and also determines whether or not the amount of shift in the horizontal direction in a certain period of time is equal to or greater than a certain threshold value.

In step S6, in the case when the correcting operation type determination unit 23 has determined that the force applied to the robot arm 5 by the human hand 16 in a certain period of time is horizontal to the cleaning surface, and that the amount of shift in the horizontal direction is equal to or greater than the certain threshold value, the type of correction is determined as "the area in which cleaning is unnecessary" (step 8), thereby completing the correction type estimating process. In step S6, in the case when the correcting operation type determination unit 23 has determined that the force applied to the robot arm 5 by the human hand 16 is not horizontal to the cleaning surface (for example, perpendicular thereto), or that, although the applied force is horizontal to the cleaning surface, the amount of shift in the horizontal direction is less than the certain threshold value, the type of correction is determined as "no correction is required" (step 7), thereby completing the correction type estimating process.

Based upon the above-mentioned operations, the type of correction can be switched by the correcting operation type determination unit 23 without using the data input IF 26 such as a button.

As described above, the correcting operation type determination unit 23 determines one kind of correction type among the above-mentioned seven kinds of correction types; however, it may determine two kinds of correction types simultaneously.

A correction type determining method setting unit 27 shown in Fig. 3 sets the number of outputs to be determined by the correcting operation type determination unit 23. However, the number of outputs may be determined by a person through an input to the correcting operation type determination unit 23 by the use of the data input IF 26.

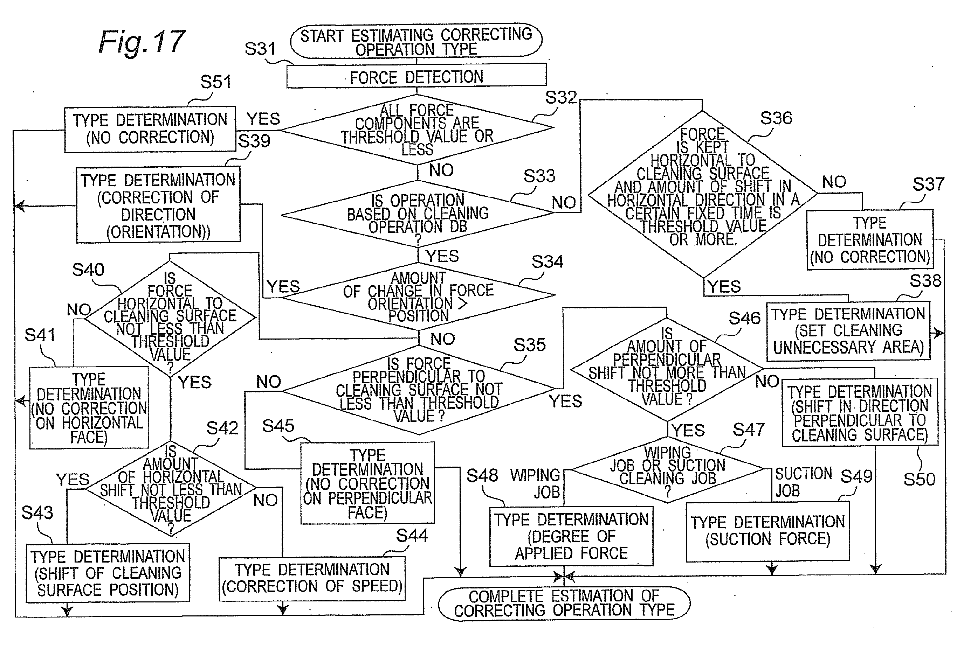

In accordance with the number of outputs set by the correction type determining method setting unit 27, the correcting operation type determination unit 23 determines the types of correction. More specifically, in the case of the number of outputs is 1, the type of correction is determined by using an algorithm of the estimating method of the type of correction of Fig. 14, and in the case of the number of outputs is "2", the type of correction is determined by using an algorithm of Fig. 17 to be described later. With this arrangement, in the case when the person to operate the cleaning robot 1 is not used to the operation, by setting the number of outputs to 1, a simple operation is available because two types of corrections are not carried out simultaneously. In contrast, when the person has got used to the operation and tries to carry out two types of corrections simultaneously, the correcting operations can be carried out efficiently by setting the number of outputs to the value "2".

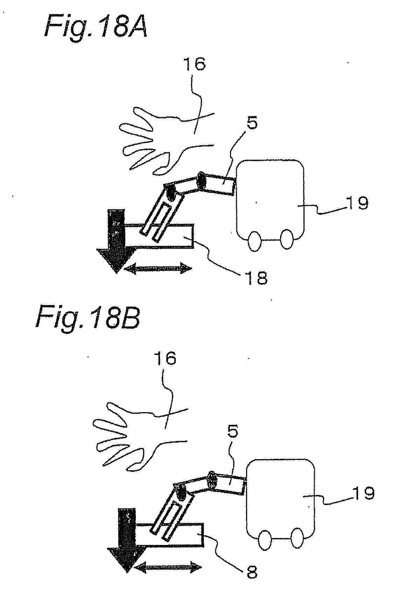

The above-mentioned correcting operation type determination unit 23 has exemplified an arrangement which outputs one type of correction; however, another arrangement which outputs two types of corrections may be exemplified in which, as shown in Fig. 18A, upon carrying out the wiping operation, an attempt is made to use a force stronger than the force in the cleaning operation data base 17 and also to carry out the wiping operation on the cleaning face at a higher speed in comparison with that of the normal operation. In this case, the two types of corrections, that is, the force applied to the wiping operation and the speed thereof, are simultaneously corrected. Moreover, still another arrangement may be exemplified in which as shown in Fig. 18B, upon carrying out the suction cleaning operation for dusts or the like, an attempt is made to increase the suction force, while moving the robot in parallel with the cleaning surface. In this case, the two types of corrections, that is, the shifting position on the cleaning surface and the suction force, are simultaneously corrected.

Referring to a flow chart in Fig. 17, the following description will discuss in detail an algorithm of the correcting operation type determination unit 23 that is used for executing the correction type estimating process of the correction type estimating method of the correcting operations in which two types of corrections are outputted.

In the same manner as in the case of one type of correction, in the case when, with the power supply button 26a of the cleaning robot 1 turned "ON", the robot arm 5 is grabbed by the human hand 16 with no force being applied to the robot arm 5, the robot arm 5 is not moved. In the case when a force is applied to the robot arm 5 by the human hand 16, in the impedance control mode (mode in which it is moved in a direction in which the force of the human hand 16 is detected by the impedance control) the robot arm 5 can be moved in a desired direction. In this case, the force exerted on the robot arm 5 is detected by the force detection unit 53 of the control unit 22, and the information of the force detected by the force detection unit 53 is inputted to the correcting operation type determination unit 23 through the information acquiring unit 100 (step S31).

Next, in step S32, the correcting operation type determination unit 23 determines whether or not all the components of the force (six components including fₓ, f_{y}, f_{z}, f_{φ}, f_{θ} and f_{ψ}) detected by the force detection unit 53 and acquired by the information acquiring unit 100 are equal to or less than a certain threshold value (more specifically, (f_{dx}, f_{dy}, f_{dz}, f_{dφ}, f_{dθ}, f_{dψ}) of ID "1" of Fig. 33.). In the case when the correcting operation type determination unit 23 has determined that all the components of the force (six components including fₓ, f_{y}, f_{z}, f_{φ}, f_{θ} and f_{ψ}) detected by the force detection unit 53 and acquired by the information acquiring unit 100 are equal to or less than a certain threshold value, the robot arm 5 is not allowed to move, with no correction being made (step S51), thereby completing the correction type estimating process of the type estimating method for the correcting operation.

In step S32, in the case when the correcting operation type determination unit 23 has determined that any of the components (any of the six components including fₓ, f_{y}, f_{z}, f_{φ}, f_{θ} and f_{ψ}) of the force detected by the force detection unit 53 and acquired by the information acquiring unit 100 exceed the certain threshold value (more specifically, (f_{dx}, f_{dy}, f_{dz}, f_{dφ}, f_{dθ,} f_{dψ}) of ID "1" of Fig. 33.), the sequence proceeds to step S33.

In step S33, the correcting operation type determination unit 23 further determines whether or not the current cleaning robot 1 is being operated based on the cleaning operation data base 17. More specifically, in the case when the correcting operation type determination unit 23 has determined that, with respect to all the job IDs of the cleaning operation data base 17, no operation is selected by the operation selecting unit 29, with the progress information being set to "0", (state in which no cleaning operation is started), the correcting operation type determination unit 23 has determined that no operation is carried out in the cleaning operation data base 17 so that the sequence proceeds to step S36. In the case when the correcting operation type determination unit 23 has determined that the cleaning operation is selected in the operation selection unit 29 and the cleaning operation is being carried out, with the progress information being set to "1", the correcting operation type determination unit 23 determines that the cleaning operation data base 17 is currently in operation so that the sequence proceeds to step S34.

In step S34, when a force is applied to the robot arm 5 in a direction toward which the cleaning operation of the robot art 5 is corrected, with the robot arm 5 being grabbed by the human hand 16, the force detection unit 53 detects the force applied to the robot arm 5, and the correcting operation type determination unit 23 measures an amount of change in a certain fixed period of time of each of the components (fₓ, f_{y}, f_{z}, f_{φ}, f_{θ}, f_{ψ}) of the force detected by the force detection unit 53 and acquired by the information acquiring unit 100, and the correcting operation type determination unit 23 further measures which amount of change is large, the positional components (fₓ, f_{y}, f_{z}) or the orientation components (f_{φ}, f_{θ}, f_{ψ}). More specifically, as shown in Fig. 15, the correcting operation type determination unit 23 measures a force in time series of each of the components (fₓ, f_{y}, f_{z}, f_{φ}, f_{θ}, f_{ψ}) and the correcting operation type determination unit 23 further measures how much change is made for a certain fixed period of time (for example, time 1) by each of the components of the force so that the correcting operation type determination unit 23 finds the component having the largest change. In this example, since the change in f_{φ} is the largest, the correcting operation type determination unit 23 has determined that the orientation components exert a force larger than that of the positional components so that the sequence proceeds to step S39.

In the case when, in step S34, the correcting operation type determination unit 23 has determined that the amount of change in the orientation is larger than the amount of change in the position, the correcting operation type determination unit 23 determines that the type of correction corresponds to "alternation in direction (orientation)", thereby completing the correction type estimating process (step S39).

On the other hand, in the case when, in step S34, the correcting operation type determination unit 23 has determined that the amount of change in the position is equal to or larger than the amount of change in the orientation, the correcting operation type determination unit 23 further determines whether or not the force component in a direction perpendicular to the cleaning surface (for example, f_{z} in the case of cleaning the floor surface 10 placed horizontally along the ground) is equal to or larger than a certain threshold value (more specifically, f_{dz} of ID "1" of Fig. 33) (step S35). At this time, simultaneously, the correcting operation type determination unit 23 determines whether or not the force component in a direction horizontal to the cleaning surface (for example, either fₓ or f_{y}, or both of these, in the case of cleaning the floor surface 10 placed horizontally along the ground) is equal to or larger than a certain threshold value (more specifically, f_{dx}, f_{dy} of ID "1" of Fig. 33) (step S40).

In the case when, in step S35, the correcting operation type determination unit 23 has determined that the force component in a direction perpendicular to the cleaning surface is less than the certain threshold value, it is determined that no correction is made (no type is found) on the perpendicular surface, thereby completing the correction type estimating process (step S45). In the case when, in step S40, the correcting operation type determination unit 23 has determined that the force component in a direction horizontal to the cleaning surface is less than the certain threshold value, it is determined that no correction is made (no type is found) on the horizontal surface, thereby completing the correction type estimating process (step S41).

In the case when, in step S40, the correcting operation type determination unit 23 has determined that the force component in a direction horizontal to the cleaning surface is equal to or larger than the certain threshold value, the sequence proceeds to step S42.

In step S42, the correcting operation type determination unit 23 further determines whether or not the amount of shift in the direction horizontal to the cleaning surface is equal to or larger than a certain threshold value (more specifically, gₓ, g_{y} of ID "2" of Fig. 33). In the case when, in step S42, the correcting operation type determination unit 23 has determined that the amount of shift in the direction horizontal to the cleaning surface is equal to or larger than the certain threshold value (more specifically, gₓ, g_{y} of ID "2" of Fig. 33), the correcting operation type determination unit 23 determines that the type of correction corresponds to "shift of the position on the cleaning surface", thereby completing the correction type estimating process (step S43).

In the case when, in step S42, the correcting operation type determination unit 23 has determined that the amount of shift in the direction horizontal to the cleaning surface is less than the certain threshold value, it is determined that the type of correction corresponds to "speed" in the direction horizontal to the cleaning surface, thereby completing the correction type estimating process (step S44).

In the case when, in step S35, the correcting operation type determination unit 23 has determined that the force perpendicular to the cleaning surface is equal to or larger than the certain threshold value, the correcting operation type determination unit 23 further determines whether or not the amount of shift in the direction perpendicular to the cleaning surface is larger than a certain threshold value (step S46).

In the case when, in step S46, the correcting operation type determination unit 23 has determined that the amount of shift in the direction perpendicular to the cleaning surface is larger than the certain threshold value, it is determined that the type of correction corresponds to "shift in a direction perpendicular to the cleaning surface" thereby completing the correction type estimating process (step S50).

In the case when, in step S46, the correcting operation type determination unit 23 has determined that the amount of shift in the direction perpendicular to the cleaning surface is equal to or less than the certain threshold value, the sequence proceeds to step S47, and in step S47, the correcting operation type determination unit 23 further determines whether or not the flag (flag indicating validity) indicating that the operation is currently executed (the progress information is "1" in the cleaning operation data base 17) has a force bit "1" in the case of the wiping operation, or a suction force bit "1".

In the case when, in step S47, the correcting operation type determination unit 23 has determined that the flag (flag indicating validity) indicating that the operation is currently executed (the progress information is "1" in the cleaning operation data base) has a force bit "1", since the operation corresponds to the wiping operation, the type of correction is determined as "correction of force" (step 48), thereby completing the correction type estimating process. On the other hand, in the case when the correcting operation type determination unit 23 has determined that the flag (flag indicating validity) indicating that the operation is currently executed (the progress information is "1" in the cleaning operation data base 17) has a suction force bit "1", since the operation corresponds to the suction cleaning operation, the type of correction is determined as "correction of suction force" (step 49), thereby completing the correction type estimating process.

Moreover, in the case when, in step S33, the correcting operation type determination unit 23 has determined that the operation is currently not operatedbased on the cleaning operation data base 17, the sequence proceeds to step S36, and in step S36, the correcting operation type determination unit 23 further determines whether or not the force applied to the robot arm 5 by the human hand 16 is horizontal to the cleaning surface, and also determines whether or not the amount of shift in the horizontal direction in a certain period of time is equal to or greater than a certain threshold value.

In step S 3 6, in the case when the correcting operation type determination unit 23 has determined that the force applied to the robot arm 5 by the human hand 16 is horizontal to the cleaning surface, and that the amount of shift in the horizontal direction in the certain period of time is equal to or greater than the certain threshold value, the type of correction is determined as "the area in which cleaning is unnecessary" (step 38), thereby completing the correction type estimating process. In step S36, in the case when the correcting operation type determination unit 23 has determined that the force applied to the robot arm 5 by the human hand 16 is not horizontal to the cleaning surface (for example, perpendicular thereto), or that, although the applied force is horizontal to the cleaning surface, the amount of shift in the horizontal direction is less than the certain threshold value, the type of correction is determined as "no correction is required" (step S36), thereby completing the correction type estimating process.

Based upon the above-mentioned operations, the type of correction can be switched among two or more types of corrections by the correcting operation type determination unit 23 without using the data input IF 26 such as a button.

The cleaning operation correcting unit 20 has such functions that, during an operation based upon the position, orientation and time in the cleaning operation data base 17, by applying a force to the robot arm 5 by the human hand 16, the operation information in the cleaning operation data base 17 can be corrected.

The following description will discuss the functions of the cleaning operation correcting unit 20.

Upon turning the power supply on by the human hand 16 through the data input IF 26 (for example, the power supply button 26a of the operation panel 26A) placed on the top of the cleaning robot 1, the cleaning operation correcting unit 20 gives instructions to the control parameter managing unit 21 so as to carry out an operation in the impedance control mode.

Next, a desired cleaning job is selected by the human hand 16 from the list of the cleaning jobs in the cleaning operation data base 17 through the operation selection unit 29, and instructions are given so as to start the cleaning operation. Based upon the operation information of the job ID selected from the cleaning operation data base 17 (more specifically, the position of the main body 19 and the position, orientation and time of the robot arm 5), the cleaning operation correcting unit 20 gives instructions to the control parameter managing unit 21 so that the main body 19 and the robot arm 5 are operated in the force hybrid impedance control mode.

In the case of the force hybrid impedance control mode, among the flags (flags indicating validity) relating to the operation IDs of the cleaning operation data base 17, the cleaning operation correcting unit 20 sets the hybrid impedance control mode (the mode in which, while being operated in the position control mode, the robot arm 5 is actuated in response to a force applied to the robot arm 5 by the person or the like) to each of the position and orientation of the robot arm 5 whose flag has a bit "1" so that the component of the suction force or force whose flag (flag indicating validity) having a bit "1" is set to the force control mode by the cleaning operation correcting unit 20. Among the six components of the position and orientation, those components which have been set to neither the hybrid impedance control mode, nor the force control mode, are set to the impedance control mode by the cleaning operation correcting unit 20. For example, in the case when the job ID in Fig. 4 is "1", this indicates a suction cleaning job for dusts, and in the case when the job ID is "1" with the operation ID being set to "1", the flag only has "1" in each of the 1-st, 2-nd and 14-th bits; therefore, the hybrid impedance control mode is set to the x-axis and y-axis components by the cleaning operation correcting unit 20, with the force control mode being set to the z-axis component by the cleaning operation correcting unit 20, while the impedance control mode is set to the orientation component by the cleaning operation correcting unit 20. In the case when the job ID in Fig. 4 is "2", this indicates a wiping job, and in the case of the job ID is "2" with the operation ID being set to "1", the flag only has "1" in each of the 1-st, 2-nd and 8-the bits; therefore, the hybrid impedance control mode is set to the x-axis and y-axis components by the cleaning operation correcting unit 20, with the force control mode being set to the z-axis component by the cleaning operation correcting unit 20, while the impedance control mode is set to the orientation component by the cleaning operation correcting unit 20.

The control parameter managing unit 21 receives instructions from the cleaning operation correcting unit 20. That is, upon giving instructions to the control parameter managing unit 21 from the cleaning operation correcting unit 20 so as to carry out the cleaning job in the force hybrid impedance control mode, the robot arm 5 starts the cleaning job, by using the position, orientation and force or suction force of the operation ID, while the cleaning robot 1 is allowed to automatically travel through positions instructed by the main body 19, as shown in Figs. 16A to 16C.

Next, an explanation will be given by exemplifying a state in which, as shown in Fig. 12C, based upon confirmation as to the circumstance of stains or the like on the cleaning surface, the person attempts to carry out a cleaning (suction) operation, with the robot arm 5 being parallel-shifted slightly sideways.

As shown in Fig. 12C, the robot arm 5 is directly grabbed by the human hand 16, and a force is applied to the robot arm 5 in parallel with the cleaning surface so as to be parallel-shifted relative to the cleaning surface.

By using the correcting operation type determination unit 23, the type of correction is estimated and determined by the correction type estimating process shown in the flow chart of Fig. 14, based upon the force applied to the robot arm 5 by the human hand 16 acquired by the information acquiring unit 100 and the information stored in the cleaning operation data base 17. In this case, since the robot arm 5 is shifted by a certain threshold value or more, by applying a force to the robot arm 5 by the human hand 16 in the direction horizontal to the cleaning surface, the correcting operation type determination unit 23 determines in step S14 that the type of correction corresponds to "shift of the position on the cleaning surface".

In the case of a job having the job ID "1" and the operation ID "1", shown in Fig. 4, while the robot arm 5 is being shifted in the position control mode, with the x-axis component and y-axis component being controlled in the force hybrid impedance control mode, the force that has been applied to the robot arm 5 by the human hand 16 in the impedance control mode is detected by the force detection unit 53 so that the robot arm 5 is shifted in the x-axis direction as well as in the y-axis direction, in the direction in accordance with the force applied to the robot arm 5 by the human hand 16; thus, the cleaning position can be corrected as shown in Fig. 12D.

Additionally, in this example, since an attempt is made to correct the operations only in the x-axis direction and the y-axis direction, 0 and 1-st bits of the correction parameter flag of Fig. 6 are set to "1", with the other bits being set to "0", by the correcting operation type determination unit 23, at the timing when the type of correction has been determined by the correcting operation type determination unit 23, so that by giving the corresponding instructions to the control parameter managing unit 21 from the correcting operation type determination unit 23, it becomes possible to set so as to prevent movements except for those in the x-axis direction and the y-axis direction. Moreover, the mechanical impedance set value in the impedance control mode is altered by the correcting operation type determination unit 23, and the corresponding instructions are outputted to the control parameter managing unit 21 from the correcting operation type determination unit 23 so that by reducing the rigidity in the x-axis direction and the y-axis, direction of the robot arm 5 to a level lower than that in the other direction, the robot arm 5 is more easily moved by the human hand 16 in the x-axis direction as well as in the y-axis, direction, while the rigidity in directions other than the x-axis direction and y-axis direction is made higher, so that the robot arm 5 is made to be difficult to move in directions other than the x-axis direction and the y-axis direction. With this arrangement, in an attempt to correct only the x-axis component and the y-axis component of the robot arm 5, it is possible to prevent the z-axis component of the robot arm 5 from being erroneously corrected. Moreover, during the correction relating to the x-axis and y-axis directions of the robot arm 5, it becomes possible to make the suction force or the force applied onto the cleaning surface weaker or smaller (more specifically, to a level half as high as) than that of the operation prior to the correction, by the correcting operation type determination unit 23. Furthermore, instructions may be given from the correcting operation type determination unit 23 to the control parameter managing unit 21 so as to stop the suction or force controlling operation. More specifically, the correcting operation type determination unit 23 sets the 6-th to 17-th bits of the flag in the cleaning operation data base 17 to "0", Thus, even during the correction with the robot arm 5 being shifted in the x-axis direction as well as in the y-axis direction, it is possible to prevent too much force from being applied to the robot arm 5 to cause damages to the floor surface 10, or to prevent matters other than dusts from being erroneously sucked.

As described above, in the case when, with the robot arm 5 being grabbed by the human hand 16, a force is applied to a direction horizontal to the cleaning surface so that the robot arm 5 is shifted in the x-axis direction as well as in the y-axis direction by a portion corresponding to Δx as well as by a portion corresponding to Δy, the value of Δx and the value of Δy are transmitted to the cleaning operation correcting unit 20 through the control unit 22 and the control parameter managing unit 21.

In the cleaning operation correcting unit 20, operation information, corrected by subtracting Δx from all the values in the x-coordinate of pieces of operation information as well as by further subtracting Δy from all the values in the x-coordinate of pieces of operation information of the selected job ID, is transmitted from the cleaning operation correcting unit 20 to the control parameter managing unit 21. The control parameter managing unit 21 gives instructions to the control unit 22 so as to operate the robot arm 5 based upon the coordinates corrected by the Δx portion and Δy portion. Thus, the operation is corrected in a manner as indicated by Fig. 12D. Next, the operation information, corrected by subtracting the Δx portion and the Δy portion, is stored in the cleaning operation data base 17 by the cleaning operation storage unit 15.

Next, in the case when, as shown in Fig. 32B, for example, during a cleaning operation on the floor surface 10, an attempt is made to clean the top face 10Sa of a sofa 10S or the like placed on the floor surface, with the robot arm 5 being directly grabbed by the human hand 16, a force is applied to the robot arm 5 perpendicular to the cleaning surface so as to shift it in a direction perpendicular to the cleaning surface.

Based upon the force applied to the robot arm 5 by the human hand 16 and information of the cleaning operation data base 17, respectively acquired by the information acquiring unit 100, the correcting operation type determination unit 23 estimates and determines the type of correction by the correcting type estimating process shown in the flow chart of Fig. 14. In this case, since the robot arm 5 is moved by a certain threshold value or more by applying the force to the robot arm 5 in a direction perpendicular to the cleaning surface by the human hand, the correcting operation type determination unit 23 determines that the type of correction corresponds to "shift in a direction perpendicular to the cleaning surface" in step S19.

While the robot arm 5 is being moved in the position control mode under the force hybrid impedance control mode, a force of the human hand 16 is detected by the force detection unit 53 in the impedance control mode so that the robot arm 5 can be moved in the z-axis direction in the direction toward which the force is applied to the robot arm 5 by the human hand 16; thus, the cleaning position can be corrected as shown in Fig. 32C.

Additionally, in this example, since an attempt is made so as to correct the operations only in the z-axis direction, the 2-nd bit of Fig. 6 is set to "1", with the other bits being set to "0", by the correcting operation type determination unit 23, at the timing when the type of correction has been determined by the correcting operation type determination unit 23, so that by giving the corresponding instructions to the control parameter managing unit 21 from the correcting operation type determination unit 23, it becomes possible to set so as to prevent movements except for those in the z-axis direction. Moreover, the mechanical impedance set value in the impedance control mode is altered by the correcting operation type determination unit 23, and the corresponding instructions are outputted to the control parameter managing unit 21 from the correcting operation type determination unit 23 so that by reducing the rigidity in the z-axis direction to a level lower than those in the other directions, the robot arm 5 is more easily moved by the human hand 16 in the z-axis direction, while the rigidity in directions other than the z-axis direction is made higher, so that the robot arm 5 is made to be difficult to move in directions other than the z-axis direction.

Moreover, during the correction relating to the z-axis direction of the robot arm 5, it becomes possible to make the suction force or the force applied onto the cleaning surface weaker or smaller (more specifically, to a level half as high as) than that of the operation prior to the correction, by the correcting operation type determination unit 23. Furthermore, instructions may be given from the correcting operation type determination unit 23 to the control parameter managing unit 21 so as to stop the suction or force controlling operation. More specifically, the correcting operation type determination unit 23 sets the 6-th to 17-the bits of the flag in the cleaning operation data base 17 to "0". Thus, even during the shift of the robot arm 5 in the z-axis direction, it is possible to prevent too much force from being applied to the robot arm 5 to cause damages to the floor surface 10, or to prevent matters other than dusts from being erroneously sucked.

As described above, in the case when, with the robot arm 5 being grabbed by the human hand 16, a force is applied to a direction perpendicular to the cleaning surface so that the robot arm 5 is shifted in the z-axis direction by a portion corresponding to Δz, the value of Δz is transmitted to the cleaning operation correcting unit 20 through the control unit 22 and the control parameter managing unit 21.

In the cleaning operation correcting unit 20, operation information, corrected by subtracting Δz from all the values in the z-coordinate of pieces of operation information of the selected job ID, is transmitted from the cleaning operation correcting unit 20 to the control parameter managing unit 21. The control parameter managing unit 21 gives instructions to the control unit 22 so as to operate the robot arm 5 based upon the coordinates corrected by the Δz portion. Thus, the operation is corrected in a manner as indicated by Fig. 32C. Next, the operation information, corrected by subtracting the Δz portion, is stored in the cleaning operation data base 17 by the cleaning operation storage unit 15.

Next, in the case when, as shown in Fig. 30B, for example, during a cleaning operation on the floor surface 10 that proceeds against lines Tm of a tatami mat T, an attempt is made to carry out the cleaning operation in accordance with the lines Tm of the tatami mat, by changing the longitudinal direction of the cleaning unit 8, 18, with the robot arm 5 being directly grabbed by the human hand 16, as shown in Fig. 30C, a force is applied to the robot arm 5 so that the robot arm 5 is moved in a direction toward which the longitudinal direction of the cleaning units 8, 18 is desirably altered.

Based upon the force applied to the robot arm 5 by the human hand 16 and information of the cleaning operation data base 17, respectively acquired by the information acquiring unit 100, the correcting operation type determination unit 23 estimates and determines the type of correction by the correcting type estimating process shown in the flow chart of Fig. 14. In this case, since the robot arm 5 is subjected to the force applied thereto so as to move it in a direction toward which the longitudinal direction of the cleaning units 8, 18 is desirably altered, the correcting operation type determination unit 23 determines that the type of correction corresponds to "change in direction (orientation)" in step S9.

While the robot arm 5 is being moved in the position control mode under the force hybrid impedance control mode, a force of the human hand 16 applied to the robot arm 5 is detected by the force detection unit 53 in the impedance control mode so that the robot arm 5 can be rotated in a φ-axis direction toward the direction the force is applied to the robot arm 5 by the human hand 16; thus, thecleaningdirectioncanbe corrected as shown in Fig. 30D.

Additionally, in this example, since an attempt is made so as to correct the operations only in the φ-axis direction, the 3-rd bit of the correction parameter flag in Fig. 6 is set to "1", with the other bits being set to "0", by the correcting operation type determination unit 23, at the timing when the type of correction has been determined by the correcting operation type determination unit 23, so that the corresponding instructions are given to the control parameter managing unit 21 from the correcting operation type determination unit 23. With this arrangement, it becomes possible to set by the correcting operation type determination unit 23 so as to prevent movements except for those in the φ-axis direction. Moreover, the mechanical impedance set value in the impedance control mode is altered by the correcting operation type determination unit 23, and the corresponding instructions are outputted to the control parameter managing unit 21 from the correcting operation type determination unit 23 so that by reducing the rigidity in the φ-axis direction to a level lower than those in the other directions, the robot arm 5 is more easily moved by the human hand 16 in the φ-axis direction, while the rigidity in directions other than the φ-axis direction is made higher, so that the robot arm 5 is made to be difficult to be moved by the human hand 16 in directions other than the φ-axis direction.

Moreover, during the correction relating to the φ-axis direction of the robot arm 5, it becomes possible to make the suction force of the z-axis component or the force applied onto the cleaning surface weaker or smaller (more specifically, to a level half as high as) than that of the operation prior to the correction, by the correcting operation type determination unit 23. Alternatively, instructions may be given from the correcting operation type determination unit 23 to the control parameter managing unit 21 so as to stop the suction or force controlling operation. More specifically, the correcting operation type determination unit 23 sets the 6-th to 17-th bits of the flag in the cleaning operation data base 17 to "0". Thus, even during the shift in the φ-axis direction, it is possible to prevent too much force from being applied to the robot arm 5 to cause damages to the floor surface 10, or to prevent matters other than dusts from being erroneously sucked.

As described above, in the case when, with the robot arm 5 being grabbed by the human hand 16, a force is applied to a direction perpendicular to the cleaning surface so that the robot arm 5 is rotated in the φ-axis direction by a portion corresponding to Δφ, the value of Δφ is transmitted to the cleaning operation correcting unit 20 through the control unit 22 and the control parameter managing unit 21.

In the cleaning operation correcting unit 20, operation information, corrected by subtracting Δφ from all the values in the φ-coordinate of pieces of operation information of the selected job ID, is transmitted from the cleaning operation correcting unit 20 to the control parameter managing unit 21. The control parameter managing unit 21 gives instructions to the control unit 22 so as to operate the robot arm 5 based upon the coordinates corrected by the Δφ portion. Thus, the operation is corrected in a manner as indicated by Fig. 12E. Next, the operation information, corrected by subtracting the Δφ portion, is stored in the cleaning operation data base 17 by the cleaning operation storage unit 15.

As described above, in a state where the operation is carried out in the force hybrid impedance control mode, by applying a force to the robot arm 5 by the human hand 16, the cleaning operation correcting unit 20 is allowed to correct the generated position depending on directions, based upon the position, orientation and time of the cleaning operation data base 17.

Next, in the case when, upon carrying out the wiping operation, the force relative to the cleaning surface is altered as shown in Fig. 27B, with the robot arm 5 being directly grabbed by the human hand 16, a force is applied to the robot arm 5 in a direction perpendicular to the cleaning surface.

Based upon the force applied to the robot arm 5 by the human hand 16 and information of the cleaning operation data base 17, respectively acquired by the information acquiring unit 100, the correcting operation type determination unit 23 estimates and determines the type of correction by the correcting type estimating process shown in the flow chart of Fig. 14. In this case, since the robot arm 5 is not moved by a certain threshold value or more by applying the force to the robot arm 5 in a direction perpendicular to the cleaning surface by the human hand 16, the correcting operation type determination unit 23 determines that the type of correction corresponds to "correction of force" in step S17.

At the timing when the type of correction has been determined by the correcting operation type determination unit 23 as "correction of force", instructions are given from the correcting operation type determination unit 23 to the control parameter managing unit 21 so as to carry out the operation, from the force hybrid impedance control mode to the high rigidity position control mode. Upon instructions from the correcting operation type determination unit 23 to the control parameter managing unit 21, in the high rigidity position control mode, the correcting operation type determination unit 23 can set high rigidity depending on directions at the time of position control; therefore, for example, the operation flag with the job ID "2" as well as the operation ID "1" in the cleaning operation data base 17 of Fig. 4, has its 0, 1-st and 8-th bits set to "1" so that the operation in the z-axis direction is carried out in the force control mode, while the operations in the other directions are carried out in the hybrid impedance control mode; therefore, instructions are given from the correcting operation type determination unit 23 to the control parameter managing unit 21 so that the operation only in the z-axis direction is carried out in the high rigidity position control mode, while operations in the other directions are carried out in the hybrid impedance control mode.

Next, as shown in Fig. 27B, in the case when, while, during the wiping operation of the robot arm 5, the robot arm 5 is carrying out the operation on a heavily soiled portion, an attempt is made to directly grab the robot arm 5 by the human hand 16 so as to wipe the cleaning surface with higher strength, a force is applied to the robot arm 5 (for example, the mop 18 of the robot arm 5) downward onto the cleaning surface by the human hand 16. A high rigidity position control mode is a mode obtained by providing higher rigidity to the position control mode that is one of the hybrid impedance control modes at the time of cleaning, with different positional settings, and can be achieved by increasing the gain of the positional error compensating unit 56 (more specifically, to a level about twice as much as that of the position control mode at the time of cleaning), and even when a force is applied to the robot arm 5 by the human hand 16, the robot arm 5 is not easily moved, with the result that the force applied to the robot arm 5 by the human hand 16 can be detected by the force detection unit 53. The force detected by the force detection unit 53 of the control unit 22 is transmitted to the cleaning operation correction unit 20. The force transmitted to the cleaning operation correcting unit 20 is stored in the cleaning operation data base 17 by the cleaning operation storage unit 15 so that the correction of the wiping operation so as to wipe only a heavily soiled portion with higher strength is achieved. In the case when the person tries to finish the correction, he or she grabs the robot arm 5 to stop applying a force to the robot arm 5. In the case when no force is applied to the robot arm 5 by the human hand 16, since all the components of the force are lowered to be equal to or less than a threshold value as shown in step S2 of Fig. 14, the correcting operation type determination unit 23 determines the type of correction as "no correction" (step S20 in Fig. 14). Upon receipt of the information "no correction", the cleaning operation correcting unit 20 allows the correcting operation type determination unit 23 to give instructions to the control parameter managing unit 21 so as to change the mode from the high rigidity position control mode to the hybrid impedance control mode. Thus, the cleaning operation is carried out based upon the cleaning operation data base 17 after the correction.

As described above, in a state where the operation is carried out in the hybrid impedance control mode, by applying a force by the human hand 16, the cleaning operation correcting unit 20 is allowed to correct the operation so as to carry out the cleaning operation by using the corrected force, based upon the force information of the cleaning operation data base 17.

Next, in the case when the suction force relative to the cleaning surface is altered as shown in Fig. 28C, with the robot arm 5 being directly grabbed by the human hand 16, a force is applied to the robot arm 5 in a direction perpendicular to the cleaning surface.

Based upon the force applied to the robot arm 5 by the human hand 16 and information of the cleaning operation data base 17, respectively acquired by the information acquiring unit 100, the correcting operation type determination unit 23 estimates and determines the type of correction by the correcting type estimating process shown in the flow chart of Fig. 14. In this case, since the robot arm 5 is notmovedby a certain threshold value or more by applying the force to the robot arm 5 in a direction perpendicular to the cleaning surface by the human hand 16, the correcting operation type determination unit 23 determines that the type of correction corresponds to "correction of suction force" in step S18.

At the timing when the type of correction has been determined by the correcting operation type determination unit 23 as "correction of suction force", instructions are given from the correcting operation type determination unit 23 to the control parameter managing unit 21 so as to carry out the operation from the force hybrid impedance control mode to the high rigidity position control mode. Upon instructions from the correcting operation type determination unit 23 to the control parameter managing unit 21, in the high rigidity position control mode, the correcting operation type determination unit 23 can set high rigidity depending on directions at the time of position control; therefore, for example, the operation flag with the job ID "1" as well as the operation ID "1" in the cleaning operation data base 17 of Fig. 4, has its 0, 1-st and 14-th bits set to "1" so that the operation in the z-axis direction is carried out in the suction control mode, while the operations in the other directions are carried out in the hybrid impedance control mode; therefore, instructions are given from the correcting operation type determination unit 23 to the control parameter managing unit 21 so that the operation only in the z-axis direction is carried out in the high rigidity position control mode, while operations in the other directions are carried out in the hybrid impedance control mode.

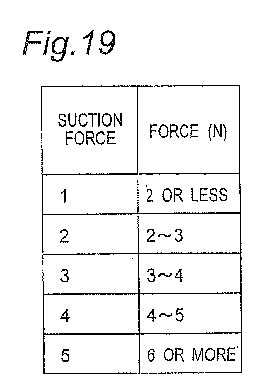

Next, as shown in Fig. 28B, in the case when, while, during the suction cleaning operation of the robot arm 5, the robot arm 5 is carrying out the operation on a heavily soiled portion, an attempt is made to directly grab the robot arm 5 by the human hand 16 so as to carry out the suction cleaning operation with higher strength, a force is applied to the robot arm 5 (for example, the mop 18 of the robot arm 5) downward onto the cleaning surface by the human hand 16. The high rigidity position control mode is a mode obtained by providing higher rigidity to the normal position control mode, and can be achieved by increasing the gain of the positional error compensating unit 56, and even when a force is applied to the robot arm 5 by the human hand 16, the robot arm 5 is not easily moved, with the result that the force applied to the robot arm 5 by the human hand 16 can be detected by the force detection unit 53. The force detected by the force detection unit 53 of the control unit 22 is transmitted to the cleaning operation correction unit 20 through the control parameter managing unit 21, and with respect to the suction force in the z-axis direction of the cleaning operation data base 17, the cleaning operation correction unit 20 converts the force to a suction force by using a conversion table shown in Fig. 19 stored in the cleaning operation data base 17 (or the storage unit of the cleaning operation correction unit 20). For example, in the case when the applied force to the robot arm 5 by the person is 4.5 [N], since the suction force is converted to "4" in response to the force of 4 to 5 [N] based upon the conversion table, by storing the suction force "4" in the cleaning operation data base 17 by the cleaning operation storage unit 15, the operation can be corrected so as to carry out the suction cleaning operation only on a heavily soiled portion with higher strength. In the case when the person tries to finish the correction, he or she grabs the robot arm 5 to stop applying a force to the robot arm 5. That is, in the case when no force is applied to the robot arm 5 by the human hand 16, since all the components of the force are lowered to be equal to or less than a threshold value as shown in step S2 of Fig. 14, the correcting operation type determination unit 23 determines the type of correction as "no correction" (step S20 in Fig. 14). Upon receipt of the determination "no correction" as the type of correction, the cleaning operation correcting unit 20 gives instructions to the control parameter managing unit 21 so as to change the mode from the high rigidity position control mode to the hybrid impedance control mode. Thus, the cleaning operation is carried out based upon the cleaning operation data base 17 after the correction.

As described above, in a state where the operation is carried out in the hybrid impedance control mode, by applying a force to the robot arm 5 by the human hand 16, the cleaning operation correcting unit 20 is allowed to correct the operation so as to carry out the cleaning operation by using the corrected suction force, based upon the suction force in the cleaning operation data base 17.

Next, in the case when the speed of cleaning is altered as shown in Fig. 29D, in an attempt to increase the speed, with the robot arm 5 being directly grabbed by the human hand 16, a force is applied to the robot arm 5 by the human hand 16 in the same direction as the proceeding direction of the cleaning operation, while in an attempt to reduce the speed, a force is applied to the robot arm 5 by the human hand 16 in the direction reversed to the proceeding direction of the cleaning operation. In this case, although the speed of the hand position of the robot arm 5 may be changed, the force is applied to the robot arm 5 by the human hand in a manner so as not to move the position beyond a certain threshold value or more.

Based upon the force applied to the robot arm 5 by the human hand 16 and information of the cleaning operation data base 17, respectively acquired by the information acquiring unit 100, the correcting operation type determination unit 23 estimates and determines the type of correction by the correcting type estimating process shown in the flow chart of Fig. 14. In this case, since the robot arm 5 is not moved by a certain threshold value ormore by applying the force to the robot arm 5 in a direction horizontal to the cleaning surface by the human hand 16, the correcting operation type determination unit 23 determines that the type of correction corresponds to "correction of speed" in the direction horizontal to the cleaning surface in step S15 in Fig. 14.

While the robot arm 5 is being shifted in the position control mode under the hybrid impedance control mode, the force that has been applied to the robot arm 5 by the human hand 16 in the impedance control mode is detected by the force detection unit 53 so that the robot arm 5 is shifted in the x-axis direction as well as in the y-axis direction, in the direction in accordance with the force applied to the robot arm 5 by the human hand 16. In the case when, supposing that a period of time required to shift from the position (x₁, y₂, z₁) of the robot arm 5, for example, indicated by the job ID and the operation ID in the cleaning operation data base 17, to the position (x₂, y₂, z₂) of the robot arm 5 indicated by the next operation ID, is t₁, an attempt is made to alter the speed of the robot arm 5 by the force of the human hand 16 (see Fig. 29C), that is, the period of time required to shift from the position (x₁, y₂, z₁) to the position (x₂, y₂, z₂) is changed from t₁ to t₂, the value of time t₂ is transmitted to the cleaning operation correcting unit 20 through the control unit 22 and the control parameter managing unit 21. In the cleaning operation correcting unit 20, the period of time is changed from time t₁ to time t₂, with respect to the operation information of the selected job ID, and the resulting value is transmitted from the cleaning operation correcting unit 20 to the control parameter managing unit 21. The control parameter managing unit 21 gives instructions to the control unit 22 so as to carry out the operation by using the corrected period of time t₂. Thus, the correction is made so as to carry out the operation as shown in Fig. 29D. Next, the period of time t₂ is stored in the cleaning operation data base 17 by the cleaning operation storage unit 15.

As described above, in a state where the operation is carried out in the force hybrid impedance control mode, by applying a force to the robot arm 5 by the human hand 16, the cleaning operation correcting unit 20 is allowed to correct the operation speed of the robot arm 5, based upon the information relating to the position, orientation and time in the cleaning operation data base 17.

Referring to Fig. 31, the following description will discuss an arrangement in which an area RB in which cleaning by the cleaning robot 1 is unnecessary is set by using the robot arm 5.

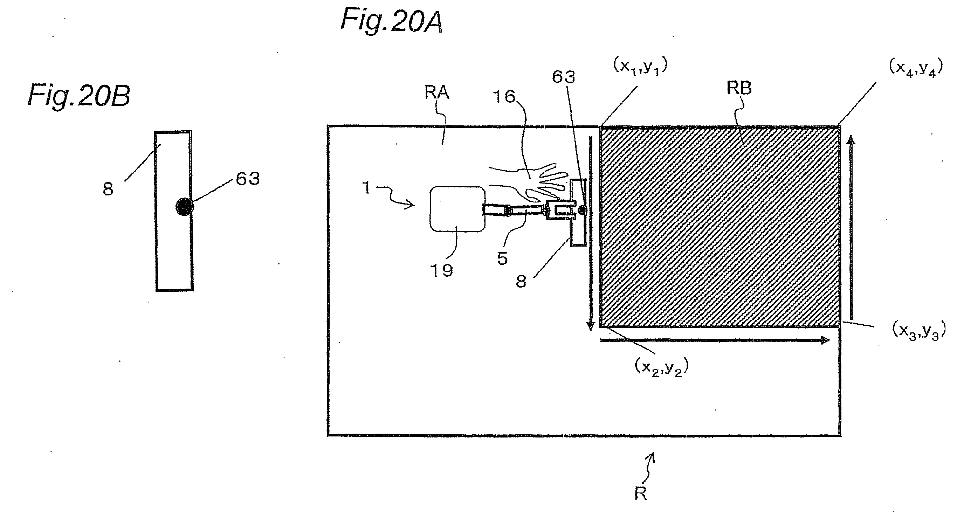

Upon turning the power supply on by the human hand 16 through the data input IF 26 (for example, the power supply button 26a of the operation panel 26A) placed on the top of the cleaning robot 1, the cleaning operation correcting unit 20 gives instructions to the control parameter managing unit 21 so as to carry out an operation in the impedance control mode. In a state where no job is selected by the operation selection unit 29, as shown in Fig. 31, with the robot arm 5 (cleaning unit 8, 18) being directly grabbed by the hand 16 of the person 16A, the robot arm 5 is parallel-shifted relative to the cleaning surface so that the robot arm 5 is moved along the outline of the area RB in which cleaning by the robot 1 is unnecessary. Fig. 20A is a drawing that shows the cleaning surface viewed from above, and supposing that the area RB in which cleaning is unnecessary is an area indicated by slanting lines, the robot arm 5 is shifted by the human hand 16 so that the robot arm 5 is moved along the outline of the area RB in which cleaning is unnecessary, as indicated by an arrow. In this case, a mark 63 is attached to the center tip portion of the top face of the suction nozzle 8, serving as one example of the cleaning unit attached to the hand (hand 30) of the robot arm 5 (see Figs. 31, 20A and 20B), and it is moved with the mark 63 facing the direction in which cleaning is unnecessary.

In the case when the correcting operation type determination unit 23 executes the correction type estimating process shown in Fig. 14, and determines that no operation is executed in the cleaning operation data base 17 (step S2, S3 and S6), and further determines that the force applied to the robot arm 5 by the human hand 16 is horizontal to the cleaning surface and that the amount of shift in the horizontal direction within a certain fixed period of time is a certain threshold value or more, it is determined that the type of correction corresponds to "area in which cleaning is unnecessary" in step S8.

By detecting the force applied to the robot arm 5 by the human hand 16 by using the force detection unit 53 in the impedance control mode, the robot arm 5 is shifted in the x-axis direction as well as in the y-axis direction, in accordance with the direction in which the force is applied to the robot arm 5 by the human hand 16, so that, as shown in Fig. 20A, the suction nozzle 8 of the robot arm is successively shifted in the order of position (x₁, y₁), position (x₂, y₂), position (x₃, y₃) and position (x₄, y₄) ; thus, these pieces of positional information are transmitted to the cleaning operation correcting unit 20 through the control unit 22 and the control parameter managing unit 21. Upon receipt of the information, the cleaning operation correcting unit 20 allows the cleaning operation storage unit 15 to store these pieces of positional information in a cleaning unnecessary area data base 28 as information relating to the cleaning unnecessary area RB. Since these four positions are given as pieces of information indicating the apexes of the cleaning unnecessary area RB, for example, the hand positions of the robot arm 5 caused by the shifts by the person in certain fixed intervals are acquired, and by connecting the coordinates of the hand positions thus acquired to one after another, an area is formed so as to provide the cleaning unnecessary area RB. A function for determining what kind of area is formed may be added to the correction type determining method setting unit 27, and, for example, in the case when the setting is made as "rectangular shape", upon changing the shifting direction at an angle close to 90 degrees, the corresponding position is stored as information of an apex; in contrast, in the case when the setting is made as "random", the hand positions of the robot arm 5 caused by the shifts by the person in certain fixed intervals are acquired, and by connecting the coordinates of the hand positions thus acquired to one after another, the resulting area is prepared as the cleaning unnecessary area RB.

Additionally, in this example, since an attempt is made so as to correct the operations of the robot arm 5 only in the x-axis direction and the y-axis direction, 0 and 1-st bits of the correction parameter flag of Fig. 6 are set to "1", with the other bits being set to "0", by the correcting operation type determination unit 23, at the timing when the type of correction has been determined by the correcting operation type determination unit 23, so that by giving the corresponding instructions to the control parameter managing unit 21 from the correcting operation type determination unit 23, it becomes possible to set so as to prevent movements of the robot arm 5 except for those in the x-axis direction and the y-axis direction. Moreover, the mechanical impedance set value in the impedance control mode is altered by the correcting operation type determination unit 23, and the corresponding instructions are outputted to the control parameter managing unit 21 from the correcting operation type determination unit 23 so that by reducing the rigidity in the x-axis direction and the y-axis direction, the robot arm 5 is more easily moved by the human hand 16 in the x-axis direction as well as in the y-axis direction, while the rigidity in directions other than the x-axis direction and y-axis direction is made higher, so that the robot arm 5 is made to be difficult to be moved by the human hand 16 in directions other than the x-axis direction and the y-axis direction.

As described above, by applying a force by the human hand 16, the cleaning operation correcting unit 20 is allowed to set the area in which cleaning is unnecessary.

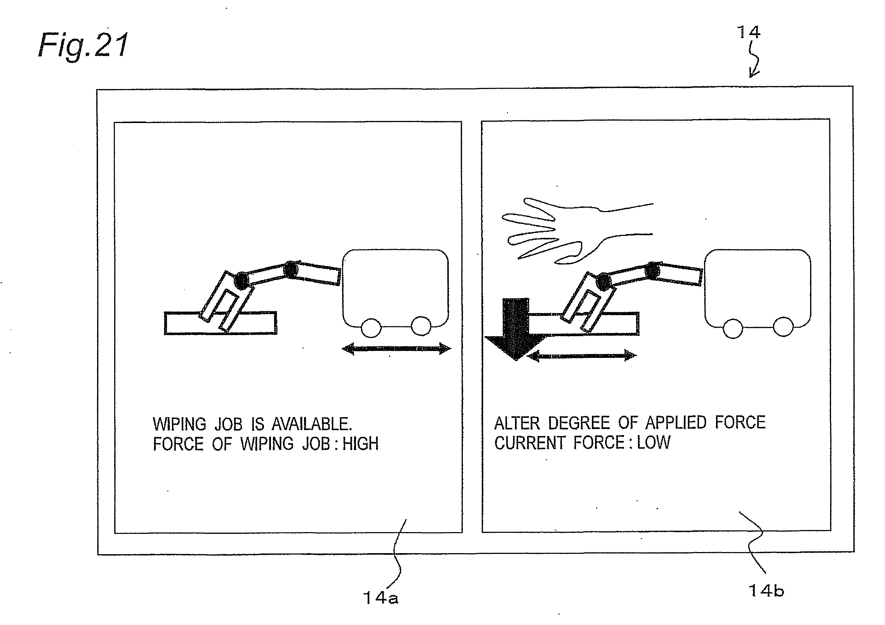

As shown in Fig. 21, a display unit 14 provides right and left two divided screens 14a and 14b, and on the screen 14a on the left side, the action of the robot arm 5 described in the cleaning operation data base 17 is displayed as an image, a photograph or a text. Moreover, on the screen 14b on the right side, information relating to the type of correction estimated by the correcting operation type determination unit 23 is displayed as an image, a photograph or a text. In the example of Fig. 21, in the case when such an action as to correct the degree of a force to be applied is made by applying a force to the robot arm 5 by the human hand 16 perpendicularly to the cleaning surface, the image showing the correction of force and the size of the current applied force are displayed on the screen 14b on the right side, at the timing when the correcting operation type determination unit 23 has determined that the type of correction corresponds to "correction of force".

In this example, an image, a photograph or a text is used; however, a voice or the like that explains the action may be used.

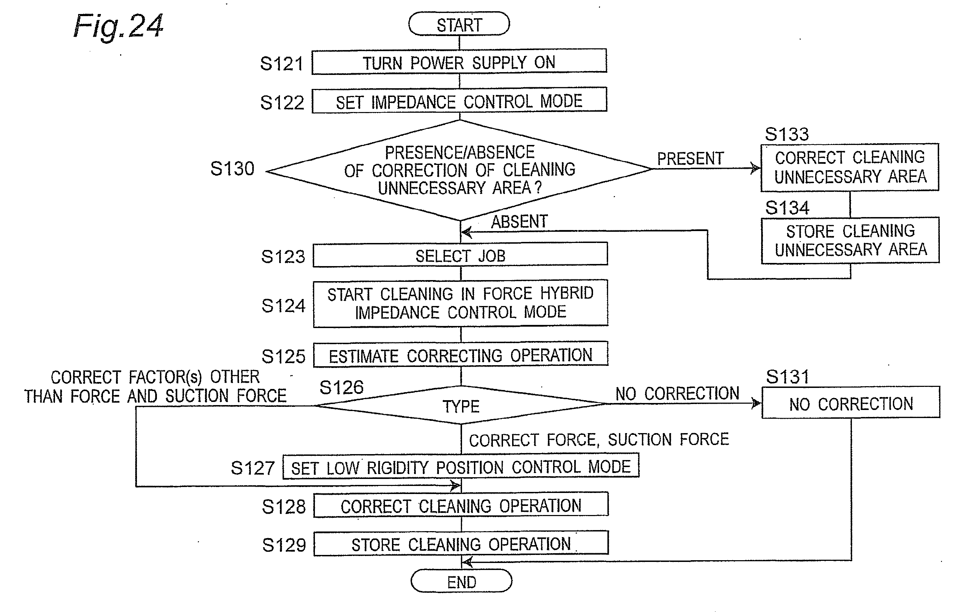

Referring to a flow chart in Fig. 24, the following description will discuss operation steps of the above-mentioned cleaning operation correcting unit 20, the correcting operation type determination unit 23, the operation selecting unit 29, the cleaning operation storage unit 15, the cleaning operation data base 20 and the control parameter managing unit 21 (that is, setting processes of the cleaning jobs and cleaning operations to be carried out from the driving start of the cleaning robot 1 to the start of the cleaning operation).

The power supply of the cleaning robot 1 is turned on by the human hand 16 through the data input IF 26 (step S121).

Next, the cleaning operation correcting unit 20 gives instructions to the control parameter managing unit 21 so that the operation is controlled in the impedance control mode (step S122).

Next, the correcting operation type determination unit 23 determines whether or not a correction is carried out on the cleaning unnecessary area RB (step S130). In the case when the correcting operation type determination unit 23 has determined that the correction is carried out on the cleaning unnecessary area RB, the correction is executed by the cleaning operation correcting unit 20 (step S133), and the information of the correction is stored in the cleaning operation data base 17 by the cleaning operation storage unit 15 (step S134). Thereafter, the sequence proceeds to step S123.

In the case when the correcting operation type determination unit 23 has determined that the correction is not related to the cleaning unnecessary area RB in step S130, or after the step S134 has been executed, the person is allowed to select one cleaning job from the list of cleaning jobs displayed on the display unit 14 through the data input IF 26 by using the operation selecting unit 29 so that the selected current cleaning job is set in the progress information of the cleaning operation data base 17 (step S123).

Next, the cleaning operation correcting unit 20 gives instructions to the control parameter managing unit 21 so that the operation is carried out in the force hybrid impedance control mode, and the robot arm 5 is directed onto a cleaning surface, such as a floor surface 10, by the human hand 16, and instructions for starting the cleaning job is then given through the data input IF 26 (for example, a start button of a cleaning switch 26c) (step S124).

Next, in the case when the person applies a force thereto in a direction toward which a correction is desirably made, the type of a correcting operation is estimated and determined by the correcting operation type determination unit 23 (step S125).

Next, in the case when, in step S125, the correcting operation type determination unit 23 has determined that the type of correction relates to force or suction force to be applied to the cleaning surface, instructions are given from the cleaning operation correcting unit 20 to the control parameter managing unit 21 so that the operation is carried out in the high rigidity position control mode relative to the direction perpendicular to the cleaning surface (steps S126, S127).

Next, with the robot arm 5 being grabbed by the human hand 16, by applying a force to the robot arm 5 by the human hand 16 in a direction toward which a correction is desirably made, the cleaning operation correcting unit 20 is allowed to correct the operation information (step S128).

In the case when, at step S125, it is determined that the type of correction relates to the type other than the force or suction force to be applied to the cleaning surface, the control mode is not altered, and is kept as the impedance control mode, and by applying a force to the robot arm 5 by the human hand 16 in a direction toward which a correction is desirably made, the cleaning operation correcting unit 20 is allowed to correct the operation information (steps S126, S128).

Next, the cleaning operation information corrected in step S128 is stored in the cleaning operation data base 17 by the cleaning operation storage unit 15 so that setting processes of a series of cleaning jobs and cleaning operations are completed (step S129).

On the other hand, in the case when, at step S125, the correcting operation type determination unit 23 has determined that the type of correction corresponds to "no correction", the setting processes of a series of cleaning jobs and cleaning operations are completed (steps S126, S131).

After completion of the setting processes of the cleaning jobs and cleaning operations, the cleaning operation is carried out by the cleaning robot 1 based upon the set cleaning jobs and cleaning operations.

By using the above-mentioned operation steps S121 to S131, step S132, step S133 and steps S51 to S62, during an operation under the force hybrid impedance control, by correcting the cleaning operation by using the hybrid impedance control mode or the high rigidity position control mode, it is possible to achieve the cleaning job by the robot arm 5.

Moreover, by the use of the correcting operation type determination unit 23, it becomes possible to automatically make a switch among a plurality of cleaning operations and carry out a correction simply by applying a force to the robot arm 5 by the human hand 16, without using buttons or the like.

Furthermore, with respect to persons who have got used to the operation of the robot arm 5, or become skillful in the operation, the correcting operation type determination unit 27 allows those persons to carry out two kinds of corrections simultaneously at one correcting operation; in contrast, with respect to persons who are not used to the operation, it allows those persons to carry out only one kind of correction at one time.

Since the control parameter managing unit 21 and the control unit 22 are prepared, it becomes possible to appropriately set a mechanical impedance value of the robot arm 5 depending on the type of a correcting operation; therefore, the robot arm 5 can be controlled, with the mechanical impedance value being altered depending on the correcting direction of the robot arm 5, and the suction force or force during the correction can be weakened or stopped so that it is possible to prevent damages to the floor surface 10, or to prevent matters other than dusts from being erroneously sucked, during the correcting process of the cleaning operation.

Additionally, in the aforementioned embodiment, after the correcting operation type determination unit 23 has estimated the type of a correction based upon the force applied to the robot arm 5 by the human hand 16 and information in the cleaning operation data base 17, respectively acquired by the information acquiring unit 100, the cleaning operation correcting unit 20 immediately corrects the cleaning operation; however, in order to prevent the human hand 16 from erroneously applying a force to the robot arm 5 to cause a selection of the type of correction that is not intended by the person, after a lapse of a certain fixed period of time since the estimation by the correcting operation type determination unit 23, the correction may be started. In this case, up to the start of the correction, the person is allowed to carry out operations as many times as desired until a desired type of correction has been selected.

Moreover, in the above-mentioned embodiment, each of the operation selection unit 29, the operation storage unit 15, the cleaning operation correcting unit 20, the correcting operation type determination unit 23, the correction type determining method setting unit 27, the control parameter managing unit 21 and the control unit 22, or some of those desired units may be prepared as software components. Therefore, for example, a computer program having steps forming the controlling operations of the embodiment of the present specification may be readably stored in a recording medium such as a storing device (hard disk or the like), and the computer program is read and stored in a temporary storage device (semiconductor memory or the like) so that by executing this by using a CPU, the above-mentioned respective steps can be executed.

Additionally, among the aforementioned various embodiments or modified examples, desired embodiments or modified examples maybe combined on demand so that the respective effects can be obtained.

### INDUSTRIAL APPLICABILITY

The present invention is effectively used for a control device and a control method for a cleaning device that control operations of a robot arm of the cleaning device upon executing a job, with a person and a robot such as a house service robot being in cooperation with each other, as well as for a cleaner, a controlling program for a cleaner and an integrated electronic circuit. Moreover, not limited to the house service robot, the present invention may be applied to an industrial robot or a control device and a control method for a cleaning device having a movable mechanism in a production facility or the like, as well as for a cleaner, a controlling program for a cleaner and an integrated electronic circuit.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A control device, which is used for a cleaner that is provided with a movable body, a robot arm with a base end thereof being coupled to the movable body, a cleaning unit that is attached to a hand at a tip of the robot arm to be made in contact with a cleaning surface, and a driving device that drives the movable body, the robot arm, and the cleaning unit, and drives and controls the driving device so as to carry out a cleaning job in a home, comprising:
a force detection unit configured to detect a force of a person that is exerted on the robot arm;
an information acquiring unit that respectively acquires pieces of information relating to cleaning operations including a suction force of the cleaning unit and a cleaning position of the cleaning unit in the cleaning job, as well as to information relating to the force of the person that is detected by the force detection unit and exerted on the robot arm;
a correcting operation type determination unit configured to determine a type of a correcting operation for correcting the cleaning operation based upon the information relating to the cleaning operation and the information relating to the force of the person respectively acquired by the information acquiring unit; and
a cleaning operation correcting unit configured to drive-control the driving device to correct the cleaning operation in accordance with the force of the person that is detected by the force detection unit and acquired by the information acquiring unit and the type of the correcting operation determined by the correcting operation type determination unit, during the cleaning job of the robot arm.

2. The control device for a cleaner according to claim 1, wherein the correcting operation type determination unit determines a plurality of types of correcting operations used for correcting the cleaning operation, and
the cleaning operation correcting unit drive-controls the driving device to correct the cleaning operation based upon the plurality of types of correcting operations, in accordance with the force of the person detected by the force detection unit and acquired by the information acquiring unit and the plurality of types of correcting operations determined by the correcting operation type determination unit, during the cleaning job of the robot arm.

3. The control device for a cleaner according to claim 1, wherein the information relating to cleaning operations comprises at least one piece of information among information of the cleaning position of the cleaning unit, information of a force to be applied to the cleaning surface from the cleaning unit, information relating to a direction of the cleaning operation of the cleaning unit, information relating to a strength of a suction force of the cleaning unit, speed information of the cleaning unit, and information relating to a cleaning unnecessary area that is information relating to an area where no cleaning is required, in accordance with the cleaning job carried out by the robot arm.

4. The control device for a cleaner according to claim 1, wherein the information relating to cleaning operations comprises at least one piece of information of a force to be applied to the cleaning surface from the cleaning unit and information relating to a strength of a suction force of the cleaning unit in accordance with the cleaning job carried out by the robot arm, and
based upon the information relating to cleaning operation, the cleaning operation correcting unit corrects a size or a direction of the force that has been set among the pieces of information relating to the cleaning operation prior to the correcting operation, in a middle of the cleaning operation by the robot arm, with a force control mode for carrying out the cleaning operation by applying a predetermined force to the cleaning surface from the robot arm being individually set to respective axes in x, y, and z-axis directions toward which the robot arm is allowed to move, in accordance with the force of the person detected by the force detection unit and acquired by the information acquiring unit, under position control in which a position of the robot arm is controlled in such a manner as to make a rigidity of the robot arm higher than a rigidity of the robot arm during the cleaning operation prior to the correcting operation.

5. The control device for a cleaner according to claim 1, wherein the information relating to cleaning operations comprises information relating to the cleaning position of the cleaning unit, information relating to the cleaning direction of the cleaning unit, speed information of the cleaning unit, and information relating to the cleaning unnecessary area that is information relating to an area where no cleaning is required, in accordance with the cleaning job carried out by the robot arm, and
based upon the information relating to cleaning operations, the cleaning operation correcting unit drive-controls the driving device so as to correct the cleaning operation of information relating to the cleaning operation under an impedance control, in a middle of the cleaning operation in a position control mode for controlling a position of the robot arm, with an impedance control mode for allowing the robot arm to act in accordance with a force to be applied to the robot arm from the person, while the robot arm is stopped from being driven, being individually set to respective axes in the x, y, and z-axis directions toward which the robot arm is allowed to move, in accordance with the force of the person detected by the force detection unit and acquired by the information acquiring unit.

6. The control device for a cleaner according to any one of claims 1 to 5, further comprising:
a control parameter managing unit configured to set a mechanical impedance set value of the robot arm based upon the type of a correcting operation determined by the correcting operation type determination unit; and
an impedance control unit configured to control a mechanical impedance value of the robot arm to be set to the mechanical impedance set value set by the control parameter managing unit.

7. The control device for a cleaner according to claim 6, wherein based upon the type of a correcting operation, the impedance control unit individually determines mechanical impedance set values in six axes directions including translation directions and rotation directions of the hand of the robot arm, and
upon correcting the cleaning direction of the cleaning unit at the hand as the type of a correcting operation determined by the correcting operation type determination unit, the control parameter managing unit sets the mechanical impedance set value in a manner so as to make a rigidity in the cleaning direction higher than a rigidity in a direction different from the cleaning direction.

8. The control device for a cleaner according to claim 1, wherein the correcting operation type determination unit detects an amount of shift in a direction parallel to the cleaning surface of a position of the hand of the robot arm,
in a case when a force component in a direction perpendicular to the cleaning surface is equal to or less than a first threshold value, a force component in a direction parallel to the cleaning surface is set to be equal to or larger than a second threshold value, and the amount of shift in a direction parallel to the cleaning surface of the position of the hand of the robot arm detected by the correcting operation type determination unit is equal to or larger than a third threshold value, the correcting operation type determination unit determines that the type of a correcting operation corresponds to a shift of the position of the cleaning surface, and
in accordance with the force of the person detected by the force detection unit and acquired by the information acquiring unit and the type of a correcting operation determined by the correcting operation type determination unit, the cleaning operation correcting unit drive-controls the driving device so as to correct the position of the hand of the robot arm in a direction parallel to the cleaning surface.

9. The control device for a cleaner according to claim 1, wherein the correcting operation type determination unit detects an amount of shift in a direction perpendicular to the cleaning surface of a position of the hand of the robot arm,
in a case when a force component in the direction perpendicular to the cleaning surface is equal to or larger than a first threshold value, and the amount of shift in the direction perpendicular to the cleaning surface of the position of the hand of the robot arm detected by the correcting operation type determination unit is larger than a fourth threshold value, the correcting operation type determination unit determines that the type of a correcting operation corresponds to a type of a shift of a position in a direction perpendicular to the cleaning surface, and
in accordance with the force of the person detected by the force detection unit and acquired by the information acquiring unit and the type of a correcting operation determined by the correcting operation type determination unit, the cleaning operation correcting unit drive-controls the driving device so as to correct the position of the hand of the robot arm in the direction perpendicular to the cleaning surface.

10. The control device for a cleaner according to claim 1, wherein the correcting operation type determination unit detects an amount of shift in a direction perpendicular to the cleaning surface of a position of the hand of the robot arm,
in a case when a force component in the direction perpendicular to the cleaning surface is equal to or larger than a first threshold value, the amount of shift in the direction perpendicular to the cleaning surface of the position of the hand of the robot arm detected by the correcting operation type determination unit is equal to or less than the fourth threshold value, and the cleaning job corresponds to a wiping job, the correcting operation type determination unit determines that the type of a correcting operation corresponds to a type of a correction of a degree of an applied force, and
in accordance with the force of the person detected by the force detection unit and acquired by the information acquiring unit and the type of a correcting operation determined by the correcting operation type determination unit, the cleaning operation correcting unit drive-controls the driving device so as to correct the applied force to the robot arm to the direction perpendicular to the cleaning surface.

11. The control device for a cleaner according to claim 1, wherein the correcting operation type determination unit detects an amount of shift in a direction perpendicular to the cleaning surface of a position of the hand of the robot arm,
in a case when a force component in the direction perpendicular to the cleaning surface is equal to or larger than a first threshold value, the amount of shift in the direction perpendicular to the cleaning surface of the position of the hand of the robot arm detected by the correcting operation type determination unit is equal to or less than the fourth threshold value, and the cleaning job corresponds to a suction cleaning job, the correcting operation type determination unit determines that the type of a correcting operation corresponds to a type of a correction of a suction force, and
in accordance with the force of the person detected by the force detection unit and acquired by the information acquiring unit and the type of the correcting operation determined by the correcting operation type determination unit, the cleaning operation correcting unit drive-controls the driving device so as to correct the suction force applied in the direction perpendicular to the cleaning surface.

12. The control device for a cleaner according to claim 1, wherein the correcting operation type determination unit detects an amount of shift in a direction parallel to the cleaning surface of a position of the hand of the robot arm,
in a case when a force component in a direction perpendicular to the cleaning surface is less than a first threshold value, a force component in the direction parallel to the cleaning surface is equal to or larger than a second threshold value, and the amount of shift in the direction parallel to the cleaning surface of the position of the hand of the robot arm detected by the correcting operation type determination unit is less than a third threshold value, the correcting operation type determination unit determines that the type of a correcting operation corresponds to a type of a correction of a speed, and
in accordance with the force of the person detected by the force detection unit and acquired by the information acquiring unit and the type of a correcting operation determined by the correcting operation type determination unit, the cleaning operation correcting unit drive-controls the driving device so as to correct the speed of the position of the hand of the robot arm to the direction parallel to the cleaning surface.

13. The control device for a cleaner according to claim 1, wherein based upon the force of the person applied to the robot arm, detected by the force detection unit and acquired by the information acquiring unit, the correcting operation type determination unit measures an amount of change in the force applied to the robot arm, and based upon result of measurements, compares amounts of change in positional component and in orientation component with each other, and determines that the type of a correcting operation corresponds to a type of a correction of orientation, when the amount of change in the orientation component is greater than the amount of change in the positional component, and
in accordance with the force of the person detected by the force detection unit and acquired by the information acquiring unit and the type of a correcting operation determined by the correcting operation type determination unit, the cleaning operation correcting unit drive-controls the driving device so as to correct an orientation of the hand of the robot arm.

14. The control device for a cleaner according to claim 1, wherein the correcting operation type determination unit detects an amount of shift in a direction parallel to the cleaning surface of a position of the hand of the robot arm,
in a case when the force applied to the robot arm by the human hand is parallel to the cleaning surface and an amount of shift in a direction parallel to the cleaning surface in a certain fixed period of time, detected by the correcting operation type determination unit, is equal to or larger than a threshold value, the correcting operation type determination unit determines that the type of a correcting operation corresponds to a type of a setting operation of a cleaning unnecessary area, and
in accordance with the force of the person detected by the force detection unit and acquired by the information acquiring unit and the type of a correcting operation determined by the correcting operation type determination unit, the cleaning operation correcting unit sets the cleaning unnecessary area by shifting the position of the hand of the robot arm.

15. The control device for a cleaner according to any one of claims 1 to 5 and 8 to 14, further comprising: a display unit configured to display information relating to the type of a correcting operation, based upon the type of the correcting operation determined by the correcting operation type determination unit.

16. A control method, which is used for a cleaner that is provided with a movable body, a robot arm with a base end thereof being coupled to the movable body, a cleaning unit that is attached to a hand at a tip of the robot arm to be made in contact with a cleaning surface, and a driving device that drives the movable body, the robot arm, and the cleaning unit, and drives and controls the driving device so as to carry out a cleaning job in a home, comprising:
detecting a force of a person that is exerted on the robot arm by using a force detection unit;
by using pieces of information relating to cleaning operations including a suction force of the cleaning unit and a cleaning position of the cleaning unit in the cleaning job, as well as to information relating to the force of the person applied to the robot arm that is detected by the force detection unit and acquired by an information acquiring unit, allowing a correcting operation type determination unit to determine a type of a correcting operation for correcting the cleaning operation; and
during the cleaning job of the robot arm, in accordance with the force of the person applied to the robot arm that is detected by the force detection unit and acquired by the information acquiring unit and the type of the correcting operation determined by the correcting operation type determination unit, drive-controlling the driving device so as to correct the cleaning operation by using a cleaning operation correcting unit.

17. A cleaner comprising: the robot arm; and
the control device for the cleaner according to any one of claims 1 to 5 and 8 to 15 that drive-controls the robot arm by using the driving device.

18. A control program, which is used for a cleaner that is provided with a movable body, a robot arm with a base end thereof being coupled to the movable body, a cleaning unit that is attached to a hand at a tip of the robot arm to be made in contact with a cleaning surface, and a driving device that drives the movable body, the robot arm, and the cleaning unit, and drives and controls the driving device so as to carry out a cleaning job in a home, allowing a computer to carry out steps of:
by using pieces of information relating to cleaning operations including a suction force of the cleaning unit and a cleaning position of the cleaning unit in the cleaning job, as well as to information relating to the force of the person applied to the robot arm that is detected by a force detection unit and acquired by an information acquiring unit, allowing a correcting operation type determination unit to determine a type of a correcting operation for correcting the cleaning operation; and
during the cleaning job of the robot arm, in accordance with the force of the person applied to the robot arm that is detected by the force detection unit and acquired by the information acquiring unit and the type of the correcting operation determined by the correcting operation type determination unit, drive-controlling the driving device so as to correct the cleaning operation by using a cleaning operation correcting unit.

19. A control integrated electronic circuit, which is used for a cleaner that is provided with a movable body, a robot arm with a base end thereof being coupled to the movable body, a cleaning unit that is attached to a hand at a tip of the robot arm to be and made in contact with a cleaning surface, and a driving device that drives the movable body, the robot arm, and the cleaning unit, and drives and controls the driving device so as to carry out a cleaning job in a home, comprising:
a correcting operation type determination unit configured to determine a type of a correcting operation for correcting a cleaning operation, by using pieces of information relating to cleaning operations including a suction force of the cleaning unit and a cleaning position of the cleaning unit in the cleaning job, as well as to information relating to the force of the person applied to the robot arm that is detected by a force detection unit and acquired by an information acquiring unit; and
a cleaning operation correcting unit configured to drive-control the driving device so as to correct the cleaning operation, during the cleaning job of the robot arm, in accordance with the force of the person applied to the robot arm that is detected by the force detection unit and acquired by the information acquiring unit and the type of the correcting operation determined by the correcting operation type determination unit.
